(19) Europäisches Patentamt / European Patent Office / Office européen des brevets

(11) **EP 3 002 903 B1**

(12) **EUROPEAN PATENT SPECIFICATION**

(45) Date of publication and mention
of the grant of the patent:
**03.05.2017 Bulletin 2017/18**

(51) Int Cl.:
***H04L 5/00*** *(2006.01)*

(21) Application number: **15195687.7**

(22) Date of filing: **07.06.2012**

(54) **METHOD AND APPARATUS FOR TRANSCEIVING BROADCAST SIGNALS**

VERFAHREN UND VORRICHTUNG ZUM SENDEN UND EMPFANGEN VON RUNDFUNKSIGNALEN

PROCÉDÉ ET APPAREIL D'ÉMISSION-RÉCEPTION DE SIGNAUX DE DIFFUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2011 US 201161493982 P**
**27.06.2011 US 201161501737 P**
**29.06.2011 US 201161502848 P**
**22.05.2012 US 201261649939 P**

(43) Date of publication of application:
**06.04.2016 Bulletin 2016/14**

(62) Document number(s) of the earlier application(s) in accordance with Art. 76 EPC:
**12171175.8 / 2 538 604**

(73) Proprietor: **LG Electronics Inc.**
**Seoul 07336 (KR)**

(72) Inventors:
• **MOON, Sangchul**
**Seoul 137-724 (KR)**
• **KO, Woosuk**
**Seoul 137-724 (KR)**

(74) Representative: **Cabinet Plasseraud**
**66 rue de la Chaussée d'Antin**
**75440 Paris Cedex 09 (FR)**

(56) References cited:
**WO-A1-2008/130162**

• **DVB ORGANIZATION: "TM-NGH077r1_Sony_TUBS_NGH_CfTresponse.pdf ", DVB, DIGITAL VIDEO BROADCASTING, C/O EBU - 17A ANCIENNE ROUTE - CH-1218 GRAND SACONNEX, GENEVA - SWITZERLAND, 20 March 2010 (2010-03-20), XP017832102,**
• **DVB ORGANIZATION: "TM-NGH076r1_LG_response_to_NGH_CfT.pdf" , DVB, DIGITAL VIDEO BROADCASTING, C/O EBU - 17A ANCIENNE ROUTE - CH-1218 GRAND SACONNEX, GENEVA - SWITZERLAND, 20 March 2010 (2010-03-20), XP017832100,**
• **DVB ORGANIZATION: "TM-NGH870_LG_MIMO_helsinki2_6bpcu_v1.pdf" , DVB, DIGITAL VIDEO BROADCASTING, C/O EBU - 17A ANCIENNE ROUTE - CH-1218 GRAND SACONNEX, GENEVA - SWITZERLAND, 11 April 2011 (2011-04-11), XP017834583,**

## Description

[Technical Field]

The present invention relates to a method for transceiving broadcast signals and an apparatus for transceiving broadcast signals, and more particularly, to a method for transceiving broadcast signals, which can enhance data transmission efficiency and is compatible with conventional methods for transceiving broadcast signals, and a transceiving apparatus thereof.

[Background Art]

As analog broadcasting will soon end, a variety of technologies for transmitting and receiving digital broadcast signals has been developed. Digital broadcast signals can transmit a greater capacity of video/audio data than analog broadcast signals, and can include a variety of optional data in addition to video/audio data.

A digital broadcast system can provide High Definition (HD) images, multi-channel sound, and a variety of optional services. However, data transmission efficiency for a high capacity of data transmission, robustness of transmitting and receiving networks, and flexibility of networks in consideration of mobile receiving equipment are problems that should still be improved. In this respect, DVB Organization prior art document "TM-NGH077r1_Sony_TUBS_NGH_CfTresponse.pdf", DVB, DIGITAL VIDEO BROADCASTING, presents an architecture with parallel physical layer pipes undergoing multiple-output multiple-input and multiple-input single-output processing in the context of DVB next generation handheld device.

[Disclosure]

[Technical Problem]

A technical object of one embodiment of the present invention is to provide a method and apparatus for transceiving broadcast signals, which can enhance data transmission efficiency in a digital broadcast system.

Another technical object of the present invention is to provide a method and apparatus for transceiving broadcast signals, which can receive digital broadcast signals without error even under an indoor environment or using mobile receiving equipment.

A further technical object of the present invention is to provide a method and apparatus for transceiving broadcast signals, which can maintain compatibility with a conventional broadcast system in addition to achieving the above described objects.

[Technical Solution]

To achieve the object, the method for transmitting broadcast signals in claim 1 is disclosed.

In another aspect, the device for transmitting broadcast signals in claim 6 is disclosed.

[Advantageous Effects]

According to the present invention, in a digital broadcast system, it is possible to enhance data transmission efficiency and increase robustness in terms of transmission and reception of broadcast signals, by virtue of provision of a MIMO system.

Further, according to the present invention, it is possible to provide a method and apparatus for transceiving broadcast signals, which can receive digital broadcast signals without error even under an indoor environment or using mobile reception equipment.

Furthermore, according to the present invention, even in the case in which transmission paths or channels are similar to each other in a MIMO broadcast system, it is possible to recover and use a broadcast service, by virtue of provision of SVC technologies.

In addition, according to the present invention, a broadcast system using MIMO of the present invention can achieve the above described advantages while maintaining compatibility with a conventional broadcast system not using MIMO, by virtue of arranging MIMO broadcast signals which are SVC encoded per PLP or per frame.

[Description of Drawings]

FIG. 1 illustrates a broadcast signal transmitter using the MIMO scheme according to an embodiment of the present invention.

FIG. 2 illustrates a BICM encoder according to an embodiment of the present invention.

FIG. 3 illustrates a broadcast signal receiver according to an embodiment of the present invention.

FIG. 4 illustrates a BICM decoder according to an embodiment of the present invention.

FIG. 5 illustrates an additional frame structure based on PLP according to an embodiment of the present invention.

FIG. 6 illustrates a structure of an FEF based additional frame according to an embodiment of the present invention.

FIGs. 7(A) and 7(B) illustrate a P1 symbol generation procedure for identifying additional frames according to an embodiment of the present invention.

FIG. 8 illustrates MIMO transmission and reception systems according to an embodiment of the present invention.

FIG. 9 illustrates a BER/SNR chart showing the performance difference between the SM scheme and the GC scheme using the outer code according to an embodiment of the present invention.

FIG. 10 illustrates BER/SNR charts showing the performance difference between the SM scheme and the GC scheme according to the code rate of the outer code and the modulation scheme according to an embodiment of the present invention.

FIG. 11 illustrates a data transmission and reception method according to MIMO transmission of the SM scheme in a channel environment according to an embodiment of the present invention.

FIG. 12 illustrates input signals and transmission and reception signals when a MIMO encoding method has been performed according to an embodiment of the present invention.

FIG. 13 illustrates a BER/SNR chart showing the performance of the MIMO encoding method according to a first embodiment of the present invention.

FIG. 14 illustrates a capacity/SNR chart showing the performance of the MIMO encoding method according to the first embodiment of the present invention in an uncorrelated channel.

FIG. 15 illustrates a capacity/SNR chart showing the performance of the MIMO encoding method according to the first embodiment of the present invention in a fully correlated channel.

FIG. 16 illustrates a constellation when a GC subset is used as a MIMO encoding matrix and a constellation when the first embodiment is applied.

FIG. 17 illustrates a capacity/SNR chart showing a performance comparison between when a GC subset is used as a MIMO encoding matrix and when the first embodiment is used.

FIG. 18 illustrates a relationship between Euclidean distance and Hamming distance in a constellation when a GC subset is used as a MIMO encoding matrix and in a constellation when the first embodiment is used.

FIG. 19 illustrates input signals and transmission and reception signals when a MIMO encoding method has been performed according to a second embodiment of the present invention.

FIG. 20 illustrates a MIMO encoding method according to a third embodiment of the present invention.

FIG. 21 illustrates input signals and transmission and reception signals when a MIMO encoding method has been performed according to the third embodiment of the present invention.

FIG. 22 illustrates capacity/SNR charts showing a performance comparison of MIMO encoding methods according to the present invention.

FIG. 23 illustrates different capacity/SNR charts showing a performance comparison of MIMO encoding methods according to the present invention.

FIG. 24 illustrates capacity/SNR charts showing a performance comparison of combinations of modulation schemes in the MIMO encoding method according to the third embodiment of the present invention.

FIG. 25 illustrates capacity/SNR charts showing a performance comparison of different channel correlation levels when a QPSK+QPSK MIMO transmission scheme is used in the MIMO encoding method according to the third embodiment of the present invention.

FIG. 26 illustrates capacity/SNR charts showing a performance comparison of different channel correlation levels when a QPSK+16-QAM MIMO transmission scheme is used in the MIMO encoding method according to the third embodiment of the present invention.

FIG. 27 illustrates capacity/SNR charts showing a performance comparison of different channel correlation levels when a 16-QAM+16-QAM MIMO transmission scheme is used in the MIMO encoding method according to the third embodiment of the present invention.

FIG. 28 illustrates input signals and transmission and reception signals when a MIMO encoding method has been performed according to a fourth embodiment of the present invention.

FIG. 29 illustrates input signals and transmission and reception signals when a MIMO encoding method has been performed according to a sixth embodiment of the present invention.

FIGs. 30 and 31 are block diagrams of broadcast signal transmission and reception devices using a hybrid MIMO scheme according to the present invention.

FIG. 32 illustrates graphs showing BER performance of a system that uses a MIMO matrix according to an embodiment of the present invention.

FIG. 33 illustrates graphs showing BER performance of a system that uses a MIMO matrix according to another embodiment of the present invention.

FIG. 34 illustrates graphs showing BER performance of a system that uses a MIMO matrix according to another embodiment of the present invention.

FIG. 35 illustrates graphs showing BER performance of a system that uses a MIMO matrix according to another embodiment of the present invention.

FIG. 36 is a flowchart of a broadcast signal transmission method according to an embodiment of the present invention.

FIG. 37 is a flowchart of a broadcast signal reception method according to an embodiment of the present invention.

[Best Mode]

Hereinafter, although the preferred embodiments of the present invention will be described in detail with reference to the accompanying drawings and contents as described with relation to the accompanying drawings, it is to be understood that the present invention is not limited to the embodiments.

Various technologies have been introduced to increase transmission efficiency and to perform robust communication in a digital broadcast system. One of such technologies is a method of using a plurality of antennas at a transmitting side or a receiving side. This method may be classified into a Single-Input Single-Output (SISO) scheme in which transmission is performed through a single antenna and reception is performed through a single antenna, a Single-Input Multi-Output (SIMO) scheme in which transmission is performed through a single antenna and reception is performed through multiple antennas, a Multi-Input Single-Output (MISO) scheme in which transmission is performed through multiple antennas and reception is performed through a single antenna, and a Multi-Input Multi-Output (MIMO) scheme in which transmission is performed through multiple antennas and reception is performed through multiple antennas. Although the multiple antennas may be exemplified by 2 antennas for ease of explanation in the following description, the description of the present invention may be applied to systems that use 2 or more antennas.

The SISO scheme corresponds to a general broadcast system that uses 1 transmission antenna and 1 reception antenna. The SIMO scheme corresponds to a broadcast system that uses 1 transmission antenna and a plurality of reception antennas.

The MIMO scheme corresponds to a broadcast system that uses a plurality of transmission antennas and 1 reception antenna to provide transmit diversity. An example of the MISO scheme is an Alamouti scheme. In the MISO scheme, it is possible to receive data through 1 antenna without performance loss. Although a reception system can receive the same data through a plurality of reception antennas in order to improve performance, this case will be described as belonging to MISO cases in this specification.

The MIMO scheme corresponds to a broadcast system that uses a plurality of transmission antennas and a plurality of reception antennas to provide transmission/reception diversity and high transmission efficiency. In the MIMO scheme, signals are processed (or handled) differently in time and space dimensions and a plurality of data streams is transmitted through parallel paths that simultaneously operate in the same frequency band to achieve diversity effects and high transmission efficiency.

The performance of a system that employs the MIMO technology depends on characteristics of a transmission channel. The efficiency of such a system is high, especially, when the system has independent channel environments. That is, the performance of the system that employs the MIMO technology may improve when channels of all antennas ranging from antennas of the transmitting side and antennas of the receiving side are independent channels that have no correlation to each other. However, in a channel environment in which the correlations between channels of transmission and reception antennas are very high as in a line-of-sight (LOS) environment, the performance of the system that employs the MIMO technology may be significantly reduced or the system may not be able to operate.

In addition, if the MIMO scheme is applied to a broadcast system that uses the SISO and MISO schemes, it is possible to increase data transmission efficiency. However, in addition to the above problems, there is a need to maintain compatibility to allow a receiver having a single antenna to receive services. Accordingly, the present invention suggests a method for solving such existing problems.

In addition, the present invention can provide a broadcast signal transmitter/receiver and a broadcast transmission and reception method for a conventional terrestrial broadcast system and a system that can transmit and receive additional broadcast signals (or enhanced broadcast signals), for example, mobile broadcast signals, while sharing an RF frequency band with a terrestrial broadcast system such as DVB-T2.

To accomplish this, in the present invention, it is possible to use a video coding method having scalability in which a basic video component which has low image quality although it is robust to a communication environment and an extended video component which is slightly weak to a communication environment although it can provide a high-quality image can be distinguishably transmitted. Although the present invention will be described with reference to SVC as a video coding method having scalability, the present invention may be applied to any other video coding methods.

Embodiment of the present invention will be described in more detail with reference to the drawings.

A broadcast signal transmitter and receiver of the present invention can perform MISO processing and MIMO processing on a plurality of signals that are transmitted and received through a plurality of antennas. The following is a description of a broadcast signal transmitter and receiver that performs signal processing on 2 signals that are transmitted and received through 2 antennas.

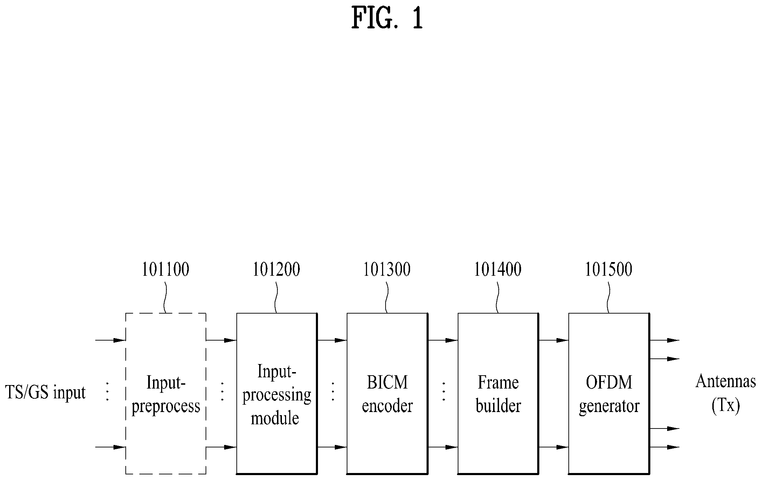

FIG. 1 illustrates a broadcast signal transmitter using the MIMO scheme according to an embodiment of the present invention.

As shown in FIG. 1, the broadcast signal transmitter according to the present invention may include an input processor 101100, an input processing module 101200, a Bit Interleaved Coded Modulation (BICM) encoder 101300, a frame builder 101400, and an Orthogonal Frequency-Division Multiplexing (OFDM) generator (or transmitter) 101500. The broadcast signal transmitter according to the present invention may receive a plurality of MPEG-TS streams or a General Stream Encapsulation (GSE) stream (or GS stream).

The input processor 101100 may generate a plurality of PLPs (physical layer pipes) on a service basis in order to give robustness to a plurality of input streams, i.e., a plurality of MPEG-TS streams or GSE streams.

PLPs are data units that are identified in the physical layer. Specifically, a PLP is data having the same physical layer attribute which is processed in the transmission path and may be mapped on a cell by cell basis in a frame. In addition, a PLP may be considered a physical layer Time Division Multiplexing (TDM) channel that carries one or a plurality of services. Specifically, a path through which such a service is transmitted is transmitted or a stream identifiable in the physical layer which is transmitted through the path is referred to as a PLP.

Thereafter, the input processing module 101200 may generate a Base Band (BB) frame including a plurality of generated PLPs. The BICM module 101300 may add redundancy to the BB frame to correct an error in a transmission channel and may interleave PLP data included in the BB frame.

The BICM encoder 101300 may perform encoding for error correction. The BICM encoder 101300 of the present invention may independently apply the MISO scheme or the MIMO scheme to each PLP data item and may also independently apply the MISO scheme or the MIMO scheme to L1-signaling information. The L1-signaling information according to the present invention may include L1-post signaling information and L1-post signaling information. A procedure in which the BICM encoder 101300 independently performs MISO and MIMO processing on PLP data will be described later.

Thereafter, each data item is input to the frame builder 101400. In this case, the frame builder 101400 may receive output data of the BICM encoder 101300 through a first path and a second path. Data input through the first path may be transmitted through a first antenna Tx_1 and data input through the second path may be transmitted through a first antenna Tx_2.

Accordingly, the frame builder 101400 of the present invention may include a first frame building block for processing data input through the first path and a second frame building block for processing data input through the second path. The first frame building block may include a first delay compensator, a first pair-wise cell mapper, and a first pair-wise frequency interleaver for processing data input through the first path and the second frame building block may include a second delay compensator, a second pair-wise cell mapper, and a second pair-wise frequency interleaver for processing data input through the second path.

The first pair-wise cell mapper and the first pair-wise frequency interleaver and the second pair-wise cell mapper and the second pair-wise frequency interleaver may operate in the same manner for the first path and the second path and may also operate independently.

The following is a description of a data processing method for blocks included in the first frame building block and the second frame building block.

The first delay compensator and the second delay compensator may compensate L1-pre signaling data or L1-post signaling data input through each path for both delay corresponding to 1 frame and delay caused by BICM encoding. The L1-signaling information may include not only information regarding a current frame but also information regarding a subsequent frame. The reason for this is that, in the input processing procedure, the L1-signaling information is delayed compared to currently input PLP data by one frame. This procedure allows one frame to transmit all L1-signaling information including information regarding the current frame and the subsequent frame.

The first pair-wise cell mapper and the second pair-wise cell mapper may map L1-signaling data and PLP data in symbols input through the paths to a subcarrier in an OFDM symbol in a frame on a cell by cell basis.

In this case, the PLP data input through each path may include common PLP data and MISO/MIMO-encoded PLP data and the sub-slice processor module may perform sub-slicing on PLP data cells to map the same to a frame in order to achieve diversity effects.

In addition, the first pair-wise cell mapper and the second pair-wise cell mapper may pair 2 consecutive input cells and map the same to a frame.

In order to increase MISO signal reconstruction performance of the receiver, there is a need to secure coherence between MISO transmission channels when MISO encoding is performed. Accordingly, in order to secure coherence between channels, the first pair-wise cell mapper and the second pair-wise cell mapper may pair cells generated from the same PLP data and map the same to an OFDM modulation subcarrier to maximize coherence between channels. Specifically, in the embodiment of the present invention, since the MISO encoder is located at the BICM encoder prior to the frame builder, the frame builder configures a frame structure on a pair basis taking into consideration such MISO encoding.

The first pair-wise frequency interleaver and the second pair-wise frequency interleaver may perform frequency interleaving on data input through each path on a cell basis and may then output frequency-interleaved data to the OFDM generator through each path.

In this case, the first pair-wise frequency interleaver and the second pair-wise interleaver pair 2 consecutive input cells and process the same as one interleaving unit to perform frequency interleaving. The purpose of this is to maximize coherence between channels.

However, as described later, when only a MISO PLP or SISO-processed data is included in one frame, the first and second pair-wise frequency interleavers may perform frequency interleaving on an OFDM cell basis rather than on a pair-wise basis.

The OFDM generator 101500 may OFDM-modulate input data mapped within a frame on a symbol basis and output the modulated data to an antenna. In an embodiment of the present invention, broadcast signals are transmitted through 2 transmission antennas in a MISO or MIMO manner. Thus, the OFDM generator 101500 may receive and modulate broadcast signals through the first path and the second path and output the modulated broadcast signals to two antennas Tx1 and Tx2.

In the present invention, a block that modulates a broadcast signal to be transmitted through the first antenna Tx1 may be referred to as a first OFDM generating block and a block that modulates a broadcast signal to be transmitted through the second antenna Tx2 may be referred to as a second OFDM generating block.

When the channel correlation between channels transmitted through the first antenna and the second antenna is high, the first and second antennas may transmit a signal by applying polarity to the signal according to whether the correlation is negative or positive. In the present invention, a MIMO scheme using this method may be referred to as a polarity multiplexing MIMO scheme, the first antenna that adds polarity to a received signal to transmit the signal may be referred to as a vertical antenna, and the second antenna that adds polarity to a received signal to transmit the signal may be referred to as a horizontal antenna. Accordingly, the first OFDM generating block of the present invention may OFDM-modulate a broadcast signal input through the first path and transmit the modulated broadcast signal through the first antenna Tx1 and the second OFDM generating block of the present invention may OFDM-modulate a broadcast signal input through the second path and transmit the modulated broadcast signal through the second antenna Tx2.

Each of the first OFDM generating block and the second OFDM generating block includes the following modules.

The first OFDM generating block may include a pilot insertion module, an IFFT module, a PAPR module, a GI insertion module, a P1 symbol insertion module, an AP1 symbol insertion module, and a DAC.

The second OFDM generating block may include a pilot insertion module, an IFFT module, a PAPR module, a GI insertion module, a P1 symbol insertion module, an AP1 symbol insertion module, and a DAC. The modules of the second OFDM generating block perform the same functions as those of the first OFDM generating block.

The first and second OFDM generating blocks have been described with reference to the case in which a MISO PLP and a MIMO PLP are transmitted together through one frame. In the case in which only a MISO PLP and SISO-processed data are transmitted through one frame, the first and second generating blocks may include a MISO encoder. In this case, the MISO encoder may be located prior to the pilot insertion module. The location of the MISO encoder may be changed according to designer intention.

Thus, operations of the modules included in the first OFDM generating block are described below in detail. The pilot insertion module inserts a pilot having a predetermined pilot pattern into a frame at a corresponding position and outputs the frame to the IFFT module. In this case, the pilot insertion module may insert a pilot after determining the amplitude of the pilot according to a power imbalance factor that will be described later. In addition, the pilot insertion module may reserve a part of an OFDM subcarrier without using the part thereof in order to reduce the peak to average power ratio (PAPR) in the time domain.

The IFFT module may perform an IFFT (inverse Fast Fourier transorm) operation on the pilot-inserted signal of each path and output the resulting signal to the PAPR module.

The PAPR module reduces PAPR of time-domain signals and outputs the resulting signals to the GI insertion module. Specifically, the PAPR module may calculate a PAPR of an input signal. Then, if the calculated PAPR is higher than a target threshold, the PAPR module may adjust the phase and amplitude of a reference kernel signal corresponding to a reserved tone and output resulting signals by adding the input signal to the resulting signals. Here, the PAPR module may repeatedly adjust the phase and amplitude to reduce the PAPR of the resulting signals until the PAPR of the output resulting signals becomes less than the target threshold.

Here, the PAPR module may feed required information back to the pilot insertion module according to a PAPR reduction algorithm.

The GI insertion module copies a last portion of an effective OFDM symbol and inserts a guard interval into each OFDM symbol in a cyclic prefix (CP) format and outputs the resulting symbol to the P1 symbol insertion module. The GI information may be transmitted through P1 signaling information or L1-pre signaling information.

In an embodiment of the present invention, a P1 symbol and an AP1 symbol may be inserted into every frame at the P1 insertion module in the OFDM generator 101500. That is, the P1 insertion module may insert 2 or more preamble symbols into every frame. When 2 or more preamble symbols are used as in the present invention, there are advantages in that robustness to burst fading that may occur in a mobile fading environment is further increased and signal detection performance is also improved.

The P1 symbol insertion module may insert a P1 symbol into each frame at a start portion thereof and output the resulting frame to the AP1 symbol insertion module.

The AP1 symbol insertion module may insert an AP1 symbol (additional preamble symbol) into the P1 symbol at a rear portion thereof and output the resulting frame to the DAC.

The DAC may convert each signal frame, into which the AP1 symbol is inserted, into an analog signal and transmit the analog signal through the first transmission antenna Tx1.

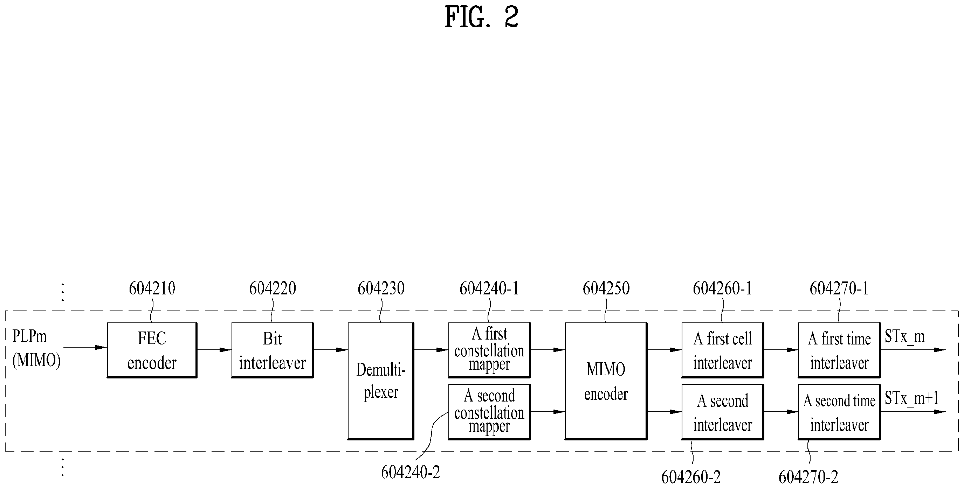

FIG. 2 illustrates a BICM encoder according to an embodiment of the present invention.

The BICM encoder 101300 of the present invention may include a first BICM encoding block for MISO PLP processing, a second BICM encoding block for MIMO PLP processing, and a third BICM encoding block for performing MISO or MIMO encoding on L1-pre signaling information and L1-post signaling information. The number of the BICM blocks may be changed according to the number of paths through which PLP data is input to the BICM encoder.

The first BICM encoding block may include a Forward Error Correction (FEC) encoder, a bit interleaver, a demultiplexer, a constellation mapper, a cell interleaver, a time interleaver, and a MISO encoder. The MISO encoder may be located next to the time interleaver and the location of the MISO encoder may be changed according to designer intention. As described above, a frame according to an embodiment of the present invention may include a MISO PLP or a MIMO PLP. In the case in which a MISO PLP and a MIMO PLP are transmitted together through one frame, the MISO encoder may be located in the BICM block as described above. In the case in which only a MISO PLP or SISO-processed data is present in a frame, the MISO encoder may be located prior to the pilot insertion module of the OFDM generator 101500 described above. The location of the MISO encoder may be changed according to designer intention. The MISO encoder may perform MISO encoding on the time-interleaved PLP data using a MISO encoding matrix and output MISO-encoded PLP data through 2 paths. In this manner, it is possible to achieve diversity. Embodiments of the MISO encoding method according to the present invention include Orthogonal Space-Time Block Code (OSTBC)/Orthogonal Space Frequency Block Code (OSFBC)/Alamouti code methods.

The second BICM encoding block may include a Forward Error Correction (FEC) encoder, a bit interleaver, a demultiplexer, first and second constellation mappers, a MIMO encoder, first and second cell interleavers, and first and second time interleavers. The numbers of the constellation mappers, the cell interleavers, and the time interleavers may be changed according to designer intention.

The third BICM encoding block may output encoded signals of the L1-pre signaling information and the L1-post signaling information through two paths, respectively.

The second BICM encoding block for MIMO processing is described below with reference to FIG. 2. The encoding block shown in FIG. 2 is included in the BICM encoder 101300 of FIG. 1 and performs MIMO encoding after constellation mapping in an embodiment of the present invention.

The broadcast signal receiver may include a BICM decoder corresponding to the BICM encoder 101300 of the present invention. The BICM decoder may include a MIMO decoder, a time deinterleaver, and a cell deinterleaver and the MIMO decoder, the time deinterleaver, and the cell deinterleaver may perform processing on received data on a per symbol basis. If the MIMO encoder included in the BICM encoder is located next to the time interleaver, the receiver needs to first perform MIMO decoding on each data item and therefore each data item may be output on a bit basis and time deinterleaving and cell deinterleaving processes may then be performed. In this case, although data is input in units of bits to the time interleaver, information regarding the units of symbols of the input data is additionally needed to perform time interleaving. Accordingly, memory load of the broadcast signal receiver may be increased since the broadcast signal receiver should store information regarding symbol mapping of input bits required for the deinterleaving procedure. Accordingly, in an embodiment of the present invention, the BICM encoding block performs MIMO encoding after constellation mapping. However, this may be changed according to designer intention.

An FEC encoder 604210 may perform LDPC encoding and BCH encoding for adding redundancy so as to allow the receiver to correct an error in a transmission channel for input-processed PLP data. A bit interleaver 604220 may perform bit interleaving on the FEC-encoded PLP data to allow the data to have robustness to a burst error that may occur during transmission. A demultiplexer 604230 may demultiplex the bit-interleaved PLP data. In addition, the demultiplexer 604230 may demultiplex PLP data and output the demultiplexed data through 2 paths required for MIMO transmission. In this case, the transmission characteristics of the data transmitted through each path may differ. Accordingly, the demultiplexer 604230 may randomly allocate bit-interleaved PLP data to each input path.

The first and second constellation mappers 605240-1 and 605240-2 may map the demultiplexed PLP data bits to a constellation on a per symbol basis. In this case, the constellation mapper may rotate the constellation at a predetermined angle according to modulation type. Rotated constellations may be represented by an In (I-phase) component and a Quadrature-phase (Q-phase) component. The constellation mapper may delay only the Q-phase component by an arbitrary value. The constellation mapper may remap the demultiplexed PLP data to a new constellation using the In-phase component and the delayed Q-phase component.

A MIMO encoder 604250 may perform MIMO encoding on the input PLP data of the 2 paths using a MIMO encoding matrix and output the MIMO-encoded PLP data through the 2 paths. The MIMO encoding matrix of the present invention may include spatial multiplexing, Golden Code (GC), fullrate full diversity code, and linear dispersion code. Details of the encoding matrix required for the MIMO encoding procedure will be described later.

First and second cell interleavers 604260-1 and 604260-2 may perform interleaving on PLP data output through the 2 paths on a cell basis, respectively, and may perform cell interleaving only on PLP data corresponding to one half the size of a cell included in one FEC block from among PLP data input through each path. Accordingly, cell interleaving by the two cell interleavers may have the same effects as interleaving by one cell interleaver. In addition, there is an advantage in that cell interleaving can be performed using memory setting of one cell interleaving without allocating an additional memory to two cell interleavers in order to process data of a plurality of paths.

First and second time interleavers 604270-1 and 604270-2 may perform interleaving on the cell-interleaved PLP data output through the paths on a time basis. Here, the time interleavers may perform interleaving using FEC blocks. In this case, the time interleavers may perform time interleaving on PLP data input through the paths using the same method and may also perform time interleaving on the PLP data using different methods.

The frame builder 101400 may receive data encoded by the BICM encoder 101300 and map the same to a frame. As described above, the first BICM encoding block may output miso-encoded PLP data through two paths and the second BICM encoding block may output MIMO-encoded PLP data through two paths. In addition, the third BICM encoding block may output encoded signals of the L1-pre signaling information and the L1-post signaling information through two paths, respectively.

Thereafter, each data item is input to the frame builder 101400. In this case, the frame builder 101400 may receive output data of the BICM encoder 101300 through a first path and a second path. Data input through the first path may be transmitted through a first antenna Tx_1 and data input through the second path may be transmitted through a second antenna Tx_2.

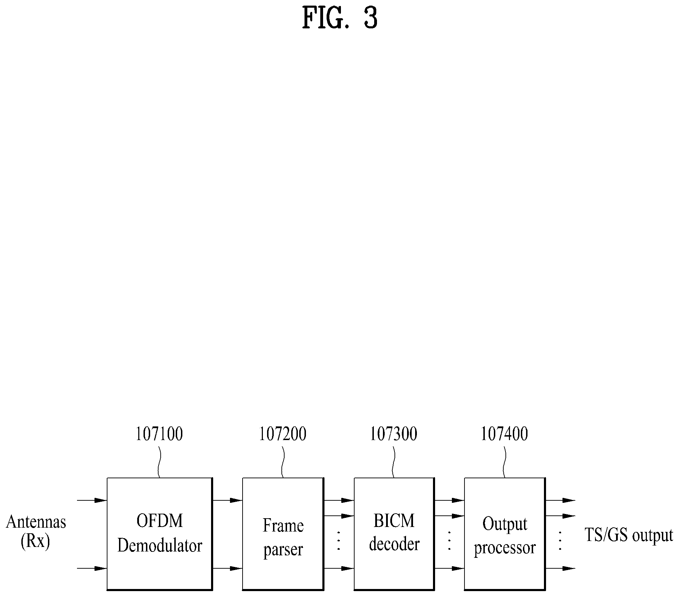

FIG. 3 illustrates a broadcast signal receiver according to an embodiment of the present invention.

As shown in FIG. 3, the broadcast signal receiver may perform a reverse procedure to that of the broadcast signal transmitter described above with reference to FIG. 1. The broadcast signal receiver according to an embodiment of the present invention may include an OFDM demodulator 107100, a frame parser (or frame demapper) 107200, a BICM decoder 107300, and an output processor 107400.

The OFDM demodulator (or OFDM receiver) 107100 may convert signals received through a plurality of reception antennas into frequency-domain signals. The OFDM demodulator (or OFDM receiver) 107100 may perform a reverse procedure to that of the OFDM generator 101500 described above with reference to FIG. 1. In an embodiment of the present invention, two reception antennas Rx1 and Rx2 may be used to receive MIMO or MISO-transmitted signals. In addition, polarity multiplexing MIMO may be used in an embodiment of the present invention. Accordingly, the OFDM demodulator 107100 may OFDM-demodulate a broadcast signal input through the first antenna Rx1 and output the demodulated signal to the frame demapper through the first path and a second OFDM demodulating block may OFDM-demodulate a broadcast signal input through the second antenna Rx2 and output the demodulated signal to a frame demapper 107200.

In this case, the OFDM demodulator 107100 may include a first OFDM demodulating block that receives and processes a signal from the first antenna Rx1 and a second OFDM demodulating block that receives and processes a signal from the second antenna Rx2. Each of the first and second OFDM demodulating blocks may include a tuner, an ADC module, a P1 symbol detection module, an AP1 symbol detection module, a time/frequency sync module, a GI remover, an FFT module, and a channel estimator (or equalizer). As described above, when a MISO PLP and SISO-processed data are received through one frame as described above, the first and second demodulating blocks may include a MISO decoder. The following is a brief description of each of the modules.

The ADC module may convert a received signal into a digital signal and the P1 symbol detection module and the AP1 symbol detection module may detect a P1 symbol and an AP1 symbol, respectively. The time/frequency sync module may perform processes such as time synchronization and carrier frequency synchronization including guard interval detection on each detected signal. The GI remover may remove a guard interval after signal synchronization is achieved and the FET module may perform Fourier transform on an input signal to convert the input signal into a frequency-based signal. The channel estimator may estimate channels transmitted from the transmission antennas Tx1 and Tx2 to the reception antennas Rx1 and Rx2 using pilot signals inserted in the frequency domain. Here, even when power imbalance has been performed on the pilots at the transmitting side, the channel estimator may estimate channels without the need to take into consideration power imbalance of the pilots since the amplitudes of the pilots have already been compensated.

The frame demapper 107200 may process data input through the first path and the second path and output PLPs for a required service. The frame demapper 107200 of the present invention may perform a reverse procedure to that of the frame builder 101400 described above with reference to FIG. 1. Accordingly, the frame demapper 107200 of the present invention may pair and extract 2 consecutive cells and output the same to a BICM decoder 107300. However, when only a MISO PLP and SISO-processed data are received through one frame as described above, the frame demapper may perform frequency deinterleaving on the basis of one OFDM cell.

The BICM decoder 107300 may correct an error caused by a transmission channel and may perform a reverse procedure to that of the BICM encoder 101300 described above with reference to FIG. 1. Accordingly, the BICM decoder 107300 of the present invention may independently apply a MISO scheme to each input data item and may also apply a MIMO scheme.

As a result, the BICM decoder 107300 may output BICM-decoded MISO PLP data, BICM-decoded MIMO PLP data, and BICM-decoded L1-pre and L1-post signaling data to an output processor 107400.

The output processor 107400 may perform processes required to generate an output TS or a GS stream. Here, the broadcast signal receiver may receive a dual polarity signal as an input antenna signal and output one or a plurality of TSs or GS streams.

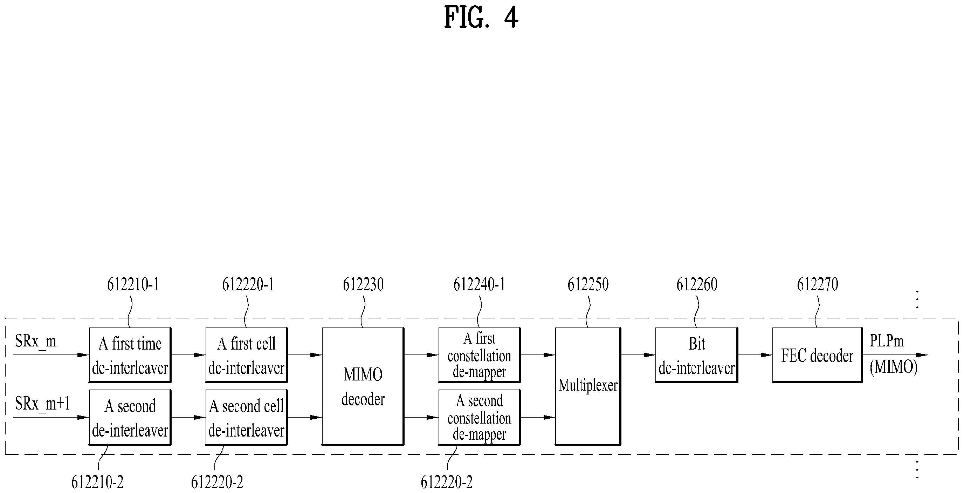

FIG. 4 illustrates a BICM decoder according to an embodiment of the present invention.

Specifically, FIG. 4 illustrates a BICM decoding block included in the BICM decoder and the BICM decoding block may perform MIMO processing on input data. The BICM decoding block of FIG. 4 may perform a reverse procedure to that of the BICM decoding block of FIG. 2.

The BICM decoding block shown in FIG. 4 may include first and second time deinterleavers 612210-1 and 612210-2, first and second cell deinterleavers 612220-1 and 612220-2, a MIMO decoder 612230, first and second constellation demappers 612240-1 and 612240-2, a multiplexer 612250, a bit deinterleaver 612260, and an FEC decoder 612270.

The first and second time deinterleavers 612210-1 and 612210-2 may perform time-domain deinterleaving on input data on a cell basis to reconstruct (or restore) original data in the original order. In this case, the first and second cell deinterleavers 612220-1 and 612220-2 may perform cell deinterleaving only on data corresponding to one half the size of a cell included in one FEC block from among data input through each path. As a result, cell deinterleaving by the first and second deinterleavers 612220-1 and 612220-2 can have the same effects as cell deinterleaving by a deinterleaver using one FEC block.

The MIMO decoder 612230 may perform MIMO decoding on cell-interleaved data input through two paths SRx_m and SRx_m+1. The MIMO decoder 612230 may perform operations, other than the fourth operation (i.e., a signal combination operation), from among the 4 operations of the MISO decoder 612110 described above in the same manner as the MISO decoder 612110. Here, the MIMO decoder 612210 may also perform decoding using the MIMO encoding matrix described above.

Each of the first and second constellation demappers 612240-1 and 612240-2 may calculate an LLP value. Specifically, in the case in which the first and second constellation mappers 604240-1 and 604240-2 described above with reference to FIG. 2 have performed constellation rotation and Q-phase component delay, each of the first and second constellation demappers 612240-1 and 612240-2 may calculate an LLR value after delaying the I-phase component. The multiplexer 612250 may reconstruct the demapped data into a bitstream format. The bit deinterleaver 612260 may perform deinterleaving on the input bitstream and the FEC decoder 612270 may perform FEC decoding on the deinterleaved data to correct an error in the transmission channel and may then output MIMO PLP data.

In addition, although not shown in the drawings, the BICM decoder 107200 may further include a BICM decoding block for MISO processing. As described above, in the case in which a MISO PLP and a MIMO PLP are received through one frame, the BICM decoding block for MISO processing may include a MISO decoder. In this case, the MISO decoder may be located prior to the time interleaver or may be located prior to the constellation demapper. In the case in which only a MISO PLP and SISO-processed data are received through one frame, the MISO decoder may include the OFDM demodulator 107100 described above. This may be changed according to designer intention.

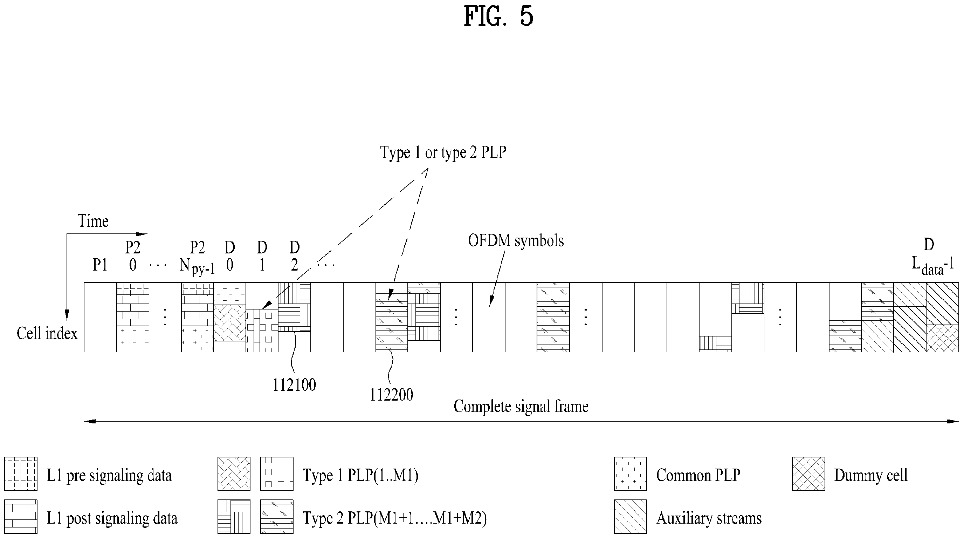

FIG. 5 illustrates an additional frame structure based on PLP according to an embodiment of the present invention.

As shown in FIG. 5, a frame according to an embodiment of the present invention may include a preamble area and a data area. The preamble area may include a P1 symbol and a P2 symbol and the data area may include a plurality of data symbols. The P1 symbol may transmit P1 signaling information and the P2 symbol may transmit L1-signaling information.

In this case, a preamble symbol may be additionally allocated to the preamble. This additional preamble symbol is referred to as an Additional Preamble 1 (AP1). In an embodiment of the present invention, one or more AP1 symbols may be added to a frame in order to improve detection performance of a mobile broadcast signal under very low SNR or time-selective fading conditions. AP1 signaling information transmitted through the AP1 symbol may include an additional transmission parameter.

The preamble area of the frame according to the present invention may include a P1 symbol, one or more AP1 symbols, one or more P2 symbols. The data area includes a plurality of data symbols (or data OFDM symbols). In an embodiment, the P2 symbol may be selective and whether or not the P2 symbol is inserted may be signaled through AP1 signaling information that is transmitted through an AP1 symbol.

In an embodiment of the present invention, a P1 insertion module in the OFDM generator OFDM generator 101500 of the broadcast signal transmitter may insert the P1 symbol and the AP1 symbol into every symbol. That is, the P1 insertion module may insert 2 or more preamble symbols into every frame. In another embodiment, an AP1 insertion module may be added downstream of (or next to) the P1 insertion module and the AP1 insertion module may insert the AP1 symbol. If 2 or more preamble symbols are used as in the present invention, there are advantages in that robustness to burst fading that may occur in a mobile fading environment is further increased and signal detection performance is also improved.

The P1 symbol may transmit P1 signaling information associated with a basic transmission parameter and transmission type and a corresponding preamble identifier and the receiver may detect the frame using the P1 symbol. A plurality of P2 symbols may be provided and may carry L1 signaling information and signaling information such as a command PLP. The L1 signaling information may include L1-pre signaling information and L1-post signaling information and the L1-pre signaling information may include information required to receive and decode the L1-post signaling information. The L1-post signaling information may include parameters required for the receiver to decode PLP data. As shown in FIG. 5, the L1-post signaling information may be located next to L1-pre signaling information.

The L1-post signaling information may include a configurable block, a dynamic block, an extension block, a Cyclic Redundancy Check (CRC) block, and an L1 padding block.

The configurable block may include information items that may be equally applied to one frame and the dynamic block may include specific information items corresponding to a currently transmitted frame.

The extension block may be a block that can be used when the L1-post signaling information is extended and the CRC block may include information items used for error correction of the L1-post signaling information and may have a size of 32 bits. When the L1-post signaling information is separately transmitted through a number of encoding blocks, the padding block may be used to match the size of information included in each encoding block and the size thereof may be variable.

The common PLP may include network information such as a Network Information Table (NIT), PLP information, and service information such as a Service Description Table (SDT) or an Event Information Table (EIT). The preamble of the present invention may include only the P1 symbol, the L1-pre signaling information, and the L1-post signaling information or may include all of the P1 symbol, the L1-pre signaling information, the L1-post signaling information, and the common PLP according to designer intention. A plurality of data symbols located next to the P1 symbol may include a plurality of PLPs. The plurality of PLPs may include audio, video, and data TS streams and PSI/SI information such as a Program Association Table (PAT) and a Program Map Table (PMT). In the present invention, a PLP that transmits PSI/SI information may be referred to as a base PLP or a signaling PLP. The PLPs may include a type-1 PLP that is transmitted through one sub-slice per frame and a type-2 PLP that is transmitted through two sub-slices per frame. The plurality of PLPs may transmit one service and may also transmit service components included in one service. When the PLPs transmit service components, the transmitting side may transmit signaling information which indicates that the PLPs transmit service components.

In addition, additional data (or an enhanced broadcast signal) in addition to basic data may be transmitted through a specific PLP while sharing an RF frequency band with the conventional terrestrial broadcast system according to an embodiment of the present invention. In this case, the transmitting side may define a system or a signal that is currently transmitted through signaling information of the P1 symbol described above. The following description is given with reference to the case in which the additional data is video data. That is, as shown in FIG. 5, PLP M1 112100 and PLP (M1+M2) 112200 which are type 2 PLPs may be transmitted while including additional video data. In addition, in the present invention, a frame that transmits such additional video data may be referred to as an additional frame and a frame that transmits basic data may be referred to as a basic frame (or T2 frame).

In addition, a frame that can transmit not only additional data but also data associated with a new broadcast system different from the conventional terrestrial broadcast system may be referred to as an additional frame. In this case, a frame that transmits a conventional terrestrial broadcast may be referred to as a terrestrial broadcast frame and an additional frame may transmit additional data or basic data associated with the new broadcast system.

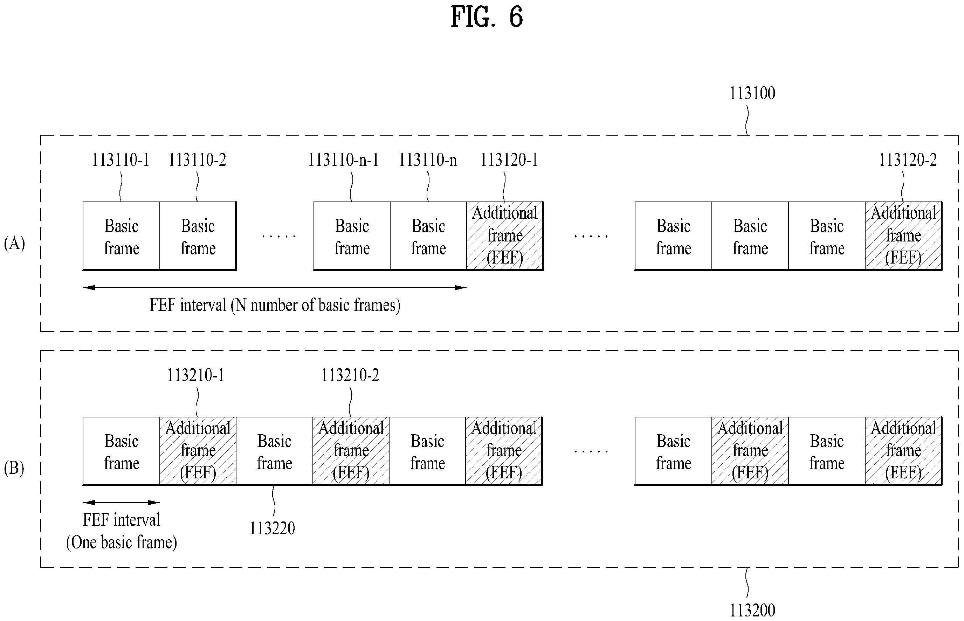

FIG. 6 illustrates a structure of an FEF based additional frame according to an embodiment of the present invention.

Specifically, FIG. 6 shows the case in which a Future Extension Frame (FEF) is used in order to transmit additional video data. In the present invention, a frame that transmits basic video data may be referred to as a basic frame and an FEF that transmits additional video data may be referred to as an additional frame.

EP 3 002 903 B1

FIG. 6 shows structures of superframes 11100 and 113200 in each of which a basic frame and an additional frame are multiplexed. Frames 113100-1 to 113100-n that are not shaded from among frames included in the superframe 113100 are basic frames and shaded frames 113120-1 and 113120-2 are additional frames.

FIG. 6(A) shows the case in which the ratio of basic frames to additional frames is N:1. In this case, the time required for the receiver to receive a next additional frame 113120-2 after receiving one additional frame 113120-1 may correspond to N basic frames.

FIG. 6(B) shows the case in which the ratio of basic frames to additional frames is 1:1. In this case, the proportion of additional frames in the superframe 113200 may be maximized and therefore the additional frames may have a structure very similar to that of the basic frames in order to maximize the extent of sharing with the basic frames. In addition, in this case, the time required for the receiver to receive a next additional frame 113210-2 after receiving one additional frame 113210-1 corresponds to 1 basic frame 113220 and therefore the superframe period is shorter than that of FIG. 6(A).

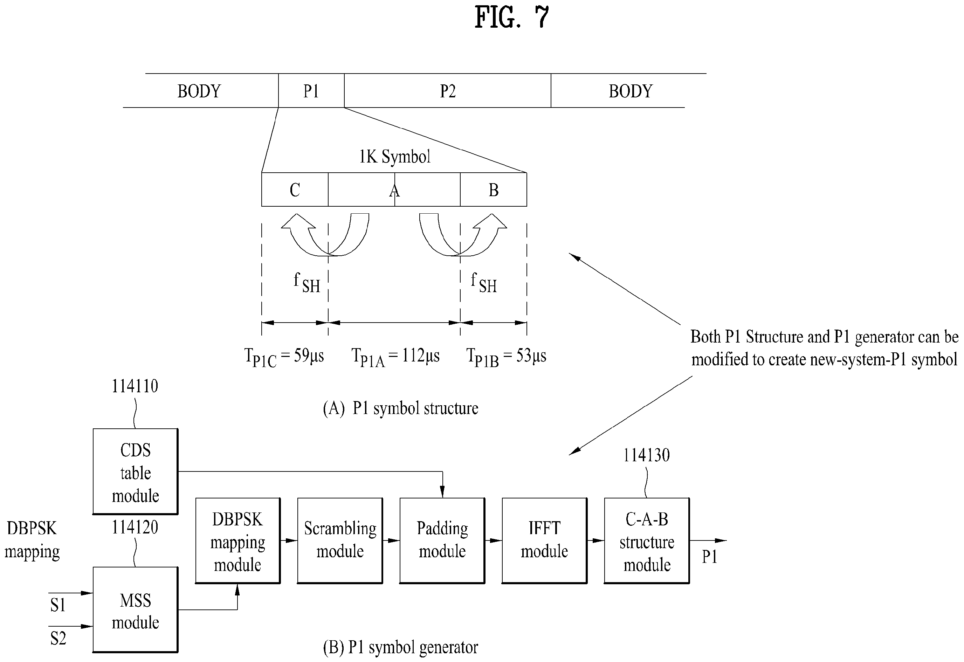

FIGs. 7(A) and 7(B) illustrate a P1 symbol generation procedure for identifying additional frames according to an embodiment of the present invention.

In the case in which additional video data is transmitted through additional frames which are distinguished from basic frames as shown in FIG. 6, there is a need to transmit additional signaling information for enabling the receiver to identify and process an additional frame. An additional frame of the present invention may include a P1 symbol for transmitting such additional signaling information and the P1 symbol may be referred to as a new_system_P1 symbol. This new_system_P1 symbol may be different from a P1 symbol that is used in a conventional frame and a plurality of new_system_P1 symbols may be provided. In an embodiment, the new_system_P1 symbol may be located before a first P2 symbol in a preamble area of the frame.

In the present invention, a P1 symbol of a conventional frame may be modified and used to generate the minimum Hamming distance. The present invention suggests a method in which a minimum Hamming distance is generated by modifying the structure of the P1 symbol of the conventional frame or is generated by changing the symbol generator 114100 that generates symbols.

FIG. 7(A) shows the structure of the P1 symbol of the conventional frame. In the present invention, the structure of the P1 symbol of the conventional frame shown in FIG. 7(A) may be modified to generate a minimum Hamming distance. In this case, the minimum Hamming distance may be generated by changing a frequency displacement f_SH for the prefix and postfix of the conventional P1 symbol or changing the length (specifically, the size of T_P1 C or T_P1B) of the P1 symbol. However, in the case in which the minimum Hamming distance is generated by modifying the structure of the P1 symbol, there is a need to appropriately modify parameters (the sizes of T_P1C and T_P1B and f_SH) used in the P1 symbol structure.

FIG. 7(B) shows the P1 symbol generator that generates P1 symbols. In the present invention, the P1 symbol generator shown in FIG. 7(B) may be modified to generate a minimum Hamming distance. In this case, a minimum Hamming distance may be generated using a method which changes the distribution of active carriers used for a P1 symbol in a CDS table module 114110, an MSS module 114120, and a C-A-B structure module 114130 included in the P1 symbol generator (for example, a method in which the CDS table module 114110 uses a different Complementary Set of Sequence (CSS)) or a method which changes a pattern for information that is transmitted through a P1 symbol (for example, a method in which the MSS module 114120 uses a different Complementary Set of Sequence (CSS)).

In addition, the AP1 symbol of the present invention described above with reference to FIG. 6 may be generated through the procedure described above with reference to FIG. 7.

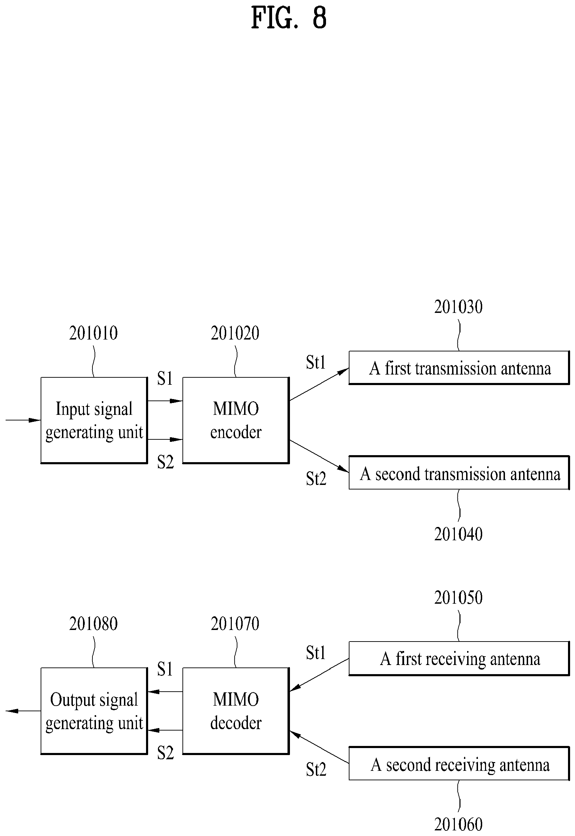

FIG. 8 illustrates MIMO transmission and reception systems according to an embodiment of the present invention.

As shown in FIG. 8, the MIMO transmission system includes an input signal generator 201010, a MIMO encoder 201020, a first transmission antenna 201030, and a second transmission antenna 201040. In the following, the input signal generator 201010 may be referred to as a divider and the MIMO encoder 201020 may be referred to as a MIMO processor.

The MIMO reception system may include a first reception antenna 201050, a second reception antenna 201060, a MIMO decoder 201070, and an output signal generator 201080. In the following, the output signal generator 201080 may be referred to as a merger and the MIMO decoder 101070 may be referred to as an ML detector.

In the MIMO transmission system, the input signal generator 201010 generates a plurality of input signals for transmission through a plurality of antennas. In the following, the input signal generator 201010 may be referred to as a divider. Specifically, the input signal generator 201010 may divide an input signal for transmission into 2 input signals and output the first input signal S1 and the second input signal S2 for MIMO transmission.

The MIMO encoder 201020 may perform MIMO encoding on the plurality of input signals S1 and S2 and output a first transmission signal St1 and a second transmission signal St2 for MIMO transmission and the output transmission signals may be transmitted through a first antenna 201030 and a second antenna 201040 via required signal processing and modulation procedures. The MIMO encoding 201020 may perform encoding on a per symbol basis. The SM scheme or the GC scheme may be used as the MIMO encoding method. In the following, the MIMO encoder may be referred to as a MIMO processor. Specifically, the MIMO encoder may process a plurality of input signals according to a MIMO matrix and a parameter value of the MIMO matrix which are described below.

Although not illustrated in FIG. 8, the input signal generator 201010 is an element that outputs a plurality of input signals for MIMO encoding and may also be an element such as a demultiplexer or a frame builder depending on the transmission system. The input signal generator 201010 may also be included in the MIMO encoder 201020 such that the MIMO encoder 201020 generates a plurality of input signals and performs encoding on the plurality of input signals. The MIMO encoder 201020 may be a device that performs MIMO encoding or MIMO processing on a plurality of signals and outputs the encoded or processed signals so as to acquire diversity gain and multiplexing gain of the transmission system.

Since signal processing should be performed on a plurality of input signals after the input signal generator 201010, a plurality of devices may be provided next to the input signal generator 201010 to process signals in parallel or one device including one memory may be provided to sequentially process signals or to simultaneously process signals in parallel.

The MIMO reception system receives a first reception signal Sr1 and a second reception signal Sr2 using a first reception antenna 201050 and a second reception antenna 201060. The MIMO decoder 201070 then processes the first reception signal and the second reception signal and outputs a first output signal and a second output signal. The MIMO decoder 201070 processes the first reception signal and the second reception signal according to the MIMO encoding method used by the MIMO encoder 201020. As an ML detector, the MIMO decoder 201070 outputs a first output signal and a second output signal using information regarding the channel environment, reception signals, and the MIMO matrix used by the MIMO encoder in the transmission system. In an embodiment, when ML detecting is performed, the first output signal and the second output signal may include probability information of bits rather than bit values and may also be converted into bit values through FEC decoding.

The MIMO decoder of the MIMO reception system processes the first reception signal and the second reception signal according to the QAM type of the first input signal and the second input signal processed in the MIMO transmission system. Since the first reception signal and the second reception signal received by the MIMO reception system are signals that have been transmitted after being generated by performing MIMO encoding on the first input signal and the second input signal of the same QAM type or different QAM types, the MIMO reception system may determine a combination of QAM types of the reception signals to perform MIMO decoding on the reception signals. Accordingly, the MIMO transmission system may transmit information identifying the QAM type of each transmission signal in the transmission signal and the QAM type identification information may be included in a preamble portion of the transmission signal. The MIMO reception system may determine the combination of the QAM types of the reception signals from the QAM type identification information of the transmission signals and perform MIMO decoding on the reception signals based on the determination.

The output signal generator 201080 may merge the first output signal and the second output signal to generate an output signal.

The following is a description of a MIMO encoder and a MIMO encoding method that have low system complexity, high data transmission efficiency, and high signal reconstruction (or restoration) performance in various channel environments according to an embodiment of the present invention.

The SM scheme is a method in which data is simultaneously transmitted through a plurality of antennas without encoding for MIMO. In this case, the receiver can acquire information from data that is simultaneously received through a plurality of reception antennas. The SM scheme has an advantage in that the complexity of a Maximum Likelihood (ML) decoder that the receiver uses to perform signal reconstruction (or restoration) is relatively low since the decoder only needs to check a combination of received signals. However, the SM scheme has a disadvantage in that transmit diversity cannot be achieved at the transmitting side. In the case of the SM scheme, the MIMO encoder bypasses a plurality of input signals. In the following, such a bypass process may be referred to as MIMO encoding.

The GC scheme is a method in which data is transmitted through a plurality of antennas after the data is encoded according to a predetermined rule (for example, according to an encoding method using golden code). When the number of the antennas is 2, transmit diversity is acquired at the transmitting side since encoding is performed using a 2x2 matrix. However, there is a disadvantage in that the complexity of the ML decoder of the receiver is high since the ML decoder needs to check 4 signal combinations.

The GC scheme has an advantage in that it is possible to perform more robust communication than using the SM scheme since transmit diversity is achieved. However, such a comparison has been made when only the GC scheme and the SM scheme are used for data processing for data transmission and, if data is transmitted using additional data coding (which may also be referred to as outer coding), transmit diversity of the GC scheme may fail to yield additional gain. This failure easily occurs especially when such outer coding has a large minimum Hamming distance. For example, the transmit diversity of the GC scheme may fail to yield additional gain compared to the SM scheme when data is transmitted after being encoded by adding redundancy for error correction using a Low Density Parity Check (LDPC) code having a large minimum Hamming distance. In this case, it may be advantageous for the broadcast system to use the SM scheme having low complexity.

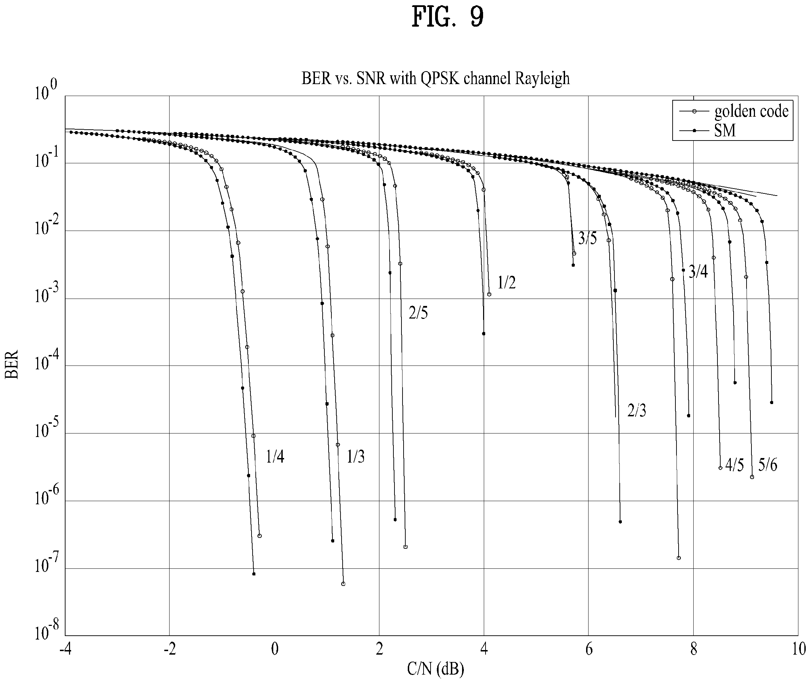

FIG. 9 illustrates a BER/SNR chart showing the performance difference between the SM scheme and the GC scheme using the outer code according to an embodiment of the present invention.

Specifically, FIG. 9 shows BER/SNR performance of the SC scheme and the GC scheme according to the code rate of the outer code under the assumption that a QPSK modulation scheme is used and channels are in a Rayleigh channel environment. In charts described below, the term "Rayleigh channel environment" refers to an environment in which channels have no correlation between paths when MIMO transmission and reception is performed.

From FIG. 9, it can be seen that the SM scheme exhibits higher performance than the GC scheme at a low code rate (1/4, 1/3, 2/5, 1/2) having a large minimum Hamming distance. However, it can also be seen that the GC scheme exhibits higher performance than the SM scheme at a high code rate (2/3, 3/4, 4/5, 5/6) having a small minimum Hamming distance since the transmit diversity gain of the GC scheme is high compared to performance improvement due to coding.

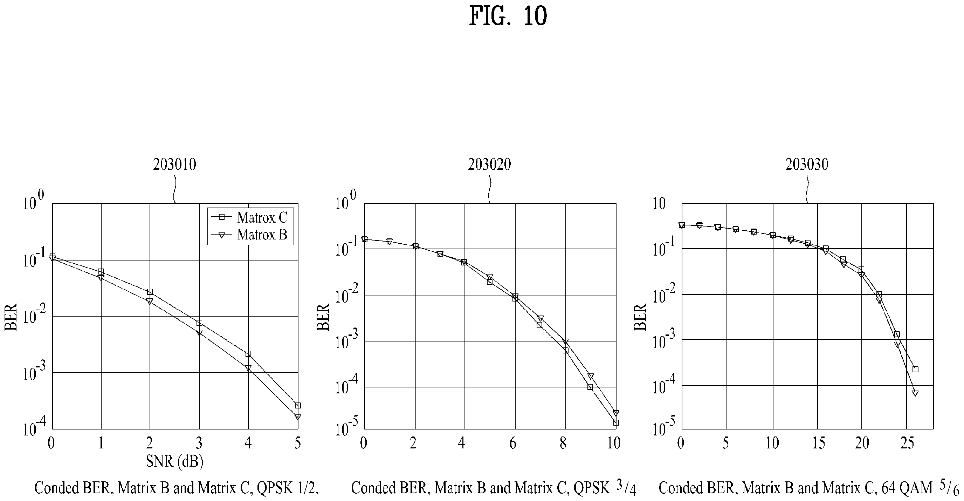

FIG. 10 illustrates BER/SNR charts showing the performance difference between the SM scheme and the GC scheme according to the code rate of the outer code and the modulation scheme according to an embodiment of the present invention.

The chart 203010 of FIG. 10 shows the case in which an outer code having a code rate of 1/2 and a QPSK modulation scheme are used, the chart 203020 shows the case in which an outer code having a code rate of 3/4 and a QPSK modulation scheme are used, and the chart 203030 shows the case in which an outer code having a code rate of 5/6 and a 64-QAM modulation scheme are used.

From comparison of the charts 203010 to 203030, it can be seen that the SM scheme exhibits higher performance than the GC scheme when a low code rate (1/2) is used as shown in the chart 203010 and when a large QAM size (64-QAM) is applied as shown in the chart 203030.

Accordingly, the present invention suggests that a more efficient MIMO broadcast system be designed using a robust outer code while using an SM scheme having low complexity. However, the SM scheme may have a problem associated with reception signal reconstruction (or restoration) depending on the degree of correlation between a plurality of MIMO transmission and reception channels.

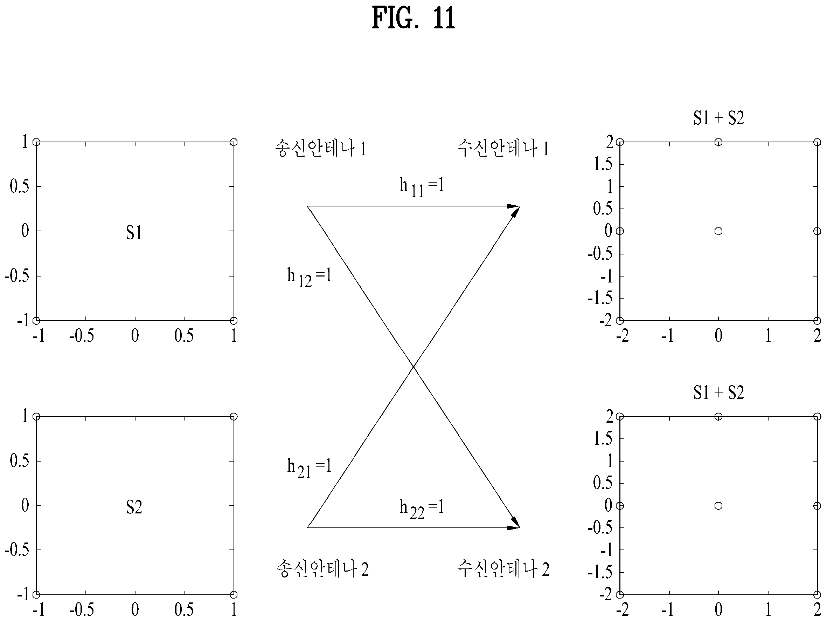

FIG. 11 illustrates a data transmission and reception method according to MIMO transmission of the SM scheme in a channel environment according to an embodiment of the present invention.

The MIMO transmission system may transmit input signal 1 (S1) and input signal 2 (S2) respectively through transmission antenna 1 and transmission antenna 2 according to the SM scheme. FIG. 11 illustrates an embodiment in which the transmitting side transmits a symbol modulated according to 4-QAM.

The transmission antenna 1 receives a signal through two paths. In the channel environment of FIG. 9, the received signal of the reception antenna 1 is $S1*h_{11} + S2h_{21}$ and the received signal of the reception antenna 2 is $S1*h_{12} + S2h_{22}$. The receiving side may acquire S1 and S2 through channel estimation to reconstruct data.

This is a scenario in which the transmission and reception paths are independent of each other. In the following, such an environment is referred to as being uncorrelated. On the other hand, channels of the transmission and reception paths may have a very high correlation with each other as in a Line Of Sight (LOS) environment, which is referred to as being fully correlated in the following description.

In the case in which channels are fully correlated in MIMO, each channel may be represented by a 2x2 matrix whose elements are all 1 (i.e., $h_{11}=h_{12}=h_{21}=h_{22}=1$) as shown in FIG. 11. Here, the reception antenna 1 and the reception antenna 2 receive the same reception signal (S1+S2). That is, if signals transmitted through 2 transmission antennas pass through the same channel and are received by 2 reception antennas, a reception signal received by the receiver, i.e., data added (or combined) through the channel, cannot express both symbols S1 and S2. As shown in FIG. 11, in the fully correlated channel environment, the receiver cannot receive a 16-QAM symbol, into which the signal S1 represented by a 4-QAM symbol and the signal S2 represented by a 4-QAM symbol are combined and the receiver cannot separate and reconstruct the signals S1 and S2 since the receiver receives a combined signal S1+S2 represented by 9 symbols as shown in the right side of FIG. 11.

In this case, the receiver cannot reconstruct a signal received according to MIMO using the SM scheme even when the receiver is in a very high SNR environment. In the case of a communication system, communication is generally performed in two ways and therefore such a channel environment may be signaled to the transmitter through a feedback channel established between the transmitter and the receiver to allow the transmitter to change the transmission method. However, in the case of a broadcast system, it may be difficult to perform bidirectional communication through a feedback channel and one transmitter covers a large number of receivers and a large range and therefore it may be difficult to deal with various channel environment changes. Accordingly, if the SM scheme is used in such a fully correlated channel environment, the receiver cannot receive services and it is difficult to deal with such an environment, increasing costs, unless the coverage of the broadcast network is reduced.

The following is a description of a method for dealing with the case in which the correlation between MIMO channels is 1, i.e., the case in which channels are in a fully correlated channel environment.

The present invention suggests that a MIMO system be designed such that signals received through MIMO channels satisfy the following conditions so as to deal with the case in which the MIMO channels are fully correlated.

1) A received signal should be able to represent both original signals S1 and S2. That is, coordinates of a constellation received by the receiver should be able to uniquely represent sequences of S1 and S2.
2) A minimum Euclidean distance of a received signal should be increased so as to reduce symbol error rate.
3) Hamming distance characteristics of a received signal should be good so as to reduce bit error rate.

First, the present invention suggests a MIMO encoding method that uses a MIMO encoding matrix including an encoding factor "a" as expressed in the following Expression 1 so as to satisfy such requirements.

[Expression 1]

$$\begin{bmatrix} 1 & a \\ a & -1 \end{bmatrix}$$

When a MIMO encoder encodes input signals S1 and S2 using a MIMO encoding matrix as shown in Expression 1, reception signal 1 (Rx1) and reception signal 2 (Rx2) received by antenna 1 and antenna 2 are calculated as expressed in the following Expression 2. The reception signal 1 (Rx1) and reception signal 2 (Rx2) are calculated as expressed in the last line of Expression 2, especially, when MIMO channels are fully correlated.

[Expression 2]

$$Rx_1 = h_{11}(S1 + aS2) + h_{21}(aS1 - S2)$$
$$Rx_2 = h_{12}(S1 + aS2) + h_{22}(aS1 - S2) \quad , if \ h_{11} = h_{21} = h_{12} = h_{22} = h,$$
$$R = Rx_1 = Rx_2 = h\{(a+1)S1 + (a-1)S2\}$$

First, when MIMO channels are uncorrelated, the reception signal 1 (Rx1) is calculated as Rx1 = $h_{11}$(S1+a*S2)+$h_{21}$(a*S1-S1) and the reception signal 2 (Rx2) is calculated as Rx2 = $h_{12}$(S1+a*S2)+$h_{22}$(a*S1-S2). Thus, since the signals S1 and S2 have the same power, it is possible to use gain of the MIMO system together with the SM scheme. When MIMO channels are fully correlated, the reception signals (R=Rx1=Rx2) expressed as R = h{(a+1)S1+(a-1)S2} are acquired and therefore it is possible to separate and acquire the signals S1 and S2 and the signals S1 and S2 are designed such that both have different power and therefore it is possible to secure robustness accordingly.

That is, the MIMO encoder may encode input signals S1 and S2 such that the input signals S1 and S2 have different power according to the encoding factor "a" and are also received with different distributions even in fully correlated channels. For example, input signals S1 and S2 may be encoded such that both have different power and the encoded signals may then be transmitted using constellations which have different Euclidean distances through normalization to allow the receiver to separate and reconstruct the input signals even when the signals have passed through fully correlated channels.

The MIMO encoding matrix described above may be represented as Expression 3 taking into consideration a normalization factor.

[Expression 3]

$$\frac{1}{\sqrt{1+a^2}}\begin{bmatrix}1 & a \\ a & -1\end{bmatrix}=\begin{bmatrix}\dfrac{1}{\sqrt{1+a^2}} & \dfrac{a}{\sqrt{1+a^2}} \\ \dfrac{a}{\sqrt{1+a^2}} & \dfrac{-1}{\sqrt{1+a^2}}\end{bmatrix}=\begin{bmatrix}\cos\theta & \sin\theta \\ \sin\theta & -\cos\theta\end{bmatrix}$$

MIMO encoding of the MIMO encoder that uses the MIMO encoding matrix (or rotation matrix) shown in Expression 3 may be considered as rotating the input signals by an arbitrary angle of $\theta$ that can be represented by the encoding factor a, separating the cosine and sine components (or real and imaginary components) of the rotated signals, assigning positive and negative (+/-) signs to the separated components, and transmitting the separated components through different antennas. For example, the MIMO encoder may encode the input signals S1 and S2 such that the cosine component of the input signal S1 and the sine component of the input signal S2 are transmitted through one transmission antenna and the sine component of the input signal S1 and the cosine component of the input signal S2 to which a negative sign is attached are transmitted through another transmission antenna. The angle, by which the input signals are rotated, changes according to change of the value of the encoding factor "a" and the power distributions of the input signals S1 and S2 become different according to the value of the factor and the angle. Since the power distribution difference can be represented by a distance between symbol coordinates in the constellations, the encoded input signals can be represented by different constellations even when the input signals are received by the receiving side via fully correlated channels such that it is possible to identify and separate the signals, thereby enabling reconstruction of the original input signals.

Specifically, the Euclidian distances of transmission signals change as the power distributions change, the transmission signals received by the receiving side can be represented by identifiable constellations having different Euclidian distances such that it is possible to reconstruct the signals even when the signals have passed through a fully correlated channel. That is, the MIMO encoder can encode the input signal S1 and the input signal S2 into signals having different Euclidian distances according to the value "a" and the receiving side can receive and reconstruct the encoded and transmitted signals using identifiable constellations.

The MIMO encoder may perform encoding on input signals using the MIMO encoding matrix described above while additionally adjusting the encoding factor a. That is, it is possible to adjust and optimize the encoding factor "a" taking into consideration additional data reconstruction performance of the MIMO transmission and reception system.

1. First Embodiment: MIMO encoding method that optimizes the encoding factor "a" taking into consideration Euclidian distances (in a fully correlated MIMO channel environment)

It is possible to calculate the encoding factor value "a" taking into consideration the Euclidean distance while using the MIMO encoding matrix. In a MIMO system having two transmission antennas and two reception antennas, when transmission signal St1 is an M-QAM symbol and transmission signal St2 is an N-QAM symbol, a signal St1+St2 that is received by the receiving side via a fully correlated MIMO channel is an (M*N)-QAM signal.

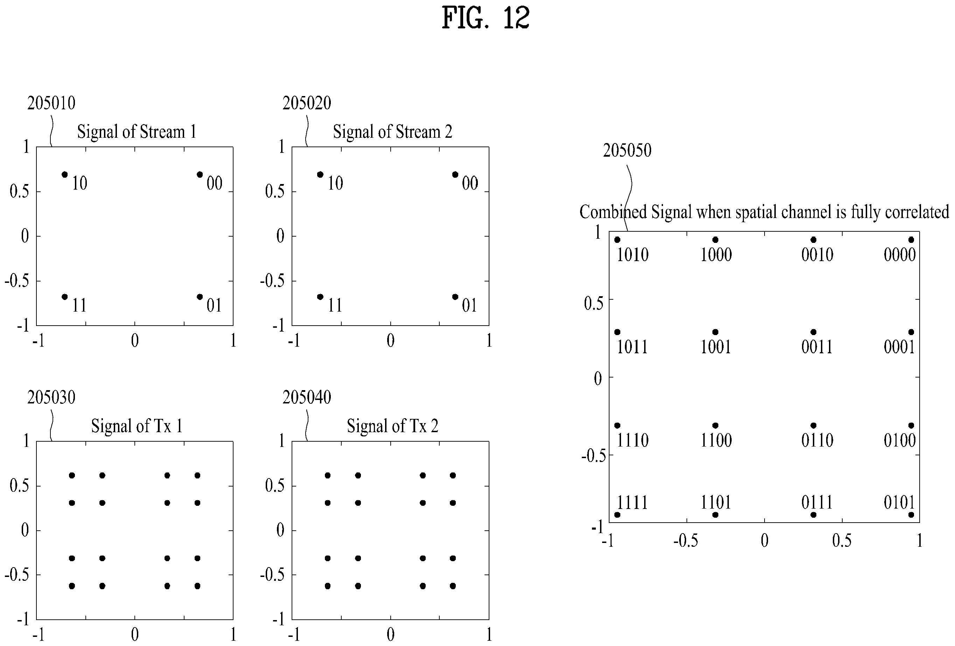

FIG. 12 illustrates input signals and transmission and reception signals when a MIMO encoding method has been performed according to an embodiment of the present invention.

In the embodiment of FIG. 12, an input signal S1 has a constellation 205010 as a 4-QAM symbol and an input signal S2 has a constellation 205020 as a 4-QAM symbol. When the input signal S1 and the input signal S2 are MIMO-encoded using the MIMO encoding matrix, the encoded transmission signals St1 and St2 transmitted through antenna 1 (Tx1) and antenna 2 (Tx2) are 16-QAM symbols and have a constellation 205030 and a constellation 205040 as shown in FIG. 12.

The first embodiment of the present invention suggests a method for optimizing the value "a" such that symbols have the same Euclidian distance in a constellation 205050 of a symbol of a reception signal that has passed through a fully correlated channel as shown in FIG. 11. In FIG. 11, the constellation 205050 of the reception signal is a constellation obtained by adjusting the Euclidean distance using the value "a" as expressed in the following Expression 4. That is, in the case in which input signals are encoded using the MIMO matrix, it is possible to calculate or set the value of the encoding factor "a" such that reception symbols have the same Euclidean distances in a constellation of a reception signal that has passed through a fully correlated channel and to encode the input signals using the calculated or set value "a" of the encoding factor. Such a value "a" may be represented by Expression 4 for each modulation scheme combination.

[Expression 4]

$$a = \begin{cases} 3 & \text{, for QPSK} + \text{QPSK} \\ \left(4 + \sqrt{5}\right)/\left(4 - \sqrt{5}\right) & \text{, for QPSK} + \text{16QAM} \\ 0.6 & \text{, for 16QAM} + \text{16QAM} \end{cases}$$

In the embodiment of FIG. 12, the constellation 205050 of the reception symbols corresponds to a constellation in which the value "a" has been set to 3 and input signals have been MIMO-encoded through a combination of 4-QAM and 4-QAM (i.e., QPSK+QPSK). That is, the distribution and constellation of the transmission and reception symbols change according to modulation schemes of the reception signals and a combination of the modulation schemes and the Euclidean distance changes according to the distribution and constellation of the symbols and therefore the value "a" for optimizing the Euclidean distance may also change accordingly. Expression 4 also shows an encoding factor value "a" for optimizing the Euclidean distance calculated when transmission and reception signals are a combination of 4-QAM and 16-QAM (i.e., QPSK+16-QAM) and an encoding factor value "a" calculated when transmission and reception signals are a combination of 16-QAM and 16-QAM (i.e., 16-QAM+16-QAM).

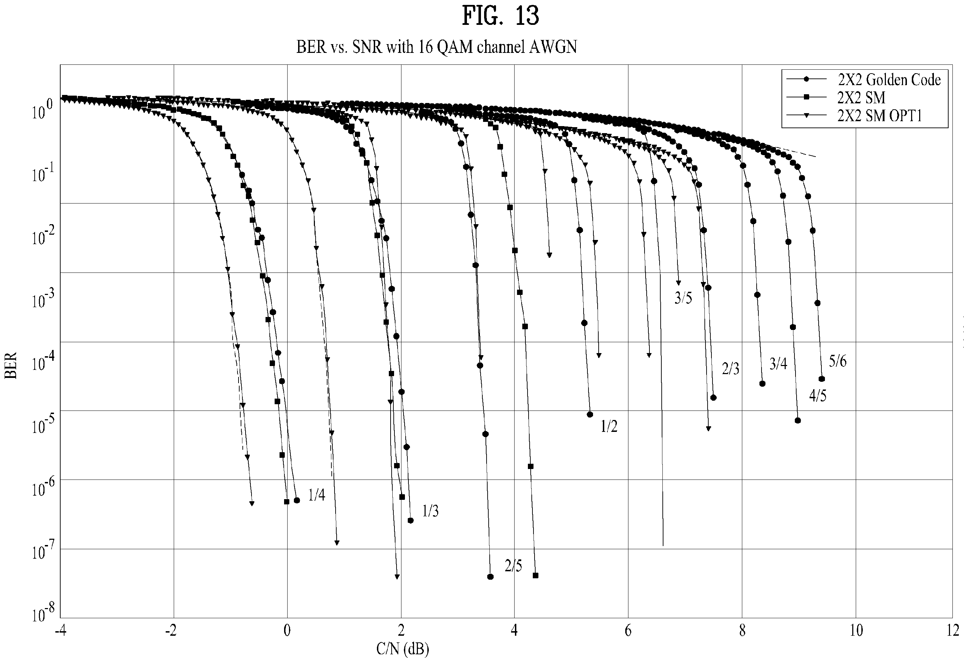

FIG. 13 illustrates a BER/SNR chart showing the performance of the MIMO encoding method according to the first embodiment of the present invention.

Specifically, FIG. 13 shows a simulated performance difference between the Golden Code (GC) scheme, the SM scheme, and the MIMO encoding method (SM OPT1) according to the first embodiment when transmission and reception signals are of 16-QAM in a fully correlated channel and 2 transmission antennas and 2 reception antennas are provided. The following charts also show simulation results when an AWGN channel environment having the same channel according to the MIMO transmission and reception paths is a fully correlated channel environment as in FIG. 13.

It can be seen from FIG. 13 that the MIMO encoding method according to the first embodiment exhibits significantly better performance than the GC scheme or the SM scheme. In the chart of FIG. 13, an arrow shows an SNR gain of the first embodiment of the present invention. Specifically, it can be seen from FIG. 13 that the SNR gain increases as the code rate of the outer code increases. Especially, it can be seen that, in the case of the SM scheme, decoding cannot be performed in a fully correlated MIMO channel environment and services cannot be received regardless of the SNR at a code rate higher than 2/5.

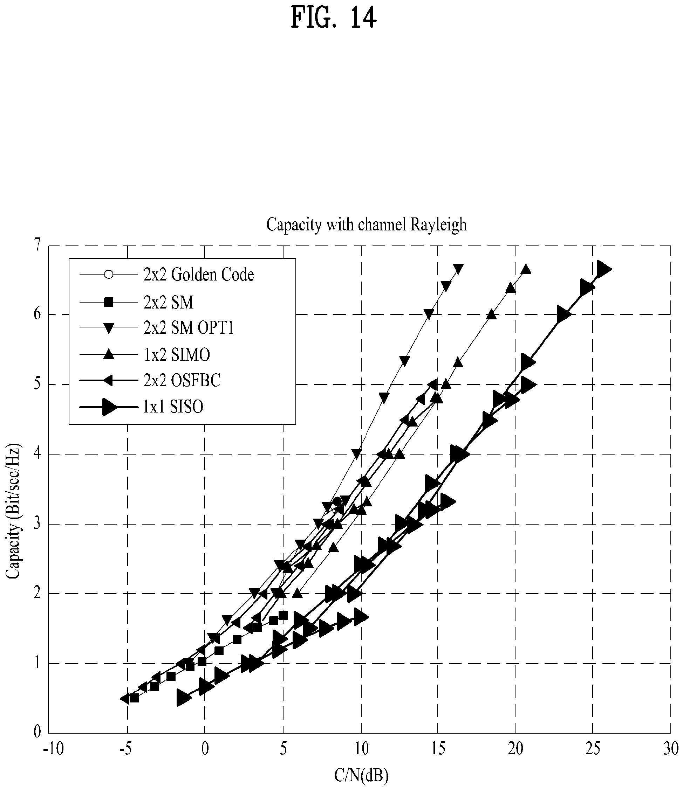

FIG. 14 illustrates a capacity/SNR chart showing the performance of the MIMO encoding method according to the first embodiment of the present invention in an uncorrelated channel.

In FIG. 14, a capacity satisfying a specific error rate on the horizontal axis representing the SNR is shown according to each MIMO scheme. In the chart of FIG. 14, OSFBC denotes the Alamouti scheme. From the chart, it can be seen that the MIMO encoding method of the first embodiment of the present invention exhibits the same performance as the SM scheme while exhibiting the best performance among other schemes.

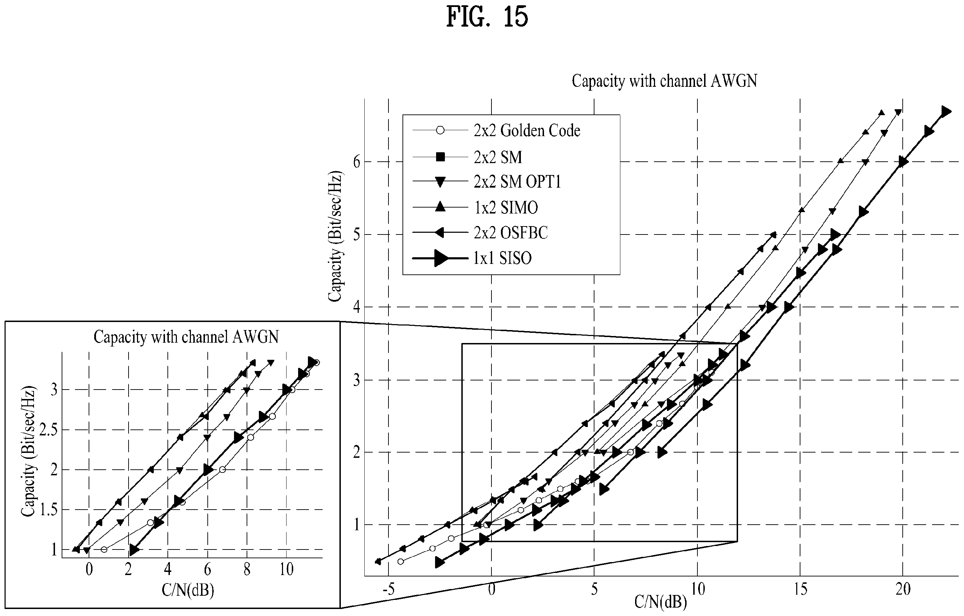

FIG. 15 illustrates a capacity/SNR chart showing the performance of the MIMO encoding method according to the first embodiment of the present invention in a fully correlated channel.

It can be seen from FIG. 15 that, in a fully correlated MIMO channel, the MIMO encoding method according to the first embodiment exhibits significantly better SNR performance than the SM scheme and the GC scheme and also exhibits better performance than the SISO scheme.

Accordingly, it can been from the charts of FIGs. 14 and 15, the MIMO encoding method according to the first embodiment of the present invention can achieve higher performance than the GC scheme while using a system having lower complexity than the GC scheme and can also achieve significantly better performance than the SM scheme having similar complexity in a fully correlated channel environment.

In another embodiment of the present invention, a GC subset may be used as a MIMO encoding matrix when MIMO encoding is performed. In this case, the MIMO encoding matrix is represented by Expression 5.

[Expression 5]

$$\begin{bmatrix} \alpha & \alpha\theta \\ i\overline{\alpha} & i\overline{\alpha}\overline{\theta} \end{bmatrix} \begin{bmatrix} S1 \\ S2 \end{bmatrix}, \ \alpha = 1 + (1-\theta)i, \ \overline{\alpha} = 1 + (1-\overline{\theta})i, \ \theta = \frac{1+\sqrt{5}}{2}, \ \overline{\theta} = \frac{1-\sqrt{5}}{2}$$

Using the encoding matrix of Expression 5 exhibits better performance than the first embodiment of the present invention.

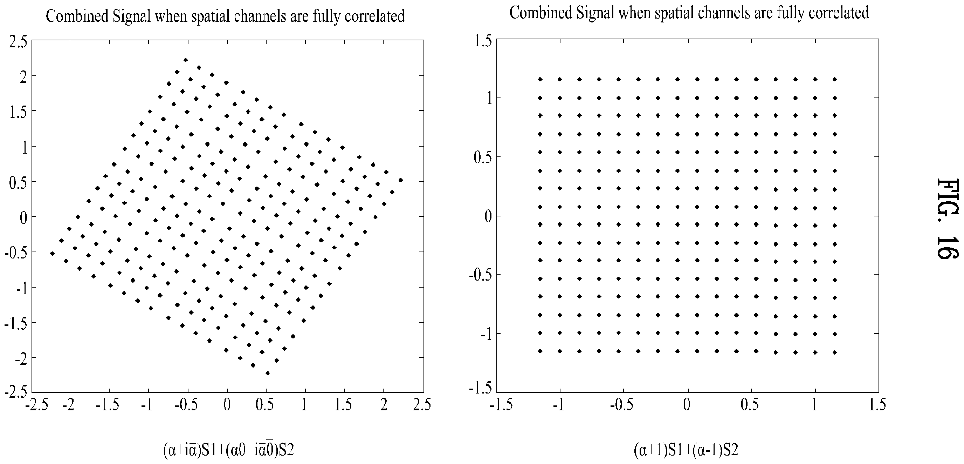

FIG. 16 illustrates a constellation when a GC subset is used as a MIMO encoding matrix and a constellation when the first embodiment is applied.

The constellation of FIG. 16 is a constellation in the case in which 16-QAM type input signal S1 and 16-QAM type input signal S2 are MIMO-encoded using a MIMO encoding matrix and signals transmitted through 2 transmission antennas are received by a receiver through a fully correlated channel. The left part of FIG. 16 shows a reception constellation when a GC subset is used and the right part shows a reception constellation when the first embodiment is used.

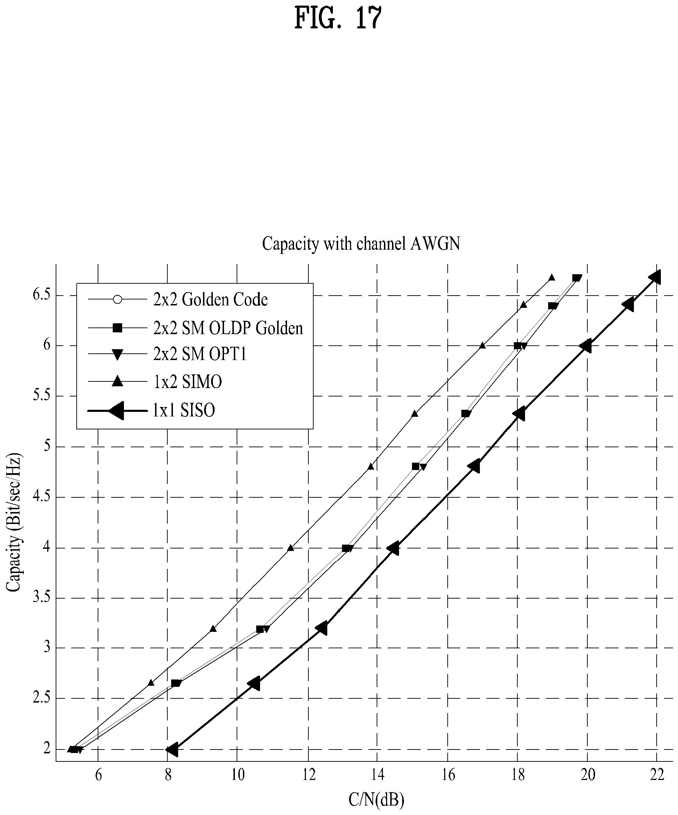

FIG. 17 illustrates a capacity/SNR chart showing a performance comparison between when a GC subset is used as a MIMO encoding matrix and when the first embodiment is used.

As can be seen from the chart, SNR performance is higher when the GC subset is used while the minimum Euclidean distance of a constellation of a reception signal when the first embodiment (SM OPT1) is applied is greater than when the GC subset is used. Thus, the performance of the first embodiment differs due to a factor other than the Euclidian distance, the reason of which is described below.

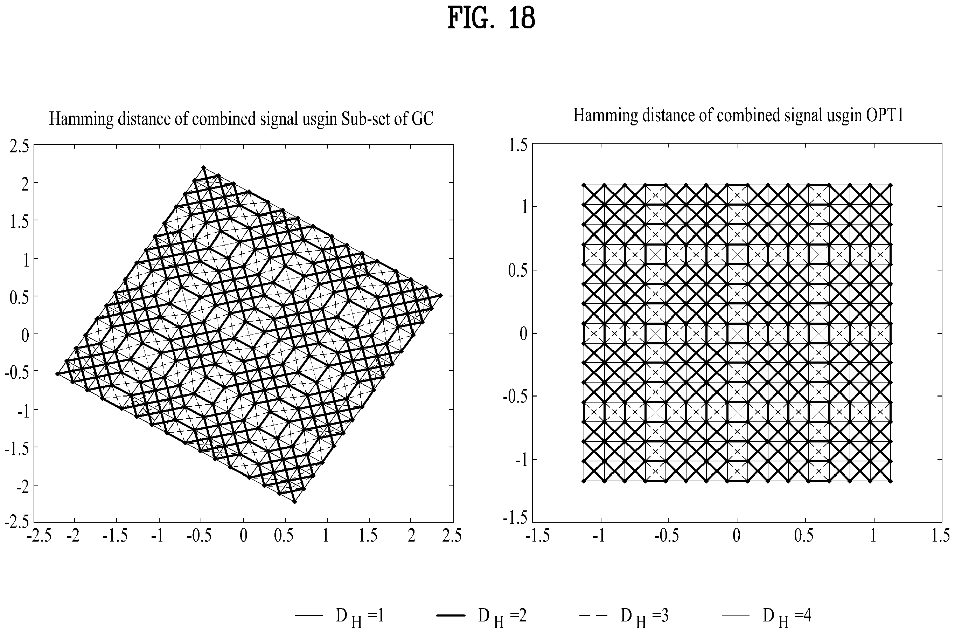

FIG. 18 illustrates a relationship between Euclidean distance and Hamming distance in a constellation when a GC subset is used as a MIMO encoding matrix and in a constellation when the first embodiment is used.

The reason why the SNR performance of the first embodiment is lower than that when the GC subset is used although the minimum Euclidean distance of the first embodiment is greater than when the GC subset is used is associated with the relationship between the Euclidian distance and the Hamming distance.

Hamming distance distributions when the first embodiment is applied and when the GC subset is used are similar and have no gray mapping. However, it can be seen from FIG. 18 that the Euclidian distance of a green line pair or a black line pair having a greater Hamming distance when the GC subset is used is greater than that when the first embodiment is applied. That is, although internal Euclidian distances of 4 by 4 16-QAM constellations which are distributed over 16 areas in the total constellation are similar in both cases, the Euclidian distance between the 4 by 4 16-QAM constellations when the GC subset is used is greater, thereby compensating for the Hamming distance performance difference.

Due to such characteristics, the case of using the GC subset exhibits higher BER performance than the case of the first embodiment although the minimum Euclidean distance when the GC subset is used is smaller than when the first embodiment is applied. Accordingly, in the following, the present invention suggests a MIMO encoding method having higher SNR performance or BER performance.

2. Second Embodiment: MIMO encoding method taking into consideration gray mapping in addition to Euclidian distance

The second embodiment suggests a MIMO encoding method in which an encoding factor value "a" is set so as to optimize the Euclidean distance, similar to the first embodiment, and MIMO encoding is performed such that a reception signal that has passed through a fully correlated channel has a gray mapping (or gray mapping form).

In the MIMO encoding method of the second embodiment, at the receiving side, the signs of real and imaginary parts of the input signal S2 among the input signals S1 and S2 may be changed according to a value of the input signal S1 such that each signal becomes a gray mapping signal. Data values included in the input signal S2 may be changed using a method represented by the following Expression 6. That is, the MIMO encoder may perform MIMO encoding after changing signs of the input signal S2 according to the value of the input signal S1 while using the same MIMO encoding factor as used in the first embodiment.

[Expression 6]

$$S1 = b_0 b_1 .. b_{N-1}, \quad N = \log_2 M, \quad M = \textbf{QAM size of } S1$$
$$real(S1) = b_0 b_2 . b_{N-2}$$
$$imag(S1) = b_1 b_3 . b_{N-1}$$
$$for \ i = 1 ... N - 1$$
$$si = sq = 1$$
$$if \ i = index \ of \ real(S1) \ and \ b_i = 1$$
$$si = -si$$
$$if \ i = index \ of \ imag(S1) \ and \ b_i = 1$$
$$sq = -sq$$
$$end \ for$$
$$S2 = si \cdot real(S2) + i \cdot sq \cdot imag(S2)$$

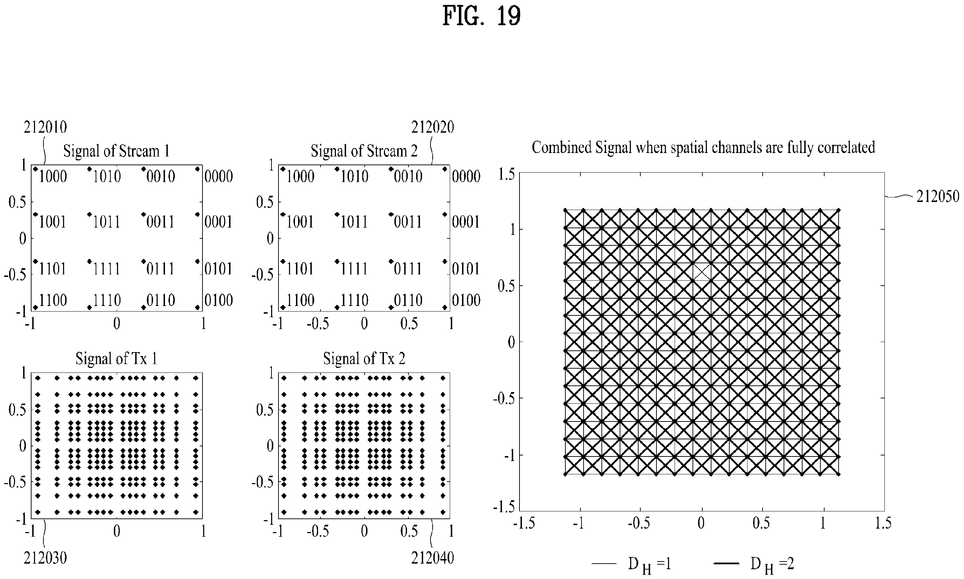

FIG. 19 illustrates input signals and transmission and reception signals when a MIMO encoding method has been performed according to the second embodiment of the present invention.

If bit values assigned to the real and imaginary parts of the input signal S1 212010 among the input signals S1 and S2 212010 and 212020 are XORed as in Expression 6 and the signs of the real and imaginary parts are determined according to the XORed value and transmission signal 1 202030 and transmission signal 2 212040 are transmitted respectively through antenna 1 and antenna 2, then reception symbols of a reception signal 212050, which is received by the receiver via a fully correlated channel, have a gray mapping form such that the Hamming distance between adjacent symbols in the constellation does not exceed 2 as shown in FIG. 19.

Since an (M*N)-QAM signal received by the receiver has a minimum Euclidean distance and a gray mapping form, the second embodiment may achieve the same performance as the SIMO scheme even in a fully correlated MIMO channel environment. However, when signals S1 and S2 are acquired by decoding the reception signal at the ML decoder, complexity may be increased since the value of S2 depends on the value of S1 and performance may be degraded due to the correlation between input signals in an uncorrelated MIMO channel.

3. Third Embodiment: MIMO encoding method that sets MIMO encoding factor taking into consideration Hamming distance in addition to Euclidian distance

The third embodiment suggests a method in which MIMO encoding is performed by setting an encoding factor value "a" so as to optimize the Euclidian distance taking into consideration the Hamming distance of a reception signal rather than allowing the entire constellation of the reception signal to have a Euclidian distance as in the first embodiment.

FIG. 18 illustrates a MIMO encoding method according to the third embodiment of the present invention.

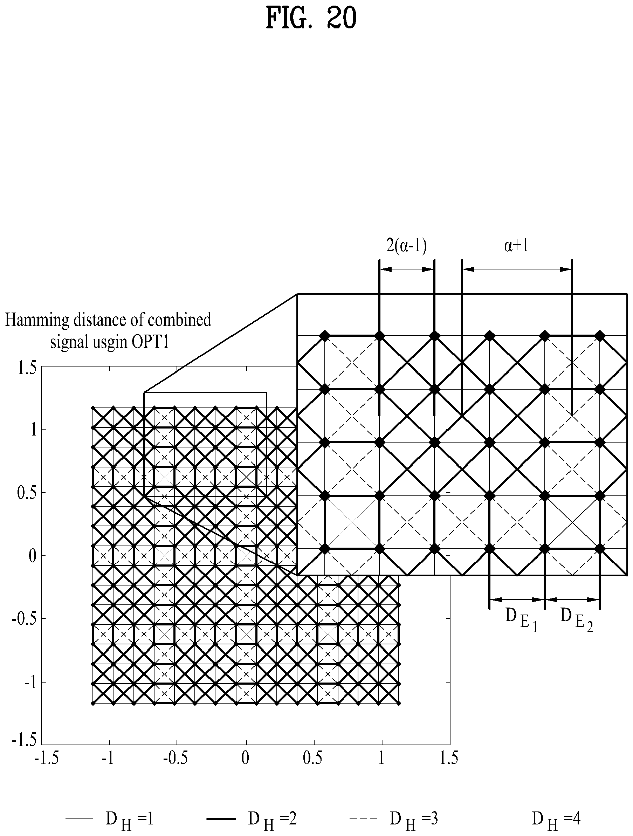

FIG. 20 illustrates a relationship between the value of an encoding factor "a" of a MIMO encoding matrix and a Hamming distance in a constellation of a reception signal received through a fully correlated MIMO channel. In the third embodiment, a Hamming distance of interval D_E1 is smaller than a Hamming distance of interval D_E2 in the constellation of the reception signal and therefore the Euclidian distance is adjusted so as to compensate for the Hamming distance difference by maintaining the power difference between the interval D_E1 and the interval D_E2 such that the power of the interval D_E1 is twice the power of the interval D_E2. That is, the Euclidian distance is adjusted so as to compensate for the reconstruction performance difference due to the Hamming distance difference using the power difference.

In the example of FIG. 20, the Hamming distance of the interval D_E2 is twice higher than that of the interval D_E1. That is, the Euclidian distance between adjacent symbols in an interval, whose Hamming distance is twice greater than another interval since the number of bits thereof is twice greater than the other interval, can be increased so as to increase power of the interval, thereby compensating for performance degradation due to the Hamming distance difference when a reception signal is reconstructed. First, a relative Euclidian distance of a reception signal into which 2 transmission signals St1 and St2 received by the receiver are combined as shown in FIG. 8 is determined. It can be seen from the above Expression 1 that the minimum Euclidean distance of a 16-QAM symbol whose power is reduced is 2(a-1) and the minimum Euclidean distance of a 16-QAM symbol whose power is increased is 2(a+1) (since one reception signal is expressed as R = h{(a+1)S1 + (a-1)S2}). It can be seen from FIG. 20 that d_E1 is equal to the Euclidian distance of 16-QAM symbols whose power has been reduced. It can also be seen from FIG. 20 that D_E2 is twice a distance obtained by subtracting 3/2 of the Euclidean distance of 16-QAM symbols whose power has been reduced from 1/2 of the Euclidean distance of 16-QAM symbols whose power has been increased. This may be represented by Expression 7.

[Expression 7]

$$2D_{H_1} = D_{H_2}$$
$$\sqrt{2}D_{E_1} = D_{E_2}$$
$$2\sqrt{2}(a-1) = 2((a+1) - 3(a-1))$$
$$a = \frac{\sqrt{2}+4}{\sqrt{2}+2}$$

That is, the MIMO encoder performs MIMO encoding on input signals by distributing different power to the input signals using the MIMO matrix such that the signals have different Euclidian distances. In this case, the MIMO encoder may perform MIMO encoding by calculating and setting the encoding factor value "a" such that input signals with distributed power have Euclidian distances for compensating for a Hamming distance difference according to the third embodiment.

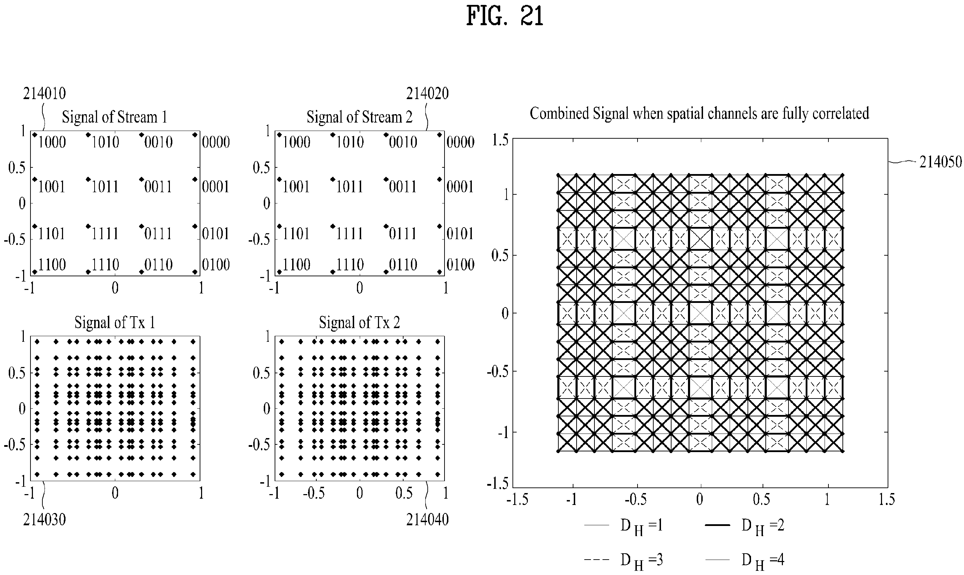

FIG. 21 illustrates input signals and transmission and reception signals when a MIMO encoding method has been performed according to the third embodiment of the present invention.

In the example of FIG. 21, when an input signal S1 (214010) and an input signal S2 (214020) are MIMO-encoded according to the third embodiment, the encoded transmission signals have constellations (214030) and (214040). When the transmission signals are transmitted through a MIMO channel, a reception signal received by the receiver has a constellation 214050. It can be seen from the constellation of the reception signal 214050 that the Euclidean distance has been adjusted according to the Hamming distance.

In the example described above with reference to FIGs. 20 and 21, the value "a" is calculated when the input signal S1 is a 16-QAM signal and the input signal S2 is also a 16-QAM signal. The value "a" of a different modulation scheme may be calculated as shown in Expression 8 using the same principle.

[Expression 8]

$$a = \begin{cases} \sqrt{2}+1 & , \text{for QPSK} + \text{QPSK} \\ \left(\sqrt{2}+3+\sqrt{5}\right)/\left(\sqrt{2}+3-\sqrt{5}\right) & , \text{for QPSK} + 16\text{QAM} \\ \left(\sqrt{2}+4\right)/\left(\sqrt{2}+2\right) & , \text{for 16QAM} + 16\text{QAM} \end{cases}$$

Here, it is assumed that, in the case of QPSK+16-QAM MIMO, the values suggested above are obtained when power of the input signals S1 and S2 has been normalized to 1 after the input signals S1 and S2 are QAM-modulated through QPSK and 16-QAM, respectively, at the symbol mapper. When the power has not been normalized, the value "a" may be modified accordingly.

In addition, in the case of QPSK+16-QAM, a value of 4.0 other than the above-suggested values may be used as the value "a". The reason for this is that the combined signal can represent all input signals S1 and S2 even when the SM scheme is applied in a fully correlated channel environment. In this case, a value of 4.0 or a value close to 4.0 may be used instead of the value calculated using Expression 7 in order to compensate a high code rate of the outer code.

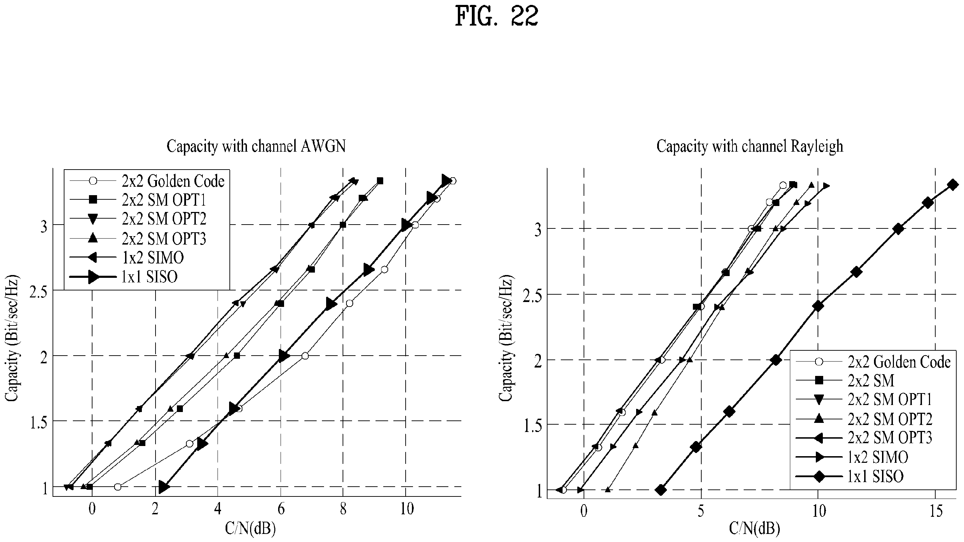

FIG. 22 illustrates capacity/SNR charts showing a performance comparison of MIMO encoding methods according to the present invention.

It can be seen from the left chart that, in a fully correlated MIMO channel environment, the MIMO encoding method (SM OPT2) of the second embodiment has almost the same performance as the SIMO scheme. However, it can be seen from the right chart that, in an uncorrelated MIMO channel environment, the MIMO encoding method (SM OPT2) of the second embodiment suffers from performance degradation due to the relationship between the MIMO-encoded and transmitted signals S1 and S1, specifically, since the signal S2 depends on the signal S1 as described above.

It can also be seen that the MIMO encoding method (SM OPT3) of the third embodiment experiences no performance loss in an uncorrelated MIMO channel while exhibiting performance better than the first embodiment (SM OPT1) in a fully correlated MIMO channel (or channel environment).

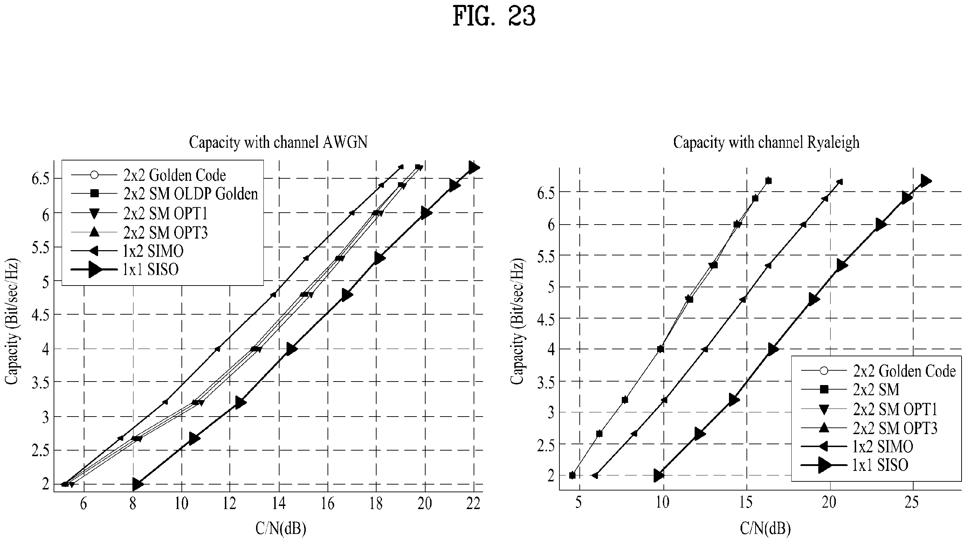

FIG. 23 illustrates different capacity/SNR charts showing a performance comparison of MIMO encoding methods according to the present invention.

It can be seen from the left chart that, in a fully correlated MIMO channel environment, the MIMO encoding method (SM OPT3) of the third embodiment exhibits better performance than the first embodiment (SM OPT1) and the MIMO encoding method (SM OLDP Golden) that uses a subset of Gold Code (GC) and it can also be seen from the right chart that the MIMO encoding method (SM OPT3) of the third embodiment experiences no performance loss in an uncorrelated MIMO channel environment.

When the second embodiment and the third embodiment are compared with reference to the above descriptions and charts, it can be seen that the second embodiment exhibits the same performance as SIMO in a fully correlated MIMO channel environment and thus does not suffer any performance loss, thereby solving the problems of the MIMO scheme in a fully correlated MIMO channel environment. However, in the second embodiment, input signals S1 and S2 are not independent of each other due to MIMO encoding such that the signal S2 changes according to the signal S1, thereby causing performance degradation in an uncorrelated channel as can be seen from FIGs. 21 and 22. Accordingly, iterative ML detection may be used in order to solve the problem that reception and decoding errors of the signal S1 are reflected in the signal S2, causing an additional decoding error of the signal S2.

In the iterative ML detection method, an outer code is included in an iterative loop and a detection error of the signal S1 is reduced using a soft posteriori probability value of the signal S1 output from an outer port as an a priori probability value of the ML detector, thereby reducing the probability of application of the detection error of the signal S1 for detection of the signal S2. This method allows the MIMO encoding method of the second embodiment to exhibit performance of the SIMO system in a fully correlated MIMO channel environment and exhibit performance of the SIMO system in an uncorrelated MIMO channel environment.

In the MIMO encoding method of the third embodiment, a reception signal received through a fully correlated MIMO channel is designed taking into consideration both the Hamming distance and the Euclidian distance. Accordingly, the MIMO encoding method of the third embodiment not only has better performance in a fully correlated MIMO channel but also has no performance loss compared to the SM scheme in an uncorrelated MIMO channel such that it is possible to use both MIMO transmission and reception gains. In this case, there is an advantage in implementation of the receiver since the receiver has complexity similar to the SM scheme.

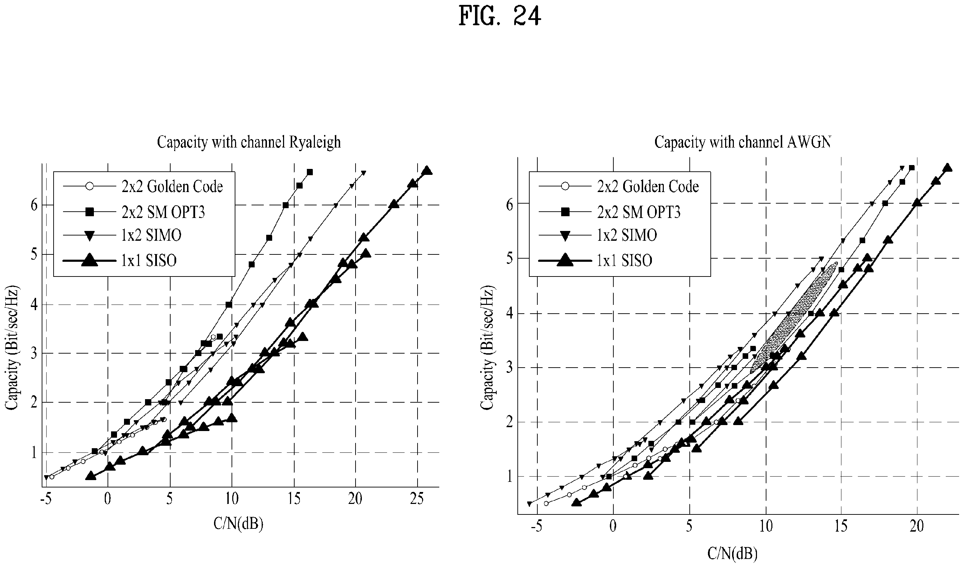

FIG. 24 illustrates capacity/SNR charts showing a performance comparison of combinations of modulation schemes in the MIMO encoding method according to the third embodiment of the present invention.

Specifically, FIG. 24 shows a performance comparison of a QPSK+QPSK MIMO transmission scheme and a 16-QAM+16-QAM MIMO transmission scheme of the third embodiment with SIMO schemes of 16-QAM, 64-QAM, and 256-QAM and SISO schemes of 16-QAM, 64-QAM, and 256-QAM.

From the left chart, it can be seen that, in an uncorrelated channel environment, the third embodiment achieves the MIMO transmission and reception gain and exhibits significantly better performance than the SIMO or SISO scheme. From the right chart, it can also be seen that, in a fully correlated channel environment, the third embodiment exhibits better performance than the SISO scheme but there is a performance difference between the QPSK+QPSK MIMO transmission scheme and the 16-QAM+16-QAM MIMO transmission scheme as shown. A QPSK+16-QAM transmission scheme may be used to compensate for the performance difference. In the QPSK+16-QAM transmission scheme, data of one of the input signals S1 and S2 used for MIMO encoding/decoding is a QPSK symbol and data of the other is a 16-QAM symbol. In this case, the amount of data that is transmitted at once is similar to 64-QAM of the SISO scheme.

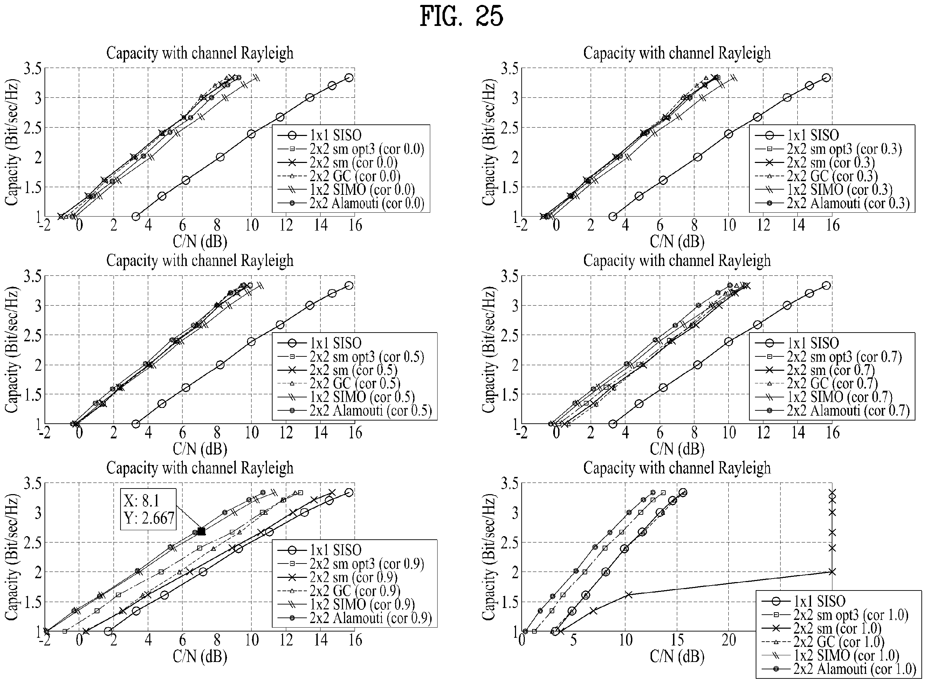

FIG. 25 illustrates capacity/SNR charts showing a performance comparison of different channel correlation levels when a QPSK+QPSK MIMO transmission scheme is used in the MIMO encoding method according to the third embodiment of the present invention.

The charts of FIG. 25 show measured performance of different MIMO channel correlation levels. A range from (cor 0.0) corresponding to a correlation level of 0 to (cor 1.0) corresponding to a correlation level of 1 is divided into 0.0, 0.3, 0.5, 0.7, 0.9, and 1.0 and performance of each correlation level is shown in a corresponding chart.

From the charts of FIG. 25, it can be seen that, when the encoding method of the third embodiment uses a QPSK+QPSK MIMO transmission scheme, performance increases as the correlation between channels increases. It can also be seen that performance is degraded to the extent that decoding is not possible in the case of a fully correlated MIMO channel (cor 1.0) when the SM scheme is used.

When the GS scheme is used, the encoding method may exhibit performance which increases as the code rate increases. However, the increased performance may still be small and the method exhibits performance lower than the embodiments of the present invention at a low code rate. From the chart of FIG. 25, it can be seen that the performance of the GC scheme is seriously degraded in a fully correlated MIMO channel environment.

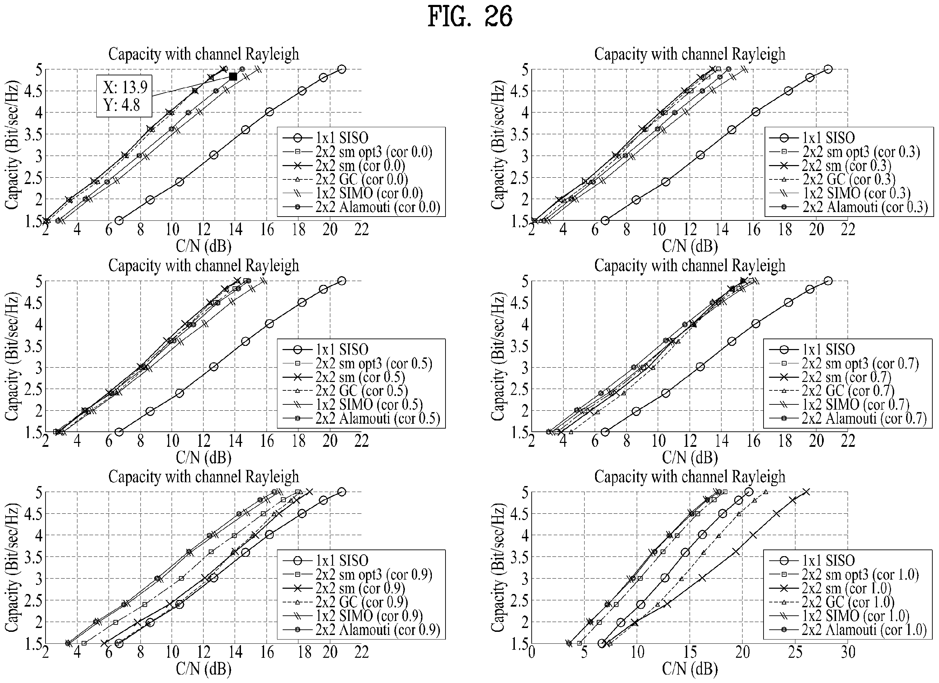

FIG. 26 illustrates capacity/SNR charts showing a performance comparison of different channel correlation levels when a QPSK+16-QAM MIMO transmission scheme is used in the MIMO encoding method according to the third embodiment of the present invention.

The charts of FIG. 26 show measured performance of different MIMO channel correlation levels. A range from (cor 0.0) corresponding to a correlation level of 0 to (cor 1.0) corresponding to a correlation level of 1 is divided into 0.0, 0.3, 0.5, 0.7, 0.9, and 1.0 and performance of each correlation level is shown in a corresponding chart.

From the charts of FIG. 26, it can be seen that, when the encoding method of the third embodiment uses a QPSK+16-QAM MIMO transmission scheme, performance increases as the correlation between channels increases. It can also be seen that performance is significantly degraded in a fully correlated MIMO channel (cor 1.0) when the SM scheme or the GC scheme is used.

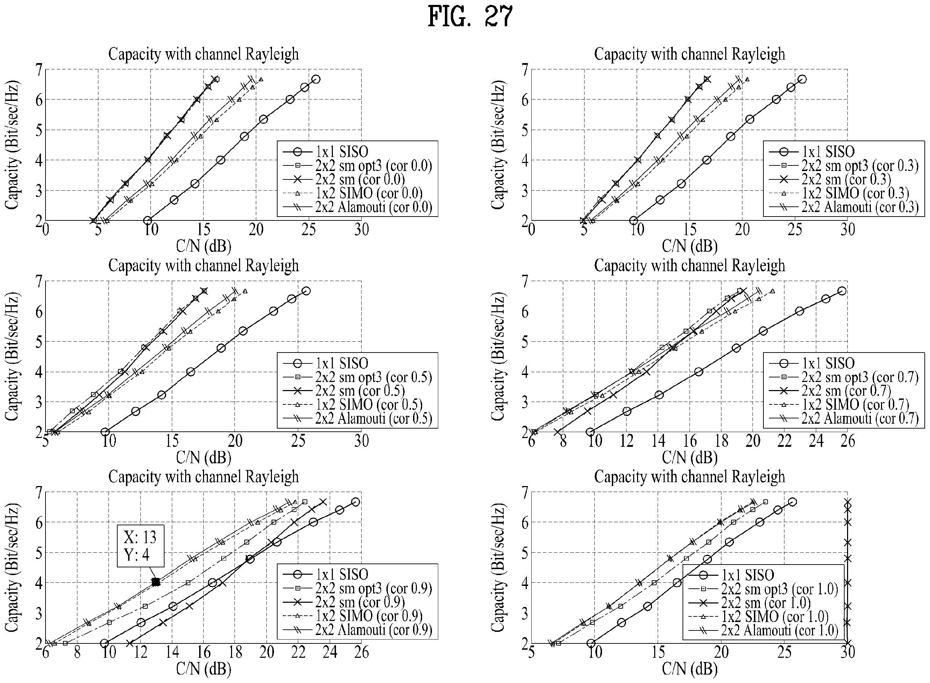

FIG. 27 illustrates capacity/SNR charts showing a performance comparison of different channel correlation levels when a 16-QAM+16-QAM MIMO transmission scheme is used in the MIMO encoding method according to the third embodiment of the present invention.

The charts of FIG. 27 show measured performance of different MIMO channel correlation levels. A range from (cor 0.0) corresponding to a correlation level of 0 to (cor 1.0) corresponding to a correlation level of 1 is divided into 0.0, 0.3, 0.5, 0.7, 0.9, and 1.0 and performance of each correlation level is shown in a corresponding chart.

From the charts of FIG. 27, it can be seen that, when the encoding method of the third embodiment uses a 16-QAM+16-QAM MIMO transmission scheme, performance increases as the correlation between channels increases. It can also be seen that performance is significantly degraded in a fully correlated MIMO channel (cor 1.0) when the SM scheme or the GC scheme is used. Especially, it can be seen that, when the SM scheme is used, decoding is not possible at all code rates in a fully correlated MIMO channel environment.

Power imbalance may occur between signals that are transmitted through respective communication paths when MIMO transmission and reception is performed. That is, signals transmitted through a plurality of transmission antennas may be received by a receiver with different powers. In the worst case, only a signal transmitted by one transmission antenna may be received by the receiver. The following is a description of a MIMO encoding method which can minimize performance degradation in such a power imbalance situation. Especially, a MIMO encoding method in which MIMO encoding is performed by additionally taking into consideration a power imbalance situation while using the MIMO encoding matrix of the present invention having an encoding factor as described above.

4. Fourth Embodiment: MIMO encoding method for minimizing encoding factor value "a" taking into consideration Euclidian distance of transmission signal

The value "a" may be calculated taking into consideration the Euclidian distance of the transmission signal while using the MIMO encoding matrix described above. In a MIMO system having 2 transmission antennas and 2 reception antennas, when an input signal S1 is an M-QAM symbol and an input signal S2 is an N-QAM symbol, a signal S1+S2 received by a receiving side via a fully correlated MIMO channel is an (M*N)-QAM signal.

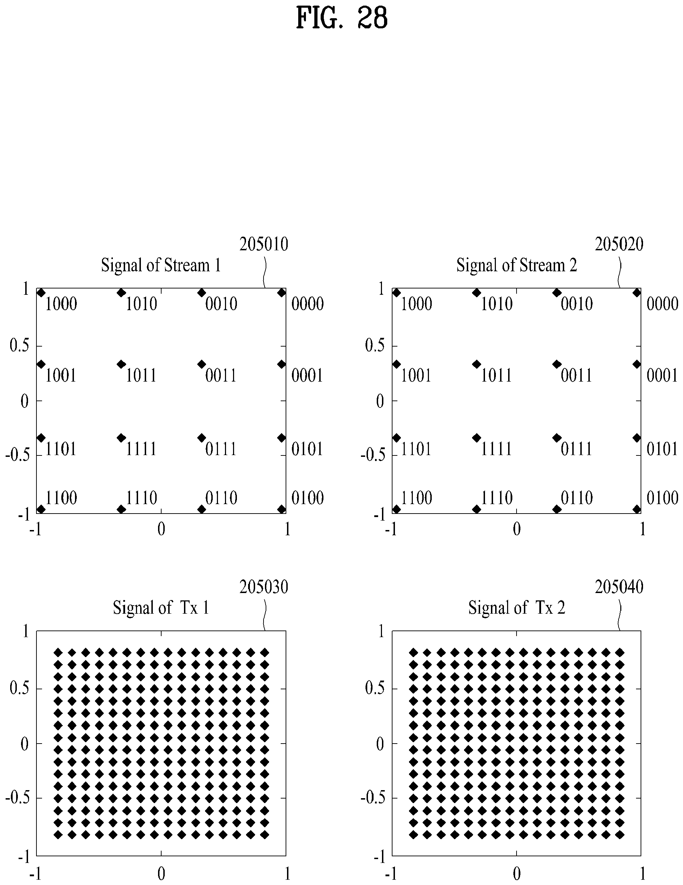

FIG. 28 illustrates input signals and transmission and reception signals when a MIMO encoding method has been performed according to the fourth embodiment of the present invention.

In the embodiment of FIG. 28, the input signal S1 has a constellation 221010 as a 16-QAM symbol and the input signal S2 has a constellation 221020 as a 16-QAM symbol. If the input signal S1 and the input signal S2 are MIMO-encoded using the MIMO encoding matrix, the encoded transmission signals St1 and St2 transmitted through antenna 1 (Tx1) and antenna 2 (Tx2) are 256-QAM symbols and the constellations of the encoded transmission signals have no minimum Euclidean distance. Although the value "a" may be determined by optimizing the Euclidian distance with reference to a reception signal as described above in the first embodiment, this may degrade decoding performance in a power imbalance situation. Accordingly, if the Euclidian distance is optimized with reference to transmission signals from the transmitting side, it is possible to minimize performance degradation that occurs in a power imbalance situation at the receiving side. The value "a" for optimizing the Euclidian distance with reference to transmission signals may be represented by Expression 9.

[Expression 9]

$$a = \begin{cases} 2 & \text{, for QPSK + QPSK} \\ 4 & \text{, for 16QAM + 16QAM} \end{cases}$$

When the value "a" determined according to Expression 9 is used, i.e., when the value "a" is set to 4 and MIMO encoding is performed using the same in the example of FIG. 28, the transmission signals St1 and St2 have a constellation 221030 and a constellation 221040, respectively. From the constellations 221030 and 221040 of the transmission signals St1 and St2, it can be seen that the Euclidian distance is distributed uniformly. Accordingly, it can be understood that, when the MIMO encoding method of the fourth embodiment is used, it is possible to minimize reception performance degradation since the Euclidian distance of the transmission signals received in a power imbalance situation has been optimized.

However, a different value needs to be used when symbol types of input signals are different as in the QPSK+16-QAM transmission method. The reason for this is that, when modulation schemes of input signals used for MIMO transmission are different, a trade-off problem occurs such that, if the optimized value "a" is used for one transmission antenna, then a signal having relatively low performance is transmitted through another transmission antenna.

2. Fifth Embodiment: MIMO encoding method taking into consideration gray mapping in addition to Euclidian distance of transmission signal

The fifth embodiment suggests a MIMO encoding method in which an encoding factor value "a" is set so as to optimize the Euclidean distance of the transmission signal, similar to the fourth embodiment, and MIMO encoding is performed such that a transmission signal that has passed through a fully correlated channel has a gray mapping (or gray mapping form) in a power imbalance situation.

In the MIMO encoding method of the fifth embodiment, the signs of real and imaginary parts of the input signal S2 among the input signals S1 and S2 may be changed according to a value of the input signal S1 such that each transmission signal becomes a gray mapping signal. Similar to the second embodiment, data values included in the input signal S2 may be changed using a method represented by Expression 6 described above.

Bit values assigned to the real and imaginary parts of the input signal S1 among the input signals S1 and S2 may be XORed as in Expression 6 and the signs of the real and imaginary parts may be determined according to the XORed value and transmission signal 1 and transmission signal 2 having a gray mapping form may then be transmitted respectively through antenna 1 and antenna 2.

Since a (M*N)-QAM signal transmitted by the transmitting side has a minimum Euclidean distance and a gray mapping, the fifth embodiment may achieve the same performance as the SIMO scheme even in a power imbalance situation. However, when signals S1 and S2 are acquired by decoding the reception signal at the ML decoder, complexity may be increased since the value of S2 depends on the value of S1.

3. Sixth Embodiment: MIMO encoding method taking into consideration Hamming distance in addition to Euclidian distance of transmission signal

In the sixth embodiment, an encoding factor value "a" is set so as to optimize the Euclidian distance taking into consideration the Hamming distance of a transmission signal rather than allowing the entire constellation of the transmission signal to have a Euclidian distance as in the fourth embodiment. Specifically, it is possible to design an encoding matrix such that the square of the Euclidian distance between adjacent constellation points when the Hamming distance between the adjacent constellation points is 2 is twice the square of the Euclidian distance between the points when the Hamming distance is 1. That is, the Euclidian distance is adjusted such that a reconstruction performance difference due to a Hamming distance difference can be compensated for using a power difference.

Assuming that the transmission signal has a constellation shown in FIG. 18, a Hamming distance of interval D_E1 is 1/2 of a Hamming distance of interval D_E2 and therefore the Euclidian distance can be adjusted so as to compensate for the Hamming distance difference by maintaining the power difference between the interval D_E1 and the interval D_E2 such that the power of the interval D_E1 is twice the power of the interval D_E2. That is, the Hamming distance of the interval D_E2 is twice higher than that of the interval D_E1. Specifically, the Euclidian distance between adjacent symbols in an interval, whose Hamming distance is twice greater than another interval since the number of bits thereof is twice greater than the other interval, can be increased so as to increase power of the interval, thereby compensating for performance degradation due to the Hamming distance difference when a reception signal is reconstructed.

The value "a" may be obtained using the above conditions, which may be represented by Expression 10.

[Expression 10]

$$a = \begin{cases} \sqrt{2}+1 & \text{,for QPSK}+\text{QPSK} \\ \sqrt{2}+3 & \text{,for 16QAM}+\text{16QAM} \end{cases}$$

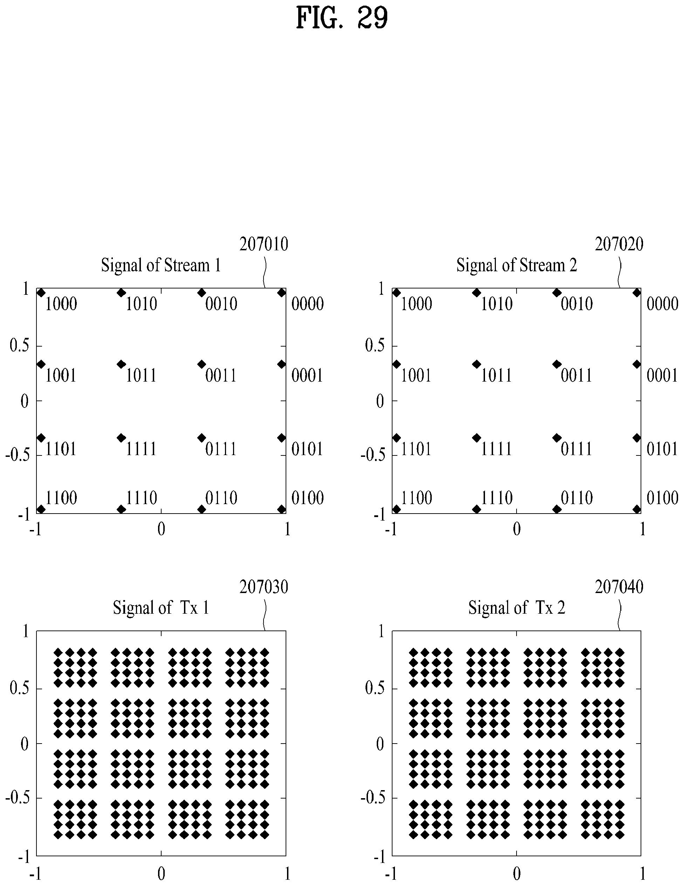

FIG. 29 illustrates input signals and transmission and reception signals when a MIMO encoding method has been performed according to the sixth embodiment of the present invention.

In the embodiment of FIG. 29, the input signal S1 has a constellation 222010 as a 16-QAM symbol and the input signal S2 has a constellation 222020 as a 16-QAM symbol. If the input signal S1 and the input signal S2 are MIMO-encoded using the MIMO encoding matrix including the encoding factor set according to the sixth embodiment, the encoded transmission signals St1 and St2 transmitted through antenna 1 (Tx1) and antenna 2 (Tx2) are 256-QAM symbols and the encoded transmission signals have constellations 208030 and 208040 having Euclidian distances taking into consideration Hamming distances. In addition, since each of the transmission signals has a symbol distribution having a Euclidian distance taking into consideration the Hamming distance, it is possible to minimize performance loss even when the receiver performs decoding using only one of the transmission signals in a power imbalance situation.

However, a different value needs to be used when symbol types of input signals are different as in the QPSK+16-QAM transmission method. The reason for this is that, when modulation schemes of input signals used for MIMO transmission are different, a trade-off problem may occur such that, if the optimized value "a" is used for one transmission antenna, then a signal having relatively low performance is transmitted through another transmission antenna.

The broadcast signal transmission and reception devices according to an embodiment of the present invention can independently perform MISO or MIMO processing on PLP data as described above. In this case, the broadcast signal transmission and reception devices according to an embodiment of the present invention can process data using a hybrid MIMO scheme. The following is a description of an embodiment of broadcast signal transmission and reception devices that use the hybrid MIMO scheme.

When the BICM encoder 101200 of the broadcast signal transmission device shown in FIG. 1 performs MIMO processing on PLP data using an SM scheme, data transfer rate may greatly vary according to the symbol mapping scheme since the constellation mapper and the constellation demapper use the same symbol mapping/demapping scheme. For example, if the constellation mapper uses a QAM symbol mapping scheme, data can be transmitted using a data transfer rate such as 4bps/Hz (QPSK + QPSK), 8bps/Hz (16QAM + 16QAM), 12bps/Hz (64QAM + 64QAM), or 16bps/Hz (256QAM + 256QAM). In this case, the data transfer rates such as 6bps/Hz, 10bps/Hz, and 14bps/Hz cannot be selected. Accordingly, the system designer can transmit data using a system that has a data transfer rate higher than a data rate corresponding to the amount of data that is to be transmitted. In this case, a Signal to Noise Ratio (SNR) required for the receiving side to receive the data may be increased.

That is, when MIMO technology is used, the data transfer rate may vary according to the symbol mapping scheme and variation in the data transfer rate according to the symbol mapping scheme may increase when data is transmitted using more than 2 transmission paths.

Accordingly, in the case in which signals are transmitted through a plurality of paths using MIMO technology, the data transfer rate may be adjusted using a number of different symbol mapping schemes corresponding to the number of the transmission paths. That is, if MIMO encoding is performed by applying a different symbol mapping scheme to each input data for MIMO encoding, the rate of data transmitted per unit time can change according to the symbol mapping scheme such that the system designer can select and use a system according to a specific data transfer rate from among subdivided data transfer rates. A specific embodiment of this method is described below.

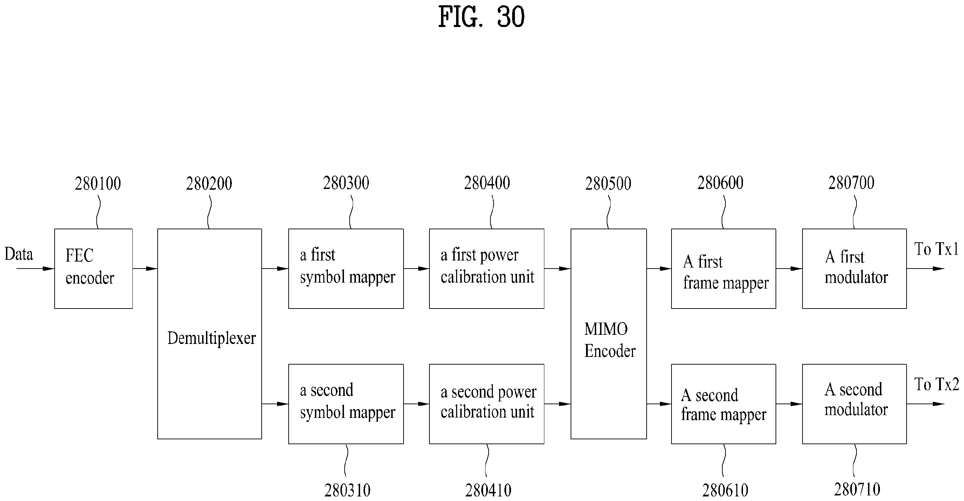

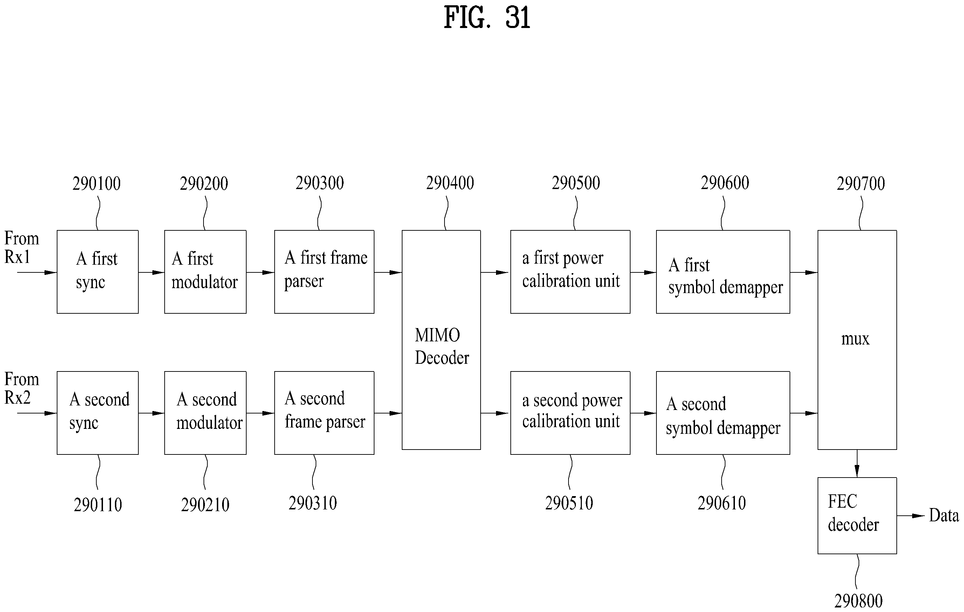

FIGs. 30 and 31 are block diagrams of broadcast signal transmission and reception devices using a hybrid MIMO scheme according to the present invention.

Specifically, FIG. 30 illustrates an embodiment of the broadcast signal transmission device using the hybrid MIMO scheme according to the present invention.

As shown in FIG. 30, the broadcast signal transmission device using the hybrid MIMO scheme according to the present invention includes an FEC encoder 280100, a demultiplexer 280200, a first constellation mapper (or first symbol mapper) 280300, a second constellation mapper (or second symbol mapper) 280310, a first power correction unit (or first power calibration unit) 280400, a second power correction unit (or second power calibration unit) 280410, a MIMO encoder 2802500, a first frame mapper 280600, a second frame mapper 280610, a first OFDM modulator 280700, and a second OFDM modulator 280710.

The FEC mapper 280100 may perform error correction encoding on data to be transmitted using a specific error correction code scheme.

The demultiplexer 280200 may divide the error correction coded data into the same number of data sections as the number of antennas and may output the divided data sections. For example, when the error correction coded data is transmitted through 2 antennas, the demultiplexer 280200 may demultiplex the input data into 2 data sections and output the 2 data sections to 2 transmission paths.

The first constellation mapper 280300 and the second constellation mapper 280310 may perform symbol mapping on each of the demultiplexed data sections. The symbol mapping scheme may vary according to each symbol mapper and the symbol mapping schemes of the first constellation mapper 280300 and the second constellation mapper 280310 shown in FIG. 28 may differ from each other.

The first power correction unit 280400 and the second power correction unit 280410 may adjust powers of symbols to respective optimal powers according to two different symbol mapping schemes. For example, symbols may be transmitted with an average power of symbols according to the two symbol mapping schemes.

The MIMO encoder 280500 receives symbols, which are obtained using the different symbol mapping schemes as described above, and performs MIMO encoding on the received symbols. The MIMO encoder 280500 may output MIMO-encoded data signals, which are to be transmitted through transmission antennas, to respective transmission paths.

Each of the first frame mapper 280600 and the second frame mapper 280610 may create a signal frame to be transmitted through a respective antenna path.

Each of the first OFDM modulator 280700 and the second OFDM modulator 280710 may modulate the signal frame according to an orthogonal frequency division modulation (OFDM) scheme and then transmit the modulated signal through a respective antenna.

FIG. 31 illustrates an embodiment of the broadcast signal reception device using the hybrid MIMO scheme according to the present invention.

As shown in FIG. 31, the broadcast signal transmission device using the hybrid MIMO scheme according to the present invention includes a first synchronizer 290100, a second synchronizer 290110, a first OFDM demodulator 290200, a second OFDM demodulator 290210, a first frame parser 290300, a second frame parser 290310, a MIMO decoder 290400, a first power correction unit (or first power calibration unit) 290500, a second power correction unit (or second power calibration unit) 290510, a first constellation demapper (or first symbol demapper) 290600, a second constellation demapper (or second symbol demapper) 290610, a multiplexer 290700, and an FEC decoder 290800. The broadcast signal reception device according to the present invention may perform demapping on signals, which have been received through a plurality of antennas using a MIMO scheme, according to different symbol demapping schemes.

The first synchronizer 290100 and the second synchronizer 290110 can acquire time and frequency-domain synchronization of the signals received from the antennas.

The first OFDM demodulator 290200 and the second OFDM demodulator 290210 may perform demodulation on the synchronized signals according to an OFDM scheme. The first OFDM demodulator 290200 and the second OFDM demodulator 290210 may then acquire channel information of the signals received through 2 antenna paths and may perform channel equalization on the same.

The first frame parser 290300 and the second frame parser 290310 may parse signal frames from the signals that have been channel-equalized after being received through the 2 antennas.

The MIMO decoder 290400 may receive signals of the parsed signal frames and may perform MIMO decoding on the same.

The first power correction unit 290500 and the second power correction unit 290510 may correct powers of symbols, which have been changed when the symbols are transmitted, into original powers.

The first constellation demapper 290600 and the second constellation demapper 290610 may perform symbol demapping according to different symbol demapping schemes. The symbol demapping schemes correspond to the symbol mapping schemes and various data transfer rates (i.e., various bit granularities) can be acquired using different symbol mapping schemes or using different symbol demapping schemes. Each of the first constellation demapper 290600 and the second constellation demapper 290610 may acquire a likelihood ratio (LLR) of a bit level for a power-adjusted symbol of a respective transmission path and may perform symbol demapping using the acquired LLR.

The multiplexer 290700 may multiplex the symbols, which have been obtained through symbol demapping according to the symbol demapping schemes of the first symbol demapper 290600 and the second symbol demapper 290610, into one bitstream.

The FEC decoder 290800 may perform error correction decoding on the bitstream output from the multiplexer 290700.

Accordingly, the same number of different symbol mapping/demapping schemes as the number of multiple antenna paths through which transmission and reception is performed according to a hybrid MIMO scheme can be used and the powers of symbols obtained through symbol mapping can be adjusted, thereby allowing symbols corresponding to the different symbol mapping schemes to be transmitted with appropriate accuracy.

In an embodiment, the broadcast signal transmission and reception devices of the present invention may use a polarity multiplexing MIMO scheme as described above. In addition, MIMO processing of the present invention may be applied to 6, 8, 10 bits/cell unit (bpcu) and also to intentional power imbalance of 0, 3, and 6 dB between two transmission antennas.

In the following, the present invention suggests that MIMO matrices including precoding matrices and phase hopping matrices be used in order to improve the performance of the SM scheme from among the MIMO encoding schemes described above.

The precoding process is carried out on pairs of normalized QAM symbols from the output of the constellation mapper. Also, the precoding process is repeated for each pair of QAM symbols in turn.

The precoding matrices may be defined and used as matrices including only the rotation matrix of the above Expression 3 and may also be defined and used as matrices including the power imbalance matrix and the rotation matrix of the above Expression 3. This may be changed according to designer intention. The rotation matrix of Expression 3 can express both input signals S1 and S2 provided through antenna 1 and antenna 2 even in a fully correlated channel, thereby increasing diversity. In addition, when the Euclidian distances of the input signals S1 and S2 are different, the power imbalance matrix may make the Euclidian distances equal. Accordingly, in the case in which the precoding matrix is applied, it is possible to reduce performance degradation when signals output from the transmission antennas have different powers and signals output through the transmission antennas have been modulated according to different modulation schemes. The available power imbalances are 0 dB, 3 dB and 6 dB. In the following description of the present invention, a parameter $\alpha$ of a power imbalance matrix for adjusting power imbalances of the input signals S1 and S2 may be referred to as an unequal power factor $\alpha$.

Moreover, phase hopping may be applied to the output of such precoding and may include applying an incremental phase change to cells transmitted through transmission antennas. When phase hopping is performed, it is possible to minimize the influence of channel changes according to characteristics of the transmitter such that the transmitter can acquire additional diversity. In the present invention, according to designer intention, a phase rotation can be applied to a path corresponding to only a specific one of the multiple antennas, which can be changed according to designer intention. Also, the phase-hopping matrix is independent of the modulation and power imbalance.

The following Expression 11 shows a MIMO matrix obtained by performing phase rotation on a precoding matrix.

[Expression 11]

$$\begin{bmatrix} 1 & 0 \\ 0 & e^{j\phi(k)} \end{bmatrix}\begin{bmatrix} \cos\theta & \sin\theta \\ \sin\theta & -\cos\theta \end{bmatrix}\begin{bmatrix} \sqrt{\alpha} & 0 \\ 0 & \sqrt{1-\alpha} \end{bmatrix}\begin{bmatrix} s_1 \\ s_2 \end{bmatrix}, \phi(k) = \frac{2\pi}{N}k, k = 0,..,N-1$$

The positive/negative (+/-) signs of the cosine and sine components of the rotation matrix included in the rotation matrix included in Expression 11 can be changed according to designer intention. The index "k" of phase hopping may correspond to the index of an OFDM carrier or an index of an LDPC block mapped to a QAM symbol.

When the MIMO matrix is used, a power ratio "r" of transmission antennas having different polarities may be determined as shown in Expression 12. In one embodiment of the present invention, the power ratio "r" is referred to as a power imbalance linear factor.

[Expression 12]

$$P_{tx1} = \alpha\cos^2\theta + (1-\alpha)\sin^2\theta$$

$$P_{tx2} = \alpha\sin^2\theta + (1-\alpha)\cos^2\theta$$

$$r = \frac{P_{tx2}}{P_{tx1}}$$

The power imbalance linear factor "r" may be used to determine the angle $\theta$ of the rotation matrix of Expression 11. The angle $\theta$ may be determined according to Expression 13.

[Expression 13]

$$\theta = \arctan\left(\frac{\sqrt{\alpha(r+1)-1}}{\sqrt{\alpha(r+1)-r}}\right)$$

Accordingly, the broadcast signal transmission system designer can design a MIMO broadcast transmission and reception system which can optimize the unequal power factor "$\alpha$" for the power imbalance linear factor "r" of transmission antennas using Expression 13. In addition, the receiver, which receives signals to which the above expressions have been applied, can separate signals S1 and S2 from the MIMO-encoded signals according to technology, such as ML and sphere decoding, using the optimized unequal power factor "$\alpha$", the power imbalance linear factor "r", and Expression 11.

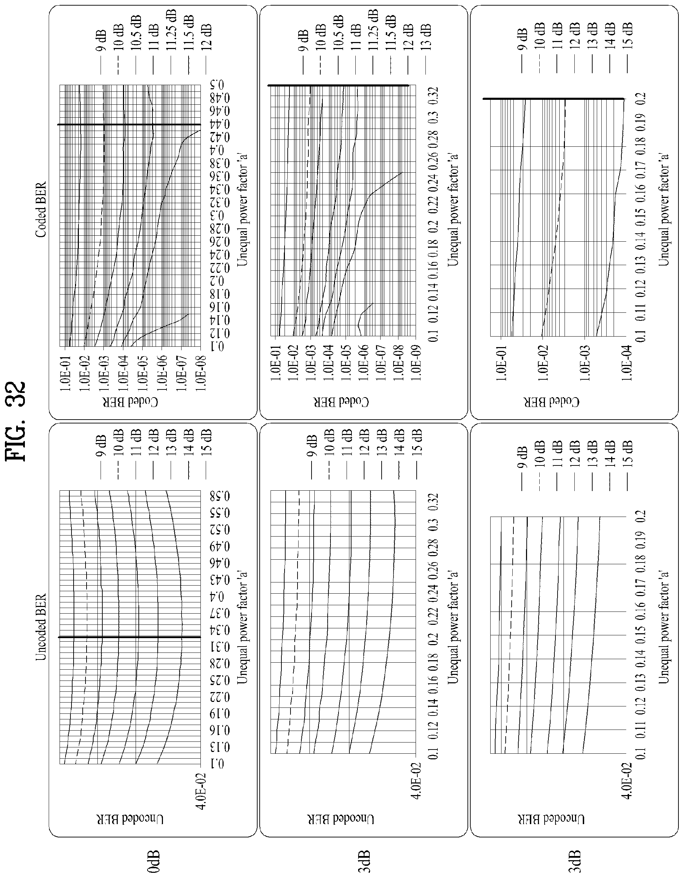

FIG. 32 illustrates graphs showing BER performance of a system that uses a MIMO matrix according to an embodiment of the present invention.

Specifically, FIG. 32 illustrates graphs showing uncoded BER and coded BER performance of various unequal power factors "α" for MIMO encoding that is performed on an input signal S1 using QPSK and is performed on an input signal S2 using 16-QAM (6 bits/cell) when the power imbalance is 0dB, 3dB, and 6dB.

The left graphs show uncoded BER performance and the right graphs show coded BER performance.

The graphs of FIG. 32 show BER performance in the case in which an average power of QAM symbols used for MIMO encoding is normalized to 1. That is, the normalization factor may be $\dfrac{1}{\sqrt{2}}$ in the case of QPSK and may be $\dfrac{1}{\sqrt{10}}$ in the case of 16-QAM. In the case of coded BER, LDPC used for DVB-S2/T2 may be used as an FEC code, which may be changed according to designer intention.

As shown in FIG. 32, an unequal power factor α which optimizes the uncoded BER when the power imbalance is 0dB is 0.33 and unequal power factors α which optimize the uncoded BER when the power imbalance is 3dB and 6dB have not been specified. It can also be seen from FIG. 32 that an unequal power factor α which optimizes the coded BER when the power imbalance is 0dB is 0.44 and unequal power factors α which optimizes the coded BER when the power imbalance is 3dB and 6dB are about 0.32 and 0.2.

The system designer can acquire an unequal power factor α optimized for the coded BER as final performance of the system and acquire an angle θ by substituting the acquired unequal power factor α into Expression 13. This broadcast signal transmission system may have characteristics robust to noise while satisfying power imbalances of 0dB, 3dB, and 6dB between transmission antennas.

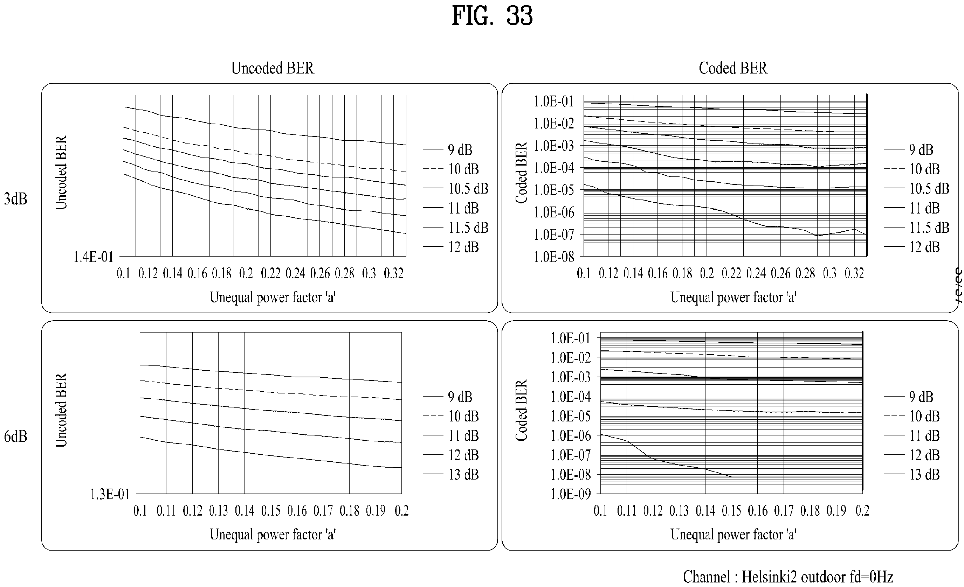

FIG. 33 illustrates graphs showing BER performance of a system that uses a MIMO matrix according to another embodiment of the present invention.

Specifically, FIG. 33 illustrates graphs showing uncoded BER and coded BER performance of various unequal power factors "α" for MIMO encoding that is performed on an input signal S1 using 16-QAM and is performed on an input signal S2 using 16-QAM (8 bits/cell) when the power imbalance is 0dB, 3dB, and 6dB. Similar to the graphs of FIG. 32, the graphs of FIG. 33 show BER performance in the case in which an average power of QAM symbols used for MIMO encoding is normalized to 1.

As shown in FIG. 33, unequal power factors α which optimize the uncoded BER when the power imbalance is 3dB and 6dB have not been specified. It can also be seen from FIG. 33 that unequal power factors α which optimize the coded BER when the power imbalance is 3dB and 6dB are about 0.32 and 0.2 although they are accurately specified.

As described above, if the power imbalance linear factor "r" and the unequal power factors "α" of the input signals S1 and S2 are specified, then the angle θ of the rotation matrix is determined through Expression 13. The following Table 1 summarizes values of the angle θ described through Expression 13.

[Table 1]

| | | 0dB | | 3dB | | 6dB | |
|---|---|---|---|---|---|---|---|
| | | α | θ | α | θ | α | θ |
| 6bits/cell | S1: QPSK S2:16QAM | 0.44 | 45° | 1/3 | 0 | 1/5 | 0 |
| 8bits/cell | S1:16QAM S2:16QAM | 0.50 | $\mathrm{atan}\left(\dfrac{\sqrt{2}+4}{\sqrt{2}+2}\right)$ | 1/3 | 0 | 1/5 | 0 |

Although the angle θ can be determined based on the power imbalance linear factor "r" and the unequal power factors "α" of the input signals S1 and S2 according to Expression 13, it may be possible that the angle θ cannot be optimized when the power imbalance is 3dB or 6dB as shown in Table 1.

Accordingly, in an embodiment of the present invention, a MIMO output power control matrix for controlling power of a MIMO-encoded signal output from each transmission antenna is used in order to optimize the angle θ when the power imbalance is 3dB or 6dB. The MIMO output power control matrix may be defined as being included in the precoding matrix (or matrices) described above. The MIMO output power control matrix includes an output symbol power control factor "β" and is used to optimize the angle θ. In this case, the unequal power factor "α" of the input signals S1 and S2 may correspond to the parameter "β" and thus may be referred to as an input symbol power control factor. In addition, MIMO output power control matrices including a power imbalance matrix including an input symbol power control factor "α" and a MIMO output power control matrix including an output symbol power control factor "β" may be referred to as power imbalance matrices and may also be referred to as a first power imbalance matrix and a second power imbalance matrix, respectively. This may be changed according to designer intention. The precoding matrix including the MIMO output power control matrix and the MIMO matrix including the phase hopping matrix are represented by Expression 14.

[Expression 14]

$$\sqrt{2}\begin{bmatrix}1 & 0 \\ 0 & e^{j\phi(k)}\end{bmatrix}\begin{bmatrix}\sqrt{\beta} & 0 \\ 0 & \sqrt{1-\beta}\end{bmatrix}\begin{bmatrix}\cos\theta & \sin\theta \\ \sin\theta & -\cos\theta\end{bmatrix}\begin{bmatrix}\sqrt{\alpha} & 0 \\ 0 & \sqrt{1-\alpha}\end{bmatrix}\begin{bmatrix}s_1 \\ s_2\end{bmatrix}, \phi(k)=\frac{2\pi}{N}k, k=0,..,N-1,(N=9)$$

In this case, the output symbol power control factor "β" for the angle θ, the input symbol power control factor "α", and the power imbalance linear factor "r" between given transmission antennas may be determined through Expression 15.

[Expression 15]

$$p_1 = \alpha\cos^2\theta + (1-\alpha)\sin^2\theta$$

$$p_2 = \alpha\sin^2\theta + (1-\alpha)\cos^2\theta$$

$$\beta = \frac{p_2}{(p_1 r + p_2)}$$

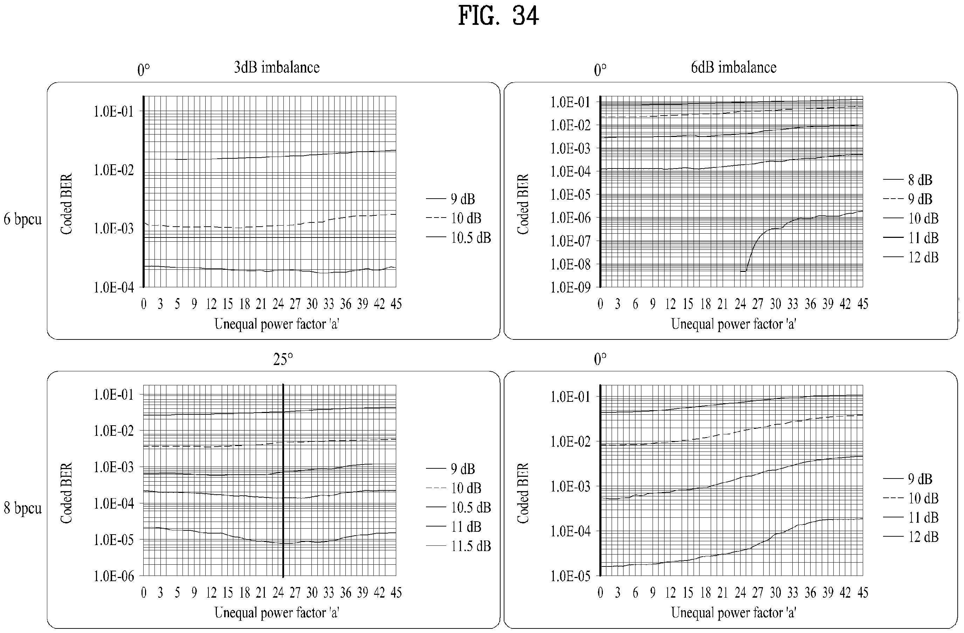

FIG. 34 illustrates graphs showing BER performance of a system that uses a MIMO matrix according to another embodiment of the present invention.

Specifically, FIG. 34 illustrates graphs showing an angle θ that optimizes coded BER performance of an unequal power factor "α" for MIMO encoding that is performed on an input signal S1 using QPSK and is performed on an input signal S2 using 16-QAM (6 bits/cell) and MIMO encoding that is performed on an input signal S1 using 16-QAM and is performed on an input signal S2 using 16-QAM (8 bits/cell), especially when the power imbalance is 3dB and 6dB at which the angle θ cannot be optimized as shown in Table 1.

The upper graphs show coded BER performance for MIMO encoding that is performed on an input signal S1 using QPSK and is performed on an input signal S2 using 16-QAM (6 bits/cell) and the lower graphs show coded BER performance for MIMO encoding that is performed on an input signal S1 using 16-QAM and is performed on an input signal S2 using 16-QAM (8 bits/cell).

The angle θ which optimizes the coded BER performance can be obtained by substituting 0.44, which is the optimal unequal power factor α of the power imbalance of 0dB in the case of 6 bits/cell as shown in Table 1, and 0.5, which is the optimal unequal power factor α of the power imbalance of 0dB in the case of 8 bits/cell, into Expressions 14 and 15.

It can be seen from FIG. 34 that, in the case of 6 bits/cell, the angle θ which optimizes the coded BER performance when the power imbalance is 3dB is about 0° and the angle θ which optimizes the coded BER performance when the power imbalance is 6dB is 0°. It can also be seen from FIG. 34 that, in the case of 8 bits/cell, the angle θ which optimizes the coded BER performance when the power imbalance is 3dB is about 25° and the angle θ which optimizes the coded BER performance when the power imbalance is 6dB is 0°.

The following Table 2 summarizes values of such parameters determined through Expression 13.

EP 3 002 903 B1

[Table 2]

| | | 0dB | | | 3dB | | | 6dB | | |
|---|---|---|---|---|---|---|---|---|---|---|
| | | β | θ | α | β | θ | α | β | θ | α |
| 6bits/cell | S1: QPSK S2:16QAM | 0.50 | 45° | 0.44 | 1/3 | 0 | 0.50 | 0.20 | 0 | 0.50 |
| 8bits/cell | S1:16QAM S2:16QAM | 0.50 | $\mathrm{atan}\left(\dfrac{\sqrt{2}+4}{\sqrt{2}+2}\right)$ | 0.50 | 1/3 | 25° | 0.50 | 0.20 | 0 | 0.50 |

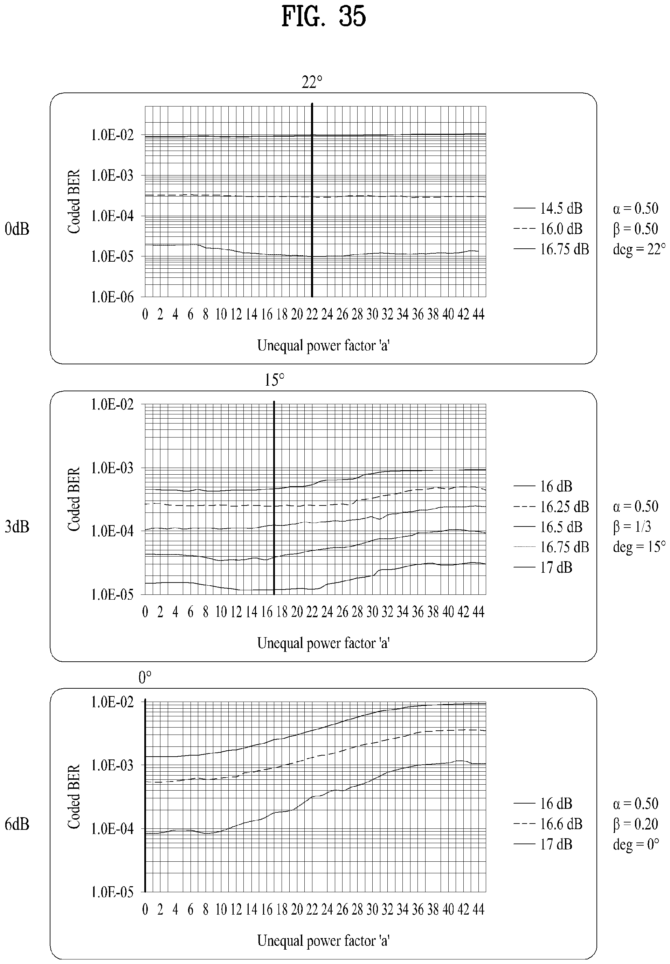

FIG. 35 illustrates graphs showing BER performance of a system that uses a MIMO matrix according to another embodiment of the present invention.

Specifically, FIG. 35 illustrates graphs showing an angle θ that optimizes coded BER performance of an unequal power factor "α" for MIMO encoding that is performed on an input signal S1 using 16-QAM and is performed on an input signal S2 using 64-QAM (10 bits/cell), especially when the power imbalance is 0dB, 3dB, and 6dB.

The coded BER performance may be measured for various values of α after fixing the output power control factor β to 0.5 using Expression 13 in order to optimize the input signal power control factor when the power imbalance between transmission antennas is 0dB. Although not shown in FIG. 35, when the power imbalance between transmission antennas is 0dB, 3dB, and 6dB in the case of 10 bits/cell, the optimal performance is obtained at α values of 0.5, 1/3, and 0.2, respectively.

Then, an angle θ which optimizes the coded BER performance can be determined by substituting the α value and the β value into Expression 14. As shown in FIG. 32, coded BER performance may be measured for the angle θ while varying the angle θ after the α value is fixed to 0.5 and the β value is fixed to each of the values 0.5, 1/3, and 0.2 which are the α values obtained above.

It can be seen from FIG. 35 that an angle θ which optimizes the coded BER performance when the power imbalance is 0dB is about 22°, an angle θ which optimizes the coded BER performance when the power imbalance is 3dB is about 15°, and an angle θ which optimizes the coded BER performance when the power imbalance is 0dB is 0°.

The following Table 3 summarizes values of such parameters determined through Expressions 14 and 15 when the power imbalance is 0dB, 3dB, and 6dB, incorporating the results of the graphs of FIG. 35.

[Table 3]

| | | 0dB | | | 3dB | | | 6dB | | |
|---|---|---|---|---|---|---|---|---|---|---|
| | | β | β | α | β | θ | α | β | θ | α |
| 6bits/cell | S1: QPSK S2:16QAM | 0.50 | 45° | 0.44 | 1/3 | 0 | 0.50 | 0.20 | 0° | 0.50 |
| 8bits/cell | S1:16QAM S2:16QAM | 0.50 | $\mathrm{atan}\left(\dfrac{\sqrt{2}+4}{\sqrt{2}+2}\right)$ | 0.50 | 1/3 | 25° | 0.50 | 0.20 | 0° | 0.50 |
| 10bits/cell | S1:16QAM S2:64QAM | 0.50 | 22° | 0.50 | 1/3 | 15° | 0.50 | 0.20 | 0° | 0.50 |

In one embodiment, each of the broadcast signal transmission and reception devices inserts a pilot into a frame as briefly described above with reference to FIG. 1 or FIG. 3. That is, Various cells within the frame are modulated with reference information whose transmitted value is known to the receiver. Cells containing reference information are transmitted at "boosted" power level. The information transmitted in these cells are scattered, continual, edge, P2 or frame-closing pilot cells (or pilots). The pilots can be used for frame synchronization, frequency synchronization, time synchronization, channel estimation, transmission mode identification and can also be used to follow the phase noise. The term "scattered pilot" refers to a pilot that is spread in an OFDM signal and "continual pilot" refers to a pilot that is continuously inserted in frames at the same positions. The term "edge pilots" refers to pilots that are located at OFDM symbols at both ends of a frame and "P2 pilot" refers to a pilot that is located at an OFDM symbol located immediately next to a P2 symbol or preamble. The term "frame-closing pilot" refers to a pilot that is inserted in one frame at the last of the OFDM symbols included in the frame. Pilot information such as the location and amplitude of each pilot may be determined according to the SISO or MIXO transmission mode. The value of the pilot information is derived from a

28

reference sequence, which is a series of values, one for each transmitted carrier on any given symbol.

The following is a description of the amplitude of each of the pilots described above.

In one embodiment of the present invention, the amplitude of the scattered pilot is defined as $A_{SP}$, the amplitude of the continual pilot is defined as $A_{CP}$, and the amplitude of the P2 pilot is defined as $A_{P2}$.

Reference information, taken from the reference sequence, is transmitted in scattered pilot cells in every symbol except P1, P2 and the frame-closing symbol (if applicable) of the frame. The amplitudes of the scattered pilots are defined as shown in the below table 4.

[table 4]

| Scattered pilot pattern | Amplitude ($A_{SP}$) | Equivalent Boost (dB) |
|---|---|---|
| PP1, PP2 | 4/3 | 2,5 |
| PP3, PP4 | 7/4 | 4,9 |
| PP5, PP6, PP7 | 7/3 | 7,4 |

As described in Table 4, the amplitude of scattered pilots may vary according to the pattern of the scattered pilots. Scattered pilot patterns may be divided into patterns PP1 to PP7 according to the number of symbols that constitute one scattered pilot and pilot separation.

In addition to the scattered pilots described above, a number of continual pilots are inserted in every symbol of the frame except for P1 and P2 and the frame closing symbol (if any). The number and location of continual pilots depends on both the FFT size and the scattered pilot pattern PP1-PP7 in use.

Also, the modulation value of the scattered pilots is defined as shown in the below expression 16.

[Expression 16]

$$\text{Re}\{c_{m,l,k}\} = 2 A_{SP} (1/2 - r_{l,k})$$
$$\text{Im}\{c_{m,l,k}\} = 0$$

In Expression 16, m denotes frame index, l denotes the time index of the symbols, k denotes the frequency index of the carriers, and $r_{l,k}$ denotes random bit 0 or 1 created from a corresponding frame and frequency indices l and k in the PRBS generator. This reference sequence is applied to all the pilots (i.e. Scattered, Continual Edge, P2 and Frame Closing pilots) of each symbol of a frame, including both P2 and Frame Closing symbols.

The continual pilots are transmitted at boosted power levels, where the boosting depends on the FFT size. Table 5 gives the modulation amplitude $A_{CP}$ for each FFT size.

[table 5]

| FFT size | 1K | 2K | 4K | 8K | 16K |
|---|---|---|---|---|---|
| $A_{CP}$ | 4/3 | 4/3 | $(4\sqrt{2})/3$ | 8/3 | 8/3 |

The modulation value for the continual pilots is defined as shown in the below expression 17.

[Expression 17]

$$\text{Re}\{c_{m,l,k}\} = 2 A_{CP} (1/2 - r_{l,k})$$
$$\text{Im}\{c_{m,l,k}\} = 0.$$

The edge carriers, carriers $k=K_{min}$ and $k=K_{max}$, are edge pilots in every symbol except for the P1 and P2 symbol(s). They are inserted in order to allow frequency interpolation up to the edge of the spectrum. The modulation of the edge pilots is exactly the same as for the scattered pilots.

The pilot cells in the P2 symbol(s) are transmitted at boosted power levels. According to an embodiment of the present invention, the amplitude of the P2 pilots may be defined as $A_{P2} = \dfrac{\sqrt{31}}{5}$.

Also, the corresponding modulation of the P2 pilots is defimened as shown in the below expression 18.

$$[\text{Expression 18}]$$
$$\text{Re}\{c_{m,l,k}\} = .2\,A_{P2}\,(1/2 - r_{l,k})$$
$$\text{Im}\{c_{m,l,k}\} = 0$$

The frame closing pilots are boosted by the same factor as the scattered pilots, $A_{SP}$. Also, the corresponding modulation of the frame closing pilots is exactly the same as for the scattered pilots.

In one embodiment of the present invention, when the broadcast signal transmission and reception devices of the present invention use MISO/MIMO (or MIXO), the broadcast signal transmission and reception devices employ a scheme in which the pilots described above are grouped on a Tx antenna basis and each group is inverted at a specific position. In this case, the amplitudes of pilots of the group are defined by $A_{SP}$, $A_{CP}$, or $A_{P2}$ and only the sign of each pilot is changed (or inverted).

As described above, the present invention suggests a MIMO matrix that can efficiently use MIMO without great loss even in an environment which is weak to MIMO such as a correlated channel environment in a broadcast network which has no feedback channel. Specifically, the power imbalance matrix according to an embodiment of the present invention allows two transmission antennas to have different powers and thus has advantages in that it is possible to reduce the influence of a transmit signal that may appear as interference in a SISO-based receiver and it is possible to efficiently use the MIMO scheme even when there is a limitation such as a regulator-related limitation.

However, since the MIMO matrix is used only for MIMO-processed data, the power imbalance matrix described above needs to be equally applied to another type of data in the system such as a MISO PLP or SISO-processed data in order to prevent power of the transmission antenna from being changed while maintaining power imbalance.

When the power imbalance matrix is applied to all data in the system in this manner, the power imbalance matrix also needs to be applied to the pilots described above since, if power imbalance is not applied to the pilots, the power imbalance between transmission antennas may change according to the pattern of pilots inserted in a frame. In addition, if power imbalance is not applied to the pilots, channel estimation efficiency of the receiver may be reduced since the ratio of the power of each pilot to the power of a corresponding data carrier is less than a certain ratio.

Accordingly, the present invention suggests a modified pilot amplitude which is obtained by applying the power imbalance matrix to the amplitude of the pilots. Specifically, the present invention suggests a method in which the amplitude of pilots is modified using a MIMO output power control matrix among the matrices included in the precoding matrices. In the following, the MIMO output power control matrix is referred to as a power matrix for ease of explanation.

The following Expression 19 shows a modified pilot amplitude that is obtained by applying a power imbalance matrix to the amplitude of the scattered pilot $A_{SP}$, the amplitude of the continual pilot $A_{CP}$, and the amplitude of the P2 pilot $A_{P2}$ for transmission antennas Tx1 and Tx2. Specifically, $A'_{SP}$ is a modified amplitude of the scattered pilot, $A'_{CP}$ is a modified amplitude of the continual pilot, and $A'_{P2}$ is a modified amplitude of the P2 pilot.

$$[\text{Expression 19}]$$

$$\begin{bmatrix} A'_{SP}(Tx1) \\ A'_{SP}(Tx2) \end{bmatrix} = \begin{bmatrix} \sqrt{\beta} & 0 \\ 0 & \sqrt{1-\beta} \end{bmatrix} \begin{bmatrix} A_{SP} \\ A_{SP} \end{bmatrix}$$

$$\begin{bmatrix} A'_{CP}(Tx1) \\ A'_{CP}(Tx2) \end{bmatrix} = \begin{bmatrix} \sqrt{\beta} & 0 \\ 0 & \sqrt{1-\beta} \end{bmatrix} \begin{bmatrix} A_{CP} \\ A_{CP} \end{bmatrix}$$

$$\begin{bmatrix} A'_{P2}(Tx1) \\ A'_{P2}(Tx2) \end{bmatrix} = \begin{bmatrix} \sqrt{\beta} & 0 \\ 0 & \sqrt{1-\beta} \end{bmatrix} \begin{bmatrix} A_{P2} \\ A_{P2} \end{bmatrix}$$

"$\beta$" in Expression 19 is identical to "$\beta$" described in the above Table 4.

Expression 19 may be applied not only to the amplitude of a pilot of SISO-processed data but also to the amplitude of a MISO/MIMO (or MIXO) pilot.

Accordingly, when the receiver uses pilots to estimate various frequency/time offsets or channels, the receiver may estimate the amplitude of the pilot according to Expression 19 and operate according to the estimated amplitude.

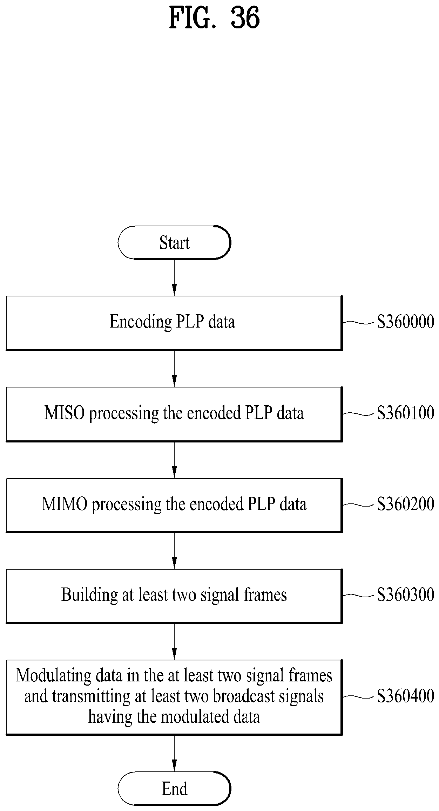

FIG. 36 is a flowchart of a broadcast signal transmission method according to an embodiment of the present invention.

As described above with reference to FIG. 1, the FEC encoder included in the BICM encoder 101300 according to an embodiment of the present invention may perform LDPC encoding and BCH encoding to add redundancy so as to allow the receiver to correct an error in a transmission channel for input-processed PLP data (S360000).

As described above with reference to FIGs. 1 and 2, the MISO encoder included in the BICM encoder 101300 according to an embodiment of the present invention may perform MISO processing on encoded PLP data (S360100). When a MISO PLP and a MIMO PLP are transmitted together though one frame, the MISO encoder may be located within the BICM block as described above. When only a MISO PLP or SISO-processed data is present in a frame, the MISO encoder may be located prior to the pilot insertion module of the OFDM generator 101500 described above. This may be changed according to designer intention.

The MISO encoder may be located next to the time interleaver and the location of the MISO encoder may be changed according to designer intention. The MISO encoder may perform MISO encoding on the time-interleaved PLP data using a MISO encoding matrix and output MISO-encoded PLP data through 2 paths. In this manner, it is possible to achieve diversity. Embodiments of the MISO encoding method according to the present invention include Orthogonal Space-Time Block Code (OSTBC)/Orthogonal Space Frequency Block Code (OSFBC)/Alamouti code methods.

As described above with reference to FIGs. 1 and 2, the MIMO encoder 604250 included in the BICM encoder 101300 according to an embodiment of the present invention may perform MIMO encoding on the input PLP data of the 2 paths using a MIMO encoding matrix and output the MIMO-encoded PLP data through the 2 paths (S360200)The MIMO encoding matrix of the present invention may include spatial multiplexing, Golden Code (GC), full-rate full diversity code, and linear dispersion code.

MIMO processing operation may be performed by the MIMO processor as described above. This MIMO processor is an embodiment of the MIMO encoder that is described above as being included in the BICM encoder 101300 in FIG. 1. The MIMO processor may use MIMO matrices corresponding to the embodiments described above. That is, the MIMO processor (or MIMO encoder) of the broadcast signal transmitter according to an embodiment of the present invention may perform MIMO processing using a MIMO matrix from among the MIMO matrices described above with reference to FIGs. 8 to 24 and the MIMO matrices described above with reference to Expressions 1 to 10 or FIGs. 32 to 35 and Expressions 11 to 15.

Specifically, the MIMO processor according to an embodiment of the present invention may perform MIMO processing using a MIMO matrix (or matrices) including a precoding matrix (or matrices) and a phase-hopping matrix (or matrices).

The precoding matrices may include a rotation matrix and a power imbalance matrix or may include a rotation matrix, a power imbalance matrix, and a MIMO output power control matrix. The power imbalance matrix may include a parameter for controlling power imbalances of a first input signal and a second input signal input for MIMO processing. The MIMO output power control matrix may include a parameter for controlling the power imbalance between broadcast signals transmitted through transmission antennas. The precoding process is carried out on pairs of normalized QAM symbols from the output of the constellation mapper. Also, the precoding process is repeated for each pair of QAM symbols in turn.

In an embodiment, values described in Tables 1 to 3 are used as the values of the parameters.

Phase hopping may be applied to the output of such precoding and may include applying an incremental phase change to cells transmitted through transmission antennas. Also, the phase-hopping matrix is independent of the modulation and power imbalance.

A frame builder according to an embodiment of the present invention may generate at least 2 signal frames(S360300). This frame builder is an embodiment of the frame builder 101400 described above with reference to FIG. 1 and may pair and map input signals to a frame.

Thereafter, a transmission unit according to an embodiment of the present invention may perform OFDM modulation on data included in the at least 2 signal frames and output the modulated data through at least 2 transmission antennas (S360400). In this case, as described above, when the channel correlation between channels transmitted through the first antenna and the second antenna is high, the first and second antennas may transmit a signal by applying polarity to the signal according to whether the correlation is negative or positive. In the present invention, a MIMO scheme using this method may be referred to as a polarity multiplexing MIMO scheme, the first antenna that adds polarity to a received signal to transmit the signal may be referred to as a vertical antenna, and the second antenna that adds polarity to a received signal to transmit the signal may be referred to as a horizontal antenna. Accordingly, the first OFDM generating block of the present invention may OFDM-modulate a broadcast signal input through the first path and transmit the modulated broadcast signal through the first antenna Tx1 and the second OFDM generating block of the present invention may OFDM-modulate a broadcast signal input through the second path and transmit the modulated broadcast signal through the second antenna Tx2. The transmission unit is an embodiment of the OFDM generator 101500 described above with reference to FIG. 1.

In addition, the pilot insertion module included in the OFDM generator 101500 inserts a pilot having a predetermined pilot pattern into a frame at a corresponding position and outputs the frame to the IFFT module. In this case, the pilot insertion module may determine modified pilot amplitudes obtained by applying the power imbalance matrix to the amplitude of the pilots and may then insert the resulting pilots. Here, in one embodiment, the pilot insertion module uses Expression 19 to determine the modified pilot amplitudes. In addition, the pilot insertion module may reserve a part of an OFDM subcarrier without using the part thereof in order to reduce the peak to average power ratio (PAPR) in the time domain.

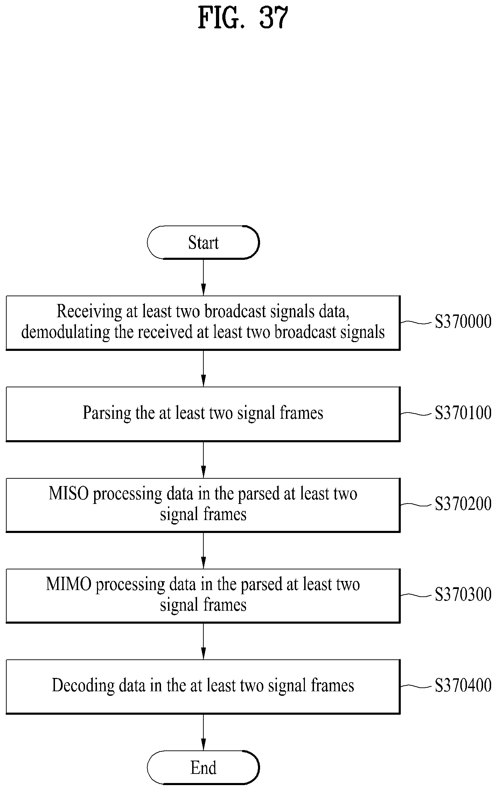

FIG. 37 is a flowchart of a broadcast signal reception method according to an embodiment of the present invention.

A receiving unit of a broadcast signal receiver according to an embodiment of the present invention receives data of at least two broadcast signals through at least two reception antennas and demodulates the at least two received broadcast signals through an Orthogonal Frequency Division Multiplexing (OFDM) method (S370000). The at least two reception antennas may have polarities as described above. The reception unit, which is an embodiment of the OFDM demodulator 101700 described above with reference to FIG. 3, may perform a reverse procedure to that of the transmission unit of the broadcast signal transmitter according to the embodiment of the present invention described above with reference to FIG. 36.

In addition, the channel estimator included in the receiving unit may estimate channels transmitted from the transmission antennas Tx1 and Tx2 to the reception antennas Rx1 and Rx2 using pilot signals inserted in the frequency domain. Here, even when power imbalance has been performed on the pilots at the transmitting side, the channel estimator may estimate channels without the need to take into consideration power imbalance of the pilots since the amplitudes of the pilots have already been compensated.

A frame parser of the broadcast signal receiver according to an embodiment of the present invention is configured to parse at least two signal frames from the demodulated broadcast signals (S370100). The frame parser, which is an embodiment of the frame parser 107200 described above with reference to FIG. 3, may perform a reverse procedure to that of the frame builder described above FIG. 36.

A MISO decoder(or processor) of the broadcast signal receiver according to an embodiment of the present invention is configured to perform MISO processing on data in the at least two parsed signal frames (S370200).

The MISO decoder may perform a reverse procedure to that of the MISO encoder described above with reference to FIG. 36. In addition, as described above, the BICM decoder 107200 may further include a BICM decoding block for MISO processing. As described above, in the case in which a MISO PLP and a MIMO PLP are received through one frame, the BICM decoding block for MISO processing may include a MISO decoder. In this case, the MISO decoder may be located prior to the time interleaver or prior to the constellation demapper. In the case in which only a MISO PLP and SISO-processed data are received through one frame, the MISO decoder may include the OFDM demodulator 107100 described above. This may be changed according to designer intention.

A MIMO decoder(or processor) of the broadcast signal receiver according to an embodiment of the present invention is configured to perform MIMO processing on data in the at least two parsed signal frames (S350300). The MIMO processor may perform a reverse procedure to that of the MIMO processor described above with reference to FIG. 36. This MIMO processor is an embodiment of the MIMO decoder that is described above as a block included in the BICM decoder 107300 described above with reference to FIG. 3. The MIMO processor may perform MIMO processing using a MIMO matrix from among the MIMO matrices described above with reference to FIGs. 8 to 24 and the MIMO matrices described above with reference to Expressions 1 to 10 or FIGs. 32 to 35 and Expressions 11 to 15.

The decoder according to an embodiment of the present invention decodes data in the at least two signal frames (S370400). Here, the decoder may perform a reverse procedure to that of the FEC encoder described above with reference to FIG. 36.

## Claims

1. A method for transmitting broadcast signals, the method comprising;
   encoding first Physical Layer Pipe, PLP, data for forward Error correction;
   bit interleaving the encoded first PLP data;
   encoding second PLP data for forward Error correction;
   bit interleaving the encoded second PLP data;
   Multi-input Single-Output, MISO, processing the bit-interleaved first PLP data;
   Multi-input Multi-Output, MIMO, processing the bit-interleaved second PLP data, wherein the MIMO processing includes a power imbalance processing by using a MIMO matrix to control a power imbalance, wherein the MIMO matrix includes a first parameter $\alpha$, a second parameter $\beta$, wherein the MIMO matrix is expressed as

$$\sqrt{2}\begin{bmatrix}1 & 0 \\ 0 & e^{j\phi(k)}\end{bmatrix}\begin{bmatrix}\sqrt{\beta} & 0 \\ 0 & \sqrt{1-\beta}\end{bmatrix}\begin{bmatrix}\cos\theta & \sin\theta \\ \sin\theta & -\cos\theta\end{bmatrix}\begin{bmatrix}\sqrt{\alpha} & 0 \\ 0 & \sqrt{1-\alpha}\end{bmatrix}\begin{bmatrix}s_1 \\ s_2\end{bmatrix}, \phi(k)=\frac{2\pi}{N}k, k=0,..,N-1,(N=9)$$
;

building at least two signal frames by mapping the MISO processed first PLP data and the MIMO processed second PLP data; and

modulating data in the at least two signal frames by an Orthogonal Frequency Division Multiplexing, OFDM, method and transmitting at least two broadcast signals having the modulated data by at least two transmission antennas, wherein the modulating includes inserting pilots in the at least two signal frames and wherein amplitudes of the pilots are power imbalance processed by using the second parameter $\beta$.

2.  The method of claim 1, further comprising:

    frequency interleaving the data in the at least two signal frames.

3.  The method of claim 1, wherein the MISO processing includes the power imbalance processing by using the second parameter $\beta$ to control a power imbalance.

4.  The method of claim 3, wherein the power imbalance processing is applied for at least one of power imbalance of 0, 3, 6 dB between the at least two transmission antennas.

5.  The method of claim 4, wherein when the power imbalance is 0 dB, a value of the second parameter $\beta$ is 0.5, when the power imbalance is 3 dB, a value of the second parameter $\beta$ is 1/3 and when the power imbalance is 6 dB, a value of the second parameter $\beta$ is 0.20.

6.  An apparatus for transmitting broadcast signals, the apparatus comprising;
    an encoder (101300) to encode first Physical Layer Pipe, PLP, data for forward Error correction, bit interleave the encoded first PLP data, encode second PLP data for forward Error correction, bit interleave the encoded second PLP data, perform Multi-input Single-Output, MISO, processing on the bit-interleaved first PLP data, and perform Multi-input Multi-Output, MIMO, processing on the bit-interleaved second PLP data, wherein the MIMO processing includes a power imbalance processing by using a MIMO matrix to control a power imbalance, wherein the MIMO matrix includes a first parameter $\alpha$, a second parameter $\beta$, wherein the MIMO matrix is expressed as

$$\sqrt{2}\begin{bmatrix}1 & 0 \\ 0 & e^{j\phi(k)}\end{bmatrix}\begin{bmatrix}\sqrt{\beta} & 0 \\ 0 & \sqrt{1-\beta}\end{bmatrix}\begin{bmatrix}\cos\theta & \sin\theta \\ \sin\theta & -\cos\theta\end{bmatrix}\begin{bmatrix}\sqrt{\alpha} & 0 \\ 0 & \sqrt{1-\alpha}\end{bmatrix}\begin{bmatrix}s_1 \\ s_2\end{bmatrix}, \phi(k)=\frac{2\pi}{N}k, k=0,..,N-1,(N=9)$$
;

a frame builder (101400) to build at least two signal frames by mapping the MISO processed first PLP data and the MIMO processed second PLP data; and
a transmission unit (101500) to modulate data in the at least two signal frames by an Orthogonal Frequency Division Multiplexing, OFDM, method and transmit at least two broadcast signals having the modulated data by at least two transmission antennas,
wherein the transmission unit (101500) comprises a pilot inserter to insert pilots in the at least two signal frames and wherein amplitudes of the pilots are power imbalance processed by using the second parameter $\beta$.

7.  The apparatus of claim 6, wherein the frame builder (101400) comprises a frequency interleaver to frequency interleave the data in the at least two signal frames.

8.  The apparatus of claim 6, wherein the MISO processing includes the power imbalance processing by using the second parameter $\beta$ to control a power imbalance.

9.  The apparatus of claim 8, wherein the power imbalance processing is applied for at least one of power imbalance of 0, 3, 6 dB between the at least two transmission antennas.

33

**10.** The apparatus of claim 9, wherein when the power imbalance is 0 dB, a value of the second parameter β is 0.5, when the power imbalance is 3 dB, a value of the second parameter β is 1/3 and when the power imbalance is 6 dB, a value of the second parameter β is 0.20.

**Patentansprüche**

**1.** Verfahren zum Senden von Rundfunksignalen, wobei das Verfahren umfasst:

Codieren von ersten PLP-Daten (PLP = Physical Layer Pipe) zur Vorwärtsfehlerkorrektur;
Bit-Interleaven der codierten ersten PLP-Daten;
Codieren von zweiten PLP-Daten zur Vorwärtsfehlerkorrektur;
Bit-Interleaven der codierten zweiten PLP-Daten;
MISO-Verarbeiten (MISO = Multi-Input Single-Output) der dem Bit-Interleaven unterzogenen ersten PLP-Daten;
MIMO-Verarbeiten (MIMO = Multi-Input Multi-Output) der dem Bit-Interleaven unterzogenen zweiten PLP-Daten, wobei das MIMO-Verarbeiten eine Leistungsungleichgewichtsverarbeitung unter Verwendung einer MIMO-Matrix zur Steuerung eines Leistungsungleichgewichts einschließt, wobei die MIMO-Matrix einen ersten Parameter α, einen zweiten Parameter β einschließt, wobei die MIMO-Matrix ausgedrückt wird als

$$\sqrt{2}\begin{bmatrix} 1 & 0 \\ 0 & e^{j\phi(k)} \end{bmatrix}\begin{bmatrix} \sqrt{\beta} & 0 \\ 0 & \sqrt{1-\beta} \end{bmatrix}\begin{bmatrix} \cos\theta & \sin\theta \\ \sin\theta & -\cos\theta \end{bmatrix}\begin{bmatrix} \sqrt{\alpha} & 0 \\ 0 & \sqrt{1-\alpha} \end{bmatrix}\begin{bmatrix} s_1 \\ s_2 \end{bmatrix}, \phi(k) = \frac{2\pi}{N}k, k = 0,..,N-1,(N=9)$$

Bilden von mindestens zwei Signal-Frames durch Mapping der der MISO-Verarbeitung unterzogenen ersten PLP-Daten und der der MIMO-Verarbeitung unterzogenen zweiten PLP-Daten; und
Modulieren von Daten in den mindestens zwei Signal-Frames mittels eines OFDM-Verfahrens (OFDM = Orthogonal Frequency Division Multiplexing) und Senden von mindestens zwei Rundfunksignalen, die die modulierten Daten aufweisen, durch mindestens zwei Sendeantennen, wobei das Modulieren das Einfügen von Piloten in die mindestens zwei Signal-Frames einschließt und wobei Amplituden der Piloten unter Verwendung des zweiten Parameters β einer Leistungsungleichgewichtsverarbeitung unterzogen werden.

**2.** Verfahren nach Anspruch 1, ferner umfassend:

Frequenz-Interleaven der Daten in den mindestens zwei Signal-Frames.

**3.** Verfahren nach Anspruch 1, wobei das MISO-Verarbeiten die Leistungsungleichgewichtsverarbeitung unter Verwendung des zweiten Parameters β zur Steuerung eines Leistungsungleichgewichts einschließt.

**4.** Verfahren nach Anspruch 3, wobei die Leistungsungleichgewichtsverarbeitung für ein Leistungsungleichgewicht von 0 dB oder/und 3 dB oder/und 6 dB zwischen den mindestens zwei Sendeantennen angewandt wird.

**5.** Verfahren nach Anspruch 4, wobei, wenn das Leistungsungleichgewicht 0 dB beträgt, ein Wert des zweiten Parameters β 0,5 beträgt, wenn das Leistungsungleichgewicht 3 dB beträgt, ein Wert des zweiten Parameters β 1/3 beträgt, und wenn das Leistungsungleichgewicht 6 dB beträgt, ein Wert des zweiten Parameters β 0,20 beträgt.

**6.** Vorrichtung zum Senden von Rundfunksignalen, wobei die Vorrichtung umfasst:

eine Codiereinrichtung (101300) zum Codieren von ersten PLP-Daten (PLP = Physical Layer Pipe) zur Vorwärtsfehlerkorrektur, Bit-Interleaven der codierten ersten PLP-Daten, Codieren von zweiten PLP-Daten zur Vorwärtsfehlerkorrektur, Bit-Interleaven der codierten zweiten PLP-Daten, MISO-Verarbeiten (MISO = Multi-Input Single-Output) der dem Bit-Interleaven unterzogenen ersten PLP-Daten und MIMO-Verarbeiten (MIMO = Multi-Input Multi-Output) der dem Bit-Interleaven unterzogenen zweiten PLP-Daten, wobei das MIMO-Verarbeiten eine Leistungsungleichgewichtsverarbeitung unter Verwendung einer MIMO-Matrix zur Steuerung eines Leistungsungleichgewichts einschließt, wobei die MIMO-Matrix einen ersten Parameter α, einen zweiten Parameter β einschließt, wobei die MIMO-Matrix ausgedrückt wird als

34

$$\sqrt{2}\begin{bmatrix}1 & 0 \\ 0 & e^{j\phi(k)}\end{bmatrix}\begin{bmatrix}\sqrt{\beta} & 0 \\ 0 & \sqrt{1-\beta}\end{bmatrix}\begin{bmatrix}\cos\theta & \sin\theta \\ \sin\theta & -\cos\theta\end{bmatrix}\begin{bmatrix}\sqrt{\alpha} & 0 \\ 0 & \sqrt{1-\alpha}\end{bmatrix}\begin{bmatrix}s_1 \\ s_2\end{bmatrix}, \phi(k) = \frac{2\pi}{N}k, k = 0,..,N-1,(N=9).$$

einen Frame-Builder (101400) zum Bilden von mindestens zwei Signal-Frames durch Mapping der der MISO-Verarbeitung unterzogenen ersten PLP-Daten und der der MIMO-Verarbeitung unterzogenen zweiten PLP-Daten; und

eine Sendeeinheit (101500) zum Modulieren von Daten in den mindestens zwei Signal-Frames mittels eines OFDM-Verfahrens (OFDM = Orthogonal Frequency Division Multiplexing) und Senden von mindestens zwei Rundfunksignalen, die die modulierten Daten aufweisen, durch mindestens zwei Sendeantennen, wobei die Sendeeinheit (101500) einen Piloteneinfüger zum Einfügen von Piloten in die mindestens zwei Signal-Frames umfasst und wobei Amplituden der Piloten unter Verwendung des zweiten Parameters β einer Leistungsungleichgewichtsverarbeitung unterzogen werden.

7. Vorrichtung nach Anspruch 6, wobei der Frame-Builder (101400) einen Frequenz-Interleaver zum Frequenz-Interleaven der Daten in den mindestens zwei Signal-Frames umfasst.

8. Vorrichtung nach Anspruch 6, wobei das MISO-Verarbeiten die Leistungsungleichgewichtsverarbeitung unter Verwendung des zweiten Parameters β zur Steuerung eines Leistungsungleichgewichts einschließt.

9. Vorrichtung nach Anspruch 8, wobei die Leistungsungleichgewichtsverarbeitung für ein Leistungsungleichgewicht von 0 dB oder/und 3 dB oder/und 6 dB zwischen den mindestens zwei Sendeantennen angewandt wird.

10. Vorrichtung nach Anspruch 9, wobei, wenn das Leistungsungleichgewicht 0 dB beträgt, ein Wert des zweiten Parameters β 0,5 beträgt, wenn das Leistungsungleichgewicht 3 dB beträgt, ein Wert des zweiten Parameters β 1/3 beträgt, und wenn das Leistungsungleichgewicht 6 dB beträgt, ein Wert des zweiten Parameters β 0,20 beträgt.

**Revendications**

1. Procédé d'émission de signaux de diffusion, le procédé comprenant les étapes suivantes :

le codage de premières données PLP (données de pipeline de couche physique) aux fins de correction d'erreur directe ;
l'entrelacement par bit des premières données PLP codées ;
le codage de secondes données PLP aux fins de correction d'erreur directe ;
l'entrelacement par bit des secondes données PLP codées ;
le traitement MISO (traitement à multiples entrées une seule sortie) des premières données PLP à bits entrelacés ;
le traitement MIMO (traitement à multiples entrées multiples sorties) des secondes données PLP à bits entrelacés, dans lequel le traitement MIMO comporte un traitement de déséquilibre de puissance à l'aide d'une matrice MIMO pour contrôler un déséquilibre de puissance,
dans lequel la matrice MIMO comporte un premier paramètre α, un second paramètre β, dans lequel la matrice MIMO est exprimée par :

$$\sqrt{2}\begin{bmatrix}1 & 0 \\ 0 & e^{j\phi(k)}\end{bmatrix}\begin{bmatrix}\sqrt{\beta} & 0 \\ 0 & \sqrt{1-\beta}\end{bmatrix}\begin{bmatrix}\cos\theta & \sin\theta \\ \sin\theta & -\cos\theta\end{bmatrix}\begin{bmatrix}\sqrt{\alpha} & 0 \\ 0 & \sqrt{1-\alpha}\end{bmatrix}\begin{bmatrix}s_1 \\ s_2\end{bmatrix}, \phi(k) = \frac{2\pi}{N}k, k = 0,..,N-1,(N=9);$$

la construction d'au moins deux trames de signaux par mappage des premières données PLP traitées MISO et des secondes données PLP traitées MIMO ; et
la modulation des données dans les au moins deux trames de signaux par un procédé OFDM (procédé de multiplexage à répartition en fréquence orthogonale) et l'émission d'au moins deux signaux de diffusion ayant les données modulées par au moins deux antennes d'émission, dans lequel la modulation comporte l'insertion de pilotes dans les au moins deux trames de signaux et dans lequel des amplitudes des pilots sont traitées contre un déséquilibre de puissance à l'aide du second paramètre β.

**2.** Procédé selon la revendication 1, comprenant en outre :

l'entrelacement par fréquence des données dans les au moins deux trames de signaux.

**3.** Procédé selon la revendication 1, dans lequel le traitement MISO comporte le traitement de déséquilibre de puissance à l'aide du second paramètre β pour contrôler un déséquilibre de puissance.

**4.** Procédé selon la revendication 3, dans lequel le traitement de déséquilibre de puissance est appliqué pour au moins un d'un déséquilibre de puissance de 0, 3, 6 dB entre les au moins deux antennes d'émission.

**5.** Procédé selon la revendication 4, dans lequel lorsque le déséquilibre de puissance est 0 dB, une valeur du second paramètre β est 0,5, lorsque le déséquilibre de puissance est 3 dB, une valeur du second paramètre β est 1/3 et lorsque le déséquilibre de puissance est 6 dB, une valeur du second paramètre β est 0,20.

**6.** Appareil d'émission de signaux de diffusion, l'appareil comprenant :

un élément de codage (101300) pour coder des premières données PLP (données de pipeline de couche physique) aux fins de correction d'erreur directe, pour entrelacer par bit des premières données PLP codées, coder des secondes données PLP aux fins de correction d'erreur directe, pour entrelacer par bit des secondes données PLP codées, pour réaliser un traitement MISO (traitement à multiples entrées une seule sortie) sur les premières données PLP à bits entrelacés, et pour réaliser un traitement MIMO (traitement à multiples entrées multiples sorties) sur les secondes données PLP à bits entrelacés, dans lequel le traitement MIMO comporte un traitement de déséquilibre de puissance à l'aide d'une matrice MIMO pour contrôler un déséquilibre de puissance, dans lequel la matrice MIMO comporte un premier paramètre α, un second paramètre β, dans lequel la matrice MIMO est exprimée par :

$$\sqrt{2}\begin{bmatrix} 1 & 0 \\ 0 & e^{j\phi(k)} \end{bmatrix}\begin{bmatrix} \sqrt{\beta} & 0 \\ 0 & \sqrt{1-\beta} \end{bmatrix}\begin{bmatrix} \cos\theta & \sin\theta \\ \sin\theta & -\cos\theta \end{bmatrix}\begin{bmatrix} \sqrt{\alpha} & 0 \\ 0 & \sqrt{1-\alpha} \end{bmatrix}\begin{bmatrix} s_1 \\ s_2 \end{bmatrix}, \phi(k) = \frac{2\pi}{N}k, k = 0,.., N-1, (N=9)$$

;

un élément de construction de trame (101400) pour construire au moins deux trames de signaux par mappage des premières données PLP traitées MISO et les secondes données PLP traitées MIMO ; et
une unité d'émission (101500) pour moduler des données dans les au moins deux trames de signaux par un procédé OFDM (procédé de multiplexage à répartition en fréquence orthogonale) et pour émettre au moins deux signaux de diffusion ayant les données modulées par les au moins deux antennes d'émission,
dans lequel l'unité d'émission (101500) comprend un élément d'insertion de pilote pour insérer des pilotes dans les au moins deux trames de signaux et dans lequel des amplitudes des pilotes sont traitées contre un déséquilibre de puissance à l'aide du second paramètre β.

**7.** Appareil selon la revendication 6, dans lequel le constructeur de trame (101400) comprend un élément d'entrelacement par fréquence pour entrelacer par fréquence des données dans les au moins deux trames de signaux.

**8.** Appareil selon la revendication 6, dans lequel le traitement MISO comporte le traitement de déséquilibre de puissance à l'aide du second paramètre β pour contrôler un déséquilibre de puissance.

**9.** Appareil selon la revendication 8, dans lequel le traitement de déséquilibre de puissance est appliqué pour au moins un d'un déséquilibre de puissance de 0, 3, 6 dB entre les au moins deux antennes d'émission.

**10.** Appareil selon la revendication 9, dans lequel lorsque le déséquilibre de puissance est 0 dB, une valeur du second paramètre β est 0,5, lorsque le déséquilibre de puissance est 3 dB, une valeur du second paramètre β est 1/3 et lorsque le déséquilibre de puissance est 6 dB, une valeur du second paramètre β est 0,20.

EP 3 002 903 B1

# FIG. 1

## FIG. 2

# FIG. 3

107100 107200 107300 107400

Antennas
(Rx)

OFDM
Demodulator

Frame
parser

BICM
decoder

Output
processor

TS/GS output

# FIG. 4

# FIG. 5

Type 1 or type 2 PLP

OFDM symbols

Time

P1   P2 0   ···   P2 $N_{py}$-1   D 0   D 1   D 2   ···

D $L_{data}$-1

Cell index

112100

112200

Complete signal frame

| | L1 pre signaling data | | | Type 1 PLP(1..M1) | | Common PLP | | Dummy cell |
| | L1 post signaling data | | | Type 2 PLP(M1+1....M1+M2) | | Auxiliary streams | | |

EP 3 002 903 B1

# FIG. 6

EP 3 002 903 B1

# FIG. 7

| BODY | P1 | P2 | BODY |
|------|-----|-----|------|

### 1K Symbol

| C | A | B |
|---|---|---|

$f_{SH}$     $f_{SH}$

$T_{P1C} = 59\mu s$    $T_{P1A} = 112\mu s$    $T_{P1B} = 53\mu s$

(A) P1 symbol structure

Both P1 Structure and P1 generator can be modified to create new-system-P1 symbol

114110

CDS table module

114130

DBPSK mapping

114120

S1 → S2 → MSS module → DBPSK mapping module → Scrambling module → Padding module → IFFT module → C-A-B structure module → P1

(B) P1 symbol generator

EP 3 002 903 B1

# FIG. 8

201010                    201020                              201030

Input signal
generating unit   — S1 →   MIMO
encoder   — St1 →   A first transmission antenna

                          — S2 →                  — St2 →   A second transmission antenna

                                                            201040

201080                    201070                              201050

Output signal
generating unit   ← S1 —   MIMO
decoder   ← St1 —   A first receiving antenna

                          ← S2 —                  ← St2 —   A second receiving antenna

                                                            201060

FIG. 9

BER vs. SNR with QPSK channel Rayleigh

EP 3 002 903 B1

# FIG. 10

203010

203020

203030

Conded BER, Matrix B and Matrix C, QPSK 1/2.

Conded BER, Matrix B and Matrix C, QPSK $^3/_4$

Conded BER, Matrix B and Matrix C, 64 QAM $^5/_6$

# FIG. 11

송신안테나 1     수신안테나 1

$h_{11}=1$

$h_{12}=1$

$h_{21}=1$

$h_{22}=1$

송신안테나 2     수신안테나 2

S1

S2

S1 + S2

S1 + S2

EP 3 002 903 B1

# FIG. 12

205010 — Signal of Stream 1

205020 — Signal of Stream 2

205030 — Signal of Tx 1

205040 — Signal of Tx 2

205050 — Combined Signal when spatial channel is fully correlated

EP 3 002 903 B1

FIG. 13

BER vs. SNR with 16 QAM channel AWGN

EP 3 002 903 B1

# FIG. 14

Capacity with channel Rayleigh

Legend:
- 2x2 Golden Code
- 2x2 SM
- 2x2 SM OPT1
- 1x2 SIMO
- 2x2 OSFBC
- 1x1 SISO

Y-axis: Capacity (Bit/sec/Hz)
X-axis: C/N(dB)

# FIG. 15

Capacity with channel AWGN

Legend:
- ○ 2x2 Golden Code
- ■ 2x2 SM
- ▼ 2x2 SM OPT1
- ▲ 1x2 SIMO
- ◄ 2x2 OSFBC
- ► 1x1 SISO

Capacity (Bit/sec/Hz) vs C/N(dB)

Capacity with channel AWGN

Capacity (Bit/sec/Hz) vs C/N(dB)

EP 3 002 903 B1

# FIG. 16

Combined Signal when spatial channels are fully correlated

$(\alpha+1)S1+(\alpha-1)S2$

Combined Signal when spatial channels are fully correlated

$(\alpha+i\overline{\alpha})S1+(\alpha\theta+i\overline{\alpha}\overline{\theta})S2$

# FIG. 17

Capacity with channel AWGN

FIG. 18

Hamming distance of combined signal usgin Sub-set of GC

Hamming distance of combined signal usgin OPT1

$D_H =1$      $D_H =2$      $D_H =3$      $D_H =4$

EP 3 002 903 B1

# FIG. 19

Signal of Stream 1

Signal of Stream 2

Combined Signal when spatial channels are fully correlated

Signal of Tx 1

Signal of Tx 2

$D_H = 1$    $D_H = 2$

# FIG. 20

Hamming distance of combined
signal usgin OPT1

$2(\alpha-1)$  $\alpha+1$

$D_{E_1}$  $D_{E_2}$

—— $D_H=1$  —— $D_H=2$  --- $D_H=3$  —— $D_H=4$

FIG. 21

Signal of Stream 1

Signal of Stream 2

Combined Signal when spatial channels are fully correlated

Signal of Tx 1

Signal of Tx 2

$D_H = 1$    $D_H = 2$
$D_H = 3$    $D_H = 4$

FIG. 22

Capacity with channel AWGN

Capacity with channel Rayleigh

EP 3 002 903 B1

# FIG. 23

Capacity with channel AWGN

Capacity with channel Ryaleigh

FIG. 24

Capacity with channel Ryaleigh

- ─○─ 2x2 Golden Code
- ─■─ 2x2 SM OPT3
- ─▼─ 1x2 SIMO
- ─▲─ 1x1 SISO

Capacity (Bit/sec/Hz)

C/N(dB)

Capacity with channel AWGN

- ─○─ 2x2 Golden Code
- ─■─ 2x2 SM OPT3
- ─▼─ 1x2 SIMO
- ─▲─ 1x1 SISO

Capacity (Bit/sec/Hz)

C/N(dB)

EP 3 002 903 B1

# FIG. 25

Capacity with channel Rayleigh

# FIG. 26

## FIG. 27

Capacity with channel Rayleigh

1x1 SISO
2x2 sm opt3 (cor 0.0)
2x2 sm (cor 0.0)
1x2 SIMO (cor 0.0)
2x2 Alamouti (cor 0.0)

Capacity with channel Rayleigh

1x1 SISO
2x2 sm opt3 (cor 0.3)
2x2 sm (cor 0.3)
1x2 SIMO (cor 0.3)
2x2 Alamouti (cor 0.3)

Capacity with channel Rayleigh

1x1 SISO
2x2 sm opt3 (cor 0.5)
2x2 sm (cor 0.5)
1x2 SIMO (cor 0.5)
2x2 Alamouti (cor 0.5)

Capacity with channel Rayleigh

1x1 SISO
2x2 sm opt3 (cor 0.7)
2x2 sm (cor 0.7)
1x2 SIMO (cor 0.7)
2x2 Alamouti (cor 0.7)

Capacity with channel Rayleigh

X: 13
Y: 4

1x1 SISO
2x2 sm opt3 (cor 0.9)
2x2 sm (cor 0.9)
1x2 SIMO (cor 0.9)
2x2 Alamouti (cor 0.9)

Capacity with channel Rayleigh

1x1 SISO
2x2 sm opt3 (cor 1.0)
2x2 sm (cor 1.0)
1x2 SIMO (cor 1.0)
2x2 Alamouti (cor 1.0)

EP 3 002 903 B1

# FIG. 28

# FIG. 29

# FIG. 30

FIG. 31

From Rx1 → A first sync (290100) → A first modulator (290200) → A first frame parser (290300) → MIMO Decoder (290400) → a first power calibration unit (290500) → A first symbol demapper (290600) → mux (290700)

From Rx2 → A second sync (290110) → A second modulator (290210) → A second frame parser (290310) → MIMO Decoder (290400) → a second power calibration unit (290510) → A second symbol demapper (290610) → mux (290700)

mux (290700) → FEC decoder (290800) → Data

# FIG. 32

# FIG. 33

Channel : Helsinki2 outdoor fd=0Hz

# FIG. 34

EP 3 002 903 B1

# FIG. 35

**22°**

0dB

Coded BER

| | |
|---|---|
| —— 14.5 dB | α = 0.50 |
| --- 16.0 dB | β = 0.50 |
| —— 16.75 dB | deg = 22° |

Unequal power factor 'a'

**15°**

3dB

Coded BER

| | |
|---|---|
| —— 16 dB | |
| --- 16.25 dB | α = 0.50 |
| —— 16.5 dB | β = 1/3 |
| —— 16.75 dB | deg = 15° |
| —— 17 dB | |

Unequal power factor 'a'

**0°**

6dB

Coded BER

| | |
|---|---|
| —— 16 dB | α = 0.50 |
| --- 16.6 dB | β = 0.20 |
| —— 17 dB | deg = 0° |

Unequal power factor 'a'

# FIG. 36

```
                    ( Start )
                        |
                        v
    +--------------------------------------+
    |        Encoding PLP data             |-----S360000
    +--------------------------------------+
                        |
                        v
    +--------------------------------------+
    |  MISO processing the encoded PLP data |-----S360100
    +--------------------------------------+
                        |
                        v
    +--------------------------------------+
    |  MIMO processing the encoded PLP data |-----S360200
    +--------------------------------------+
                        |
                        v
    +--------------------------------------+
    |     Building at least two signal frames |-----S360300
    +--------------------------------------+
                        |
                        v
    +--------------------------------------------+
    | Modulating data in the at least two signal frames |
    | and transmitting at least two broadcast signals    |-----S360400
    |           having the modulated data                |
    +--------------------------------------------+
                        |
                        v
                    ( End )
```

# FIG. 37

Start

Receiving at least two broadcast signals data, demodulating the received at least two broadcast signals ⎯ S370000

Parsing the at least two signal frames ⎯ S370100

MISO processing data in the parsed at least two signal frames ⎯ S370200

MIMO processing data in the parsed at least two signal frames ⎯ S370300

Decoding data in the at least two signal frames ⎯ S370400

End